# EUROPEAN PATENT APPLICATION

(11) **EP 4 497 800 A1**
(43) Date of publication of application: **29.01.2025**
(21) Application number: 24190150.3
(22) Date of filing: 22.07.2024
(51) Int. Cl.: C09K 5/04, F25B 9/00

(54) **LOW GWP REFRIGERANT COMPOSITIONS**

(30) Priority: 22.07.2023 US 202363515090 P
(71) Applicant: Trane International Inc., Davidson, NC 28036 (US)
(72) Inventor: PETERSEN, Michael, Apple Valley, Minnesota, 55124 (US); KUJAK, Stephen A, Brownsville, Minnesota, 55919 (US); SCHULTZ, Kenneth J, Onalaska, Wisconsin, 54650 (US); SCHMIG, Alexander, La Crosse, Wisconsin, 54601 (US)
(74) Representative: Haseltine Lake Kempner LLP

(57) **Abstract**

The refrigerant composition includes R1132(E) refrigerant, a second refrigerant, and a third refrigerant. The second refrigerant is one of R1234ze(E) refrigerant, R134a refrigerant, or R1234yf. The third refrigerant is one of R32 refrigerant, R1132a refrigerant, R1123 refrigerant, and CO₂. The refrigerant composition has a GWP of at or about or less than 750. A method of making a refrigerant composition for an HVACR system includes mixing an amount of R1132(E) refrigerant, an amount of a second refrigerant, and an amount of a third refrigerant. A method of retrofitting an HVACR system having an existing refrigerant composition includes adding at least one of R1132(E) refrigerant, a second refrigerant, and a third refrigerant to the existing refrigerant composition to obtain a retrofit refrigerant composition.

## Description

### FIELD

The disclosure herein relates to refrigerant compositions, which can be used, for example, in a working fluid for refrigeration, air conditioning, and/or heat pump systems, which, for example, can be incorporated into a heating, ventilation, air conditioning, and refrigeration (HVACR) system or unit.

### BACKGROUND

Concern about environmental impact (e.g., ozone depletion) and the approval of the Montreal Protocol have resulted in a movement to replace ozone depleting refrigerants such as chlorofluorocarbons (CFCs) and hydrochlorofluorocarbons (HCFCs). Refrigerants, such as hydrofluorocarbons (HFCs) and hydrofluoroolefins (HFOs) have been utilized as replacements for previous refrigerants containing CFCs and HFCs. However, there has been recent movement (e.g., the Kigali Amendment to the Montreal Protocol, the Paris Agreement, United States' Significant New Alternatives Policy (SNAP)) to phase out refrigerants, such as some HFCs, that have a high global warming potential (GWP).

### SUMMARY

Refrigerant compositions that have lower GWP, less toxicity, less flammability, lower burning velocity (BV) and similar efficiency and capacity as those of existing refrigerant compositions (e.g., R404A, R410A, and the like) are disclosed. Methods of making or retrofitting such refrigerant compositions are described. The refrigerant compositions can perform similar to R404A, R410A, R454A, R454B, R454C, and the like.

Retrofitting a working fluid having existing refrigerants can be used for servicing, controlling flammability, decreasing GWP, improving performance, and/or improving safety of HVACR system designed for a working fluid having an existing refrigerant compositions are described.

In an embodiment, a refrigerant composition for an HVACR system is disclosed. The refrigerant composition includes R1132(E) refrigerant, R1234yf refrigerant, and a third refrigerant being one of R32 refrigerant, R1132a refrigerant, R1123 refrigerant, and CO₂. The refrigerant composition has a GWP of about or less than 300.

In an embodiment, the refrigerant composition has a capacity that is at or about or greater than 85% of the capacity of R404A.

In an embodiment, the refrigerant composition has a capacity that is at or about or less than 110% of the capacity of R410A.

In an embodiment, the refrigerant composition has a BV of at or about or less than 10 cm/s.

In an embodiment, the refrigerant composition has an OEL of at or about or greater than 400 ppm.

In an embodiment, the refrigerant composition has a GWP of at or about or less than 300.

In an embodiment, the refrigerant composition has a GWP of at or about or less than 150.

In an embodiment, the refrigerant composition has a temperature glide of at or about or less than 10K.

In an embodiment, the refrigerant composition is an A2L refrigerant.

In an embodiment, the refrigerant composition includes R32 refrigerant.

In an embodiment, the refrigerant composition includes R32 refrigerant.

In an embodiment, the refrigerant composition includes R1132a refrigerant.

In an embodiment, the refrigerant composition includes R1132a refrigerant.

In an embodiment, the refrigerant composition includes R1123 refrigerant.

In an embodiment, the refrigerant composition includes CO₂.

In an embodiment, a method of making a refrigerant composition for an HVACR system is disclosed, the method including mixing an amount of R1132(E) refrigerant, an amount of R1234yf refrigerant, and an amount of a third refrigerant, the third refrigerant being one of R32 refrigerant, R1132a refrigerant, R1123 refrigerant, and CO₂. The refrigerant composition has a GWP of about or less than 300.

In an embodiment, a method of retrofitting an existing refrigerant composition for an HVACR system is disclosed. The method includes mixing an amount of R1132(E), an amount of R1234yf, and an amount of a third refrigerant being one of R32 refrigerant, R1132a refrigerant, R1123 refrigerant and CO₂. The refrigerant composition has a GWP of at or about or less than 300.

In an embodiment, a method of retrofitting an HVACR system having an existing refrigerant is disclosed. The method includes adding at least one of R1132(E) refrigerant, R1234yf refrigerant, and a third refrigerant to the existing refrigerant composition to obtain a retrofit refrigerant composition. The retrofit refrigerant composition comprises R1132(E) refrigerant, R1234yf refrigerant, and one of R32 refrigerant, R1132a refrigerant, R1123 refrigerant, and CO₂. The existing refrigerant composition comprises at least one of R1132(E), R1234yf, and one of R32, R1132a, R1123, and CO₂, and the refrigerant composition has a GWP of at or about or less than 300.

In an embodiment, a refrigerant composition for an HVACR system includes R1132(E) refrigerant, a second refrigerant, and a third refrigerant. The second refrigerant is one of R1234ze(E) refrigerant and R134a refrigerant. The third refrigerant is one of R32 refrigerant, R1132a refrigerant, R1123 refrigerant, and CO₂. The refrigerant composition has a GWP of at or about or less than 750.

In an embodiment, the GWP of the refrigerant composition is at or about or less than 500.

In an embodiment, the GWP of the refrigerant composition is at or about or less than 300.

In an embodiment, the GWP of the refrigerant composition is at or about or less than 150.

In an embodiment, the GWP of the refrigerant composition is at or about or less than 50.

In an embodiment, the second refrigerant is the R1234ze(E) refrigerant. The GWP of the refrigerant composition is at or about or less than 300, and the refrigerant composition has a burning velocity of at or less than 15 cm/s.

In an embodiment, the refrigerant composition has a burning velocity that is at or less than 10 cm/s.

In an embodiment, the refrigerant composition has a capacity that is at or about or greater than 50% of a capacity of R410A refrigerant.

In an embodiment, the refrigerant composition has a capacity that is at or about or greater than 75% of a capacity of R410A refrigerant.

In an embodiment, the refrigerant composition has a capacity that is at or about or greater than 70% of a capacity of R454A refrigerant, n an embodiment, the second refrigerant is the R134a refrigerant.

In an embodiment, the GWP of the refrigerant composition is at or about or less than 300.

In an embodiment, the refrigerant composition has a burning velocity of at or less than 15 cm/s.

In an embodiment, the refrigerant composition has a burning velocity of at or less than 10 cm/s.

In an embodiment, the refrigerant composition has a capacity that is at or about or greater than 95% of a capacity of R404A refrigerant.

In an embodiment, method is directed to making a refrigerant composition for an HVACR system. The method includes mixing an amount of R1132(E) refrigerant, an amount of a second refrigerant, and an amount of a third refrigerant. The second refrigerant is one of R1234ze(E) refrigerant and R134a refrigerant. The third refrigerant is one of R32 refrigerant, R1132a refrigerant, R1123 refrigerant, and CO₂. The refrigerant composition has a GWP of at or about or less than 750.

In an embodiment, the GWP of the refrigerant composition is at or about or less than 300.

In an embodiment, the refrigerant composition has a burning velocity of at or less than 15 cm/s.

In an embodiment, a method is directed to a method of retrofitting an HVACR system having an existing refrigerant composition. The method includes replacing at least a portion of the existing refrigerant composition to obtain a retrofit refrigerant composition. The replacing includes adding one or more refrigerants to the HVACR system. The retrofit refrigerant composition comprises R1132(E) refrigerant, one of R1234ze(E) refrigerant and R134a refrigerant, and one of R32 refrigerant, R1132a refrigerant, R1123 refrigerant, and CO₂. The refrigerant composition has a GWP of at or about or less than 750.

In an embodiment, the GWP of the refrigerant composition is at or about or less than 300.

In an embodiment, the refrigerant composition has a burning velocity of at or less than 15 cm/s.

### BRIEF DESCRIPTION OF THE DRAWINGS

Both described and other features, aspects, and advantages of refrigerant compositions, methods of making refrigerant compositions, and methods of retrofitting a refrigerant composition in an HVACR will be better understood with reference to the following drawings:
Figure 1 is a schematic diagram of a heat transfer circuit of an HVACR system, according to an embodiment.
Figure 2 is a matrix that illustrates refrigerant compositions that includes R1132(E), R32, and R1234yf, according to an embodiment.
Figure 3 is the matrix of Figure 2 illustrated to show selected refrigerant compositions, according to an embodiment.
Figure 4 is a matrix that illustrates refrigerant compositions that include R1132(E), R32, and R1234yf, according to an embodiment.
Figure 5 is the matrix of Figure 4 illustrated to show selected refrigerant compositions, according to an embodiment.
Figure 6 is a matrix that illustrates refrigerant compositions that includes R1132(E), R1132a, and R1234yf, according to an embodiment.
Figure 7 is the matrix of Figure 6 illustrated to show selected refrigerant compositions, according to an embodiment.
Figure 8 is a matrix that illustrates refrigerant compositions that include R1132(E), R1132a, and R1234yf, according to an embodiment.
Figure 9 is the matrix of Figure 8 illustrated to show selected refrigerant compositions, according to an embodiment.
Figure 10 is a matrix that illustrates refrigerant compositions that include R1132(E), R1123, and R1234yf, according to an embodiment.
Figure 11 is the matrix of Figure 10 illustrated to show selected refrigerant compositions according to an embodiment.
Figure 12 is a matrix that illustrates refrigerant compositions that include R1132(E), R1123, and R1234yf, according to an embodiment.
Figure 13 is the matrix of Figure 12 illustrated to show selected refrigerant compositions, according to an embodiment.
Figure 14 is a matrix that illustrates refrigerant compositions that include R1132(E), R1123, and CO₂, according to an embodiment.
Figure 15 is the matrix of Figure 14 illustrated to show selected refrigerant compositions, according to an embodiment.
Figure 16 is a matrix that illustrates refrigerant compositions that include R1132(E), CO₂, and R1234yf, according to an embodiment.
Figure 17 is the matrix of Figure 16 illustrated to show selected refrigerant compositions, according to an embodiment.
Figure 18 is a matrix that illustrates refrigerant compositions that include R1132(E), R1234ze(E), and R32, according to an embodiment.
Figure 19 is the matrix of Figure 18 illustrated to show selected refrigerant compositions, according to an embodiment.
Figure 20 is a matrix that illustrates refrigerant compositions that include R1132(E), R1234ze(E), and R32, according to an embodiment.
Figure 21 is the matrix of Figure 20 illustrated to show selected refrigerant compositions, according to an embodiment.
Figure 22 is a matrix that illustrates refrigerant compositions that include R1132(E), R1234ze(E), and R1132a, according to an embodiment.
Figure 23 is the matrix of Figure 22 illustrated to show selected refrigerant compositions, according to an embodiment.
Figure 24 is a matrix that illustrates refrigerant compositions that include R1132(E), R1234ze(E), and R1132a, according to an embodiment.
Figure 25 is the matrix of Figure 24 illustrated to show selected refrigerant compositions, according to an embodiment.
Figure 26 is a matrix that illustrates refrigerant compositions that include R1132(E), R1234ze(E), and R1123, according to an embodiment.
Figure 27 is the matrix of Figure 26 illustrated to show selected refrigerant compositions, according to an embodiment.
Figure 28 is a matrix that illustrates refrigerant compositions that include R1132(E), R1234ze(E), and R1123, according to an embodiment.
Figure 29 is the matrix of Figure 28 illustrated to show selected refrigerant compositions, according to an embodiment.
Figure 30 is a matrix that illustrates refrigerant compositions that include R1132(E), R1234ze(E), and CO₂, according to an embodiment.
Figure 31 is the matrix of Figure 30 illustrated to show selected refrigerant compositions, according to an embodiment.
Figure 32 is a matrix that illustrates refrigerant compositions that include R1132(E), R1234ze(E), and CO₂, according to an embodiment.
Figure 33 is the matrix of Figure 32 illustrated to show selected refrigerant compositions, according to an embodiment.
Figure 34 is a matrix that illustrates refrigerant compositions that include R1132(E), R134a, and R32, according to an embodiment.
Figure 35 is the matrix of Figure 34 illustrated to show selected refrigerant compositions, according to an embodiment.
Figure 36 is a matrix that illustrates refrigerant compositions that include R1132(E), R134a, and R32, according to an embodiment.
Figure 37 is the matrix of Figure 36 illustrated to show selected refrigerant compositions, according to an embodiment.
Figure 38 is a matrix that illustrates refrigerant compositions that include R1132(E), R134a, and R1132a, according to an embodiment.
Figure 39 is the matrix of Figure 38 illustrated to show selected refrigerant compositions, according to an embodiment.
Figure 40 is a matrix that illustrates refrigerant compositions that include R1132(E), R134a, and R1132a, according to an embodiment.
Figure 41 is the matrix of Figure 40 illustrated to show selected refrigerant compositions, according to an embodiment.
Figure 42 is a matrix that illustrates refrigerant compositions that include R1132(E), R134a, and R1123, according to an embodiment.
Figure 43 is the matrix of Figure 42 illustrated to show selected refrigerant compositions, according to an embodiment.
Figure 44 is a matrix that illustrates refrigerant compositions that include R1132(E), R134a, and R1123, according to an embodiment.
Figure 45 is the matrix of Figure 44 illustrated to show selected refrigerant compositions, according to an embodiment.
Figure 46 is a matrix that illustrates refrigerant compositions that include R1132(E), R134a, and CO₂, according to an embodiment.
Figure 47 is the matrix of Figure 46 illustrated to show selected refrigerant compositions, according to an embodiment.
Figure 48 is a matrix that illustrates refrigerant compositions that include R1132(E), R134a, and CO₂, according to an embodiment.
Figure 49 is the matrix of Figure 48 illustrated to show selected refrigerant compositions, according to an embodiment.
Figure 50 is a matrix that illustrates refrigerant compositions that includes R1132(E), R32, and R1234yf, according to an embodiment.
Figure 51 is the matrix of Figure 50 illustrated to show selected refrigerant compositions, according to an embodiment.

### DETAILED DESCRIPTION

Refrigerant compositions that have lower GWP, less toxicity, lower burning velocity (BV), and/or similar efficiency and capacity as those of existing refrigerant compositions (e.g., R404A, R410A, and the like), and methods of making such refrigerant compositions are described. In some embodiments, refrigerant compositions that perform similar to R404A, R410A, R454A, R454B, R454C, and the like are described. Retrofit refrigerant compositions, methods of making the retrofit refrigerant compositions, and methods of retrofitting an existing refrigerant composition are described. The retrofitting of the existing refrigerant composition may be used for servicing, controlling flammability, decreasing GWP, improving performance, and/or improving safety of an HVACR system designed for, or using, an existing refrigerant compositions are described.

For example, the HVACR system can be designed for R404A, R410A, R454A, R454B, R454C, and the like, or the HVACR system can be using R404A, R410A, R454A, R454B, R454C, the like using one or two of R1132(E), a second refrigerant, and a third refrigerant. The second refrigerant can be R1234yf, R1234ze(E), or R134a. The third refrigerant can be R32, R1132a, R1123, or CO₂.

Embodiments disclosed are directed to one or more refrigerant compositions, methods of making the refrigerant compositions having the disclosed compositions, and methods of retrofitting an existing refrigerant composition in an HVACR system.

The disclosed refrigerant compositions can have the same or similar capacity such that the HVACR need not be modified to accept the disclosed refrigerant composition. The disclosed refrigerant compositions can be a retrofit refrigerant or retrofit refrigerant compositions if the disclosed refrigerant compositions prepared to replace the existing refrigerant in an HVACR system using, or designed for, the existing refrigerant. The retrofit refrigerant compositions can have the same or similar capacity as the existing refrigerant compositions being replaced. The retrofit refrigerant compositions can have a lower GWP, better safety performance (e.g., lower BV, less flammable, higher occupational exposure limit (OEL), and/or the like), same or better coefficient of performance (COP), and/or the like, comparing to the existing refrigerant being replaced.

The refrigerant compositions can consist of, consist essentially of, or comprise R1132(E), the second refrigerant, and the third refrigerant. The refrigerant compositions consist essentially of the R1132(E), the second refrigerant, and the third refrigerant and may be mixed with, for example, impurities, contaminations, additives, or the like.

In an embodiment, the second refrigerant can be R1234yf, and the refrigerant compositions can consist of, consist essentially of, or comprise R1132(E), R1234yf, and the third refrigerant. The refrigerant compositions consist essentially of the R1132(E), R1234yf, and the third refrigerant and may be mixed with, for example, impurities, contaminations, additives, or the like.

In an embodiment, the second refrigerant can be R1234ze(E), and the refrigerant compositions can consist of, consist essentially of, or comprise R1132(E), R1234ze(E), and the third refrigerant. The refrigerant compositions consist essentially of the R1132(E), R1234ze(E), and the third refrigerant and may be mixed with, for example, impurities, contaminations, additives, or the like.

In an embodiment, the second refrigerant can be R134a, and the refrigerant compositions can consist of, consist essentially of, or comprise R1132(E), R134a, and the third refrigerant. The refrigerant compositions consist essentially of the R1132(E), R134a, and the third refrigerant and may be mixed with, for example, impurities, contaminations, additives, or the like.

In an embodiment, the compositions of the refrigerant disclosed can be retrofitted from an existing refrigerant composition. Retrofitting can include mixing a working fluid containing the existing refrigerant compositions with a refrigerant, refrigerant mixture, or chemical compounds to obtain a working fluid having the disclosed refrigerant composition, or refrigerant compositions equivalent to one or more disclosed embodiments of the refrigerant composition.

In an embodiment, the existing refrigerant compositions can include R410A, R404A or the like. In an embodiment, the existing refrigerant compositions can include R125, R143a, R134a, R32, or the like. In an embodiment, the disclosed compositions of refrigerants can replace refrigerant compositions, such as R454A, R454B, R454C, or the like.

R1132(E) refrigerant, which has the chemical formula (E)1,1-difluoroethylene, has a high flammability (BV > 25 centimeters per second (cm/s)) and a GWP less than 1. R1234yf refrigerant, which has the chemical 2,3,3,3-tetrafluoroprop-1-ene, has low flammability (BV < 2 cm/s) and a GWP less than 1.

R32, which has the chemical formula of difluoromethane, is mildly flammable (BV between 6 cm/s and 8 cm/s), and has a GWP of approximately 677. R1132a, which has a chemical formula of 1,1-difluoroethylene, is highly flammable (e.g., Class A2) and has a GWP of less than 1. CO₂ is non-flammable and has a GWP of 1. R1123, which has the chemical formula of trifluoroethylene, is mildly flammable (e.g., BV between 6 cm/s and 8 cm/s) and has a GWP of less than 1.

Existing refrigerant compositions can be legacy refrigerants having high GWP and/or high safety risk to be phase out due to environmental and/or safety concerns. For example, existing refrigerant compositions can include R404A, R410A, or the like. Existing refrigerant compositions can be previously proposed refrigerant compositions. For example, existing refrigerant compositions can include R454A, R454B, R454C, and the like. For example, R454A has a GWP of 239 and is classified under A2L; R454B has a GWP of 466; and R454C has a GWP of 146 and is classified under A2L.

R404A is a mixture of R125 (i.e., pentafluoroethane), R134a (i.e., tetrafluoroethane), and R143a (i.e., trifluoroethane). R404A has a GWP of around 4000. R410A is a mixture of at or about equal parts R32 and R125, has a high GWP of around 2000. However, R410A is nonflammable and is classified as A1 under ASHRAE Standard 34.

In some embodiments, the refrigerant compositions can be selected based on one or more refrigerant composition properties such as, but not limited to, GWP, capacity relative to an existing refrigerant composition, OEL, flammability, BV, temperature glide, COP, safety classification, or the like, or a combination thereof.

In some embodiments, the refrigerant compositions can have a capacity, for example, at or about or less than 50%, 25%, 15%, 10%, 5%, or 1% difference from the capacity of an existing refrigerant compositions. The existing refrigerant composition can be R404A.

In some embodiments, the refrigerant compositions can have a capacity, for example, at or about or less than 50%, 25%, 15%, 10%, 5%, or 1% difference from the capacity of an existing refrigerant compositions. The existing refrigerant composition can be R410A.

In some embodiments, the refrigerant compositions can have a capacity, for example, at or about or less than 30%, 20%, 10%, 5%, or 1% difference from the capacity of an existing refrigerant compositions. The existing refrigerant composition can be R454A.

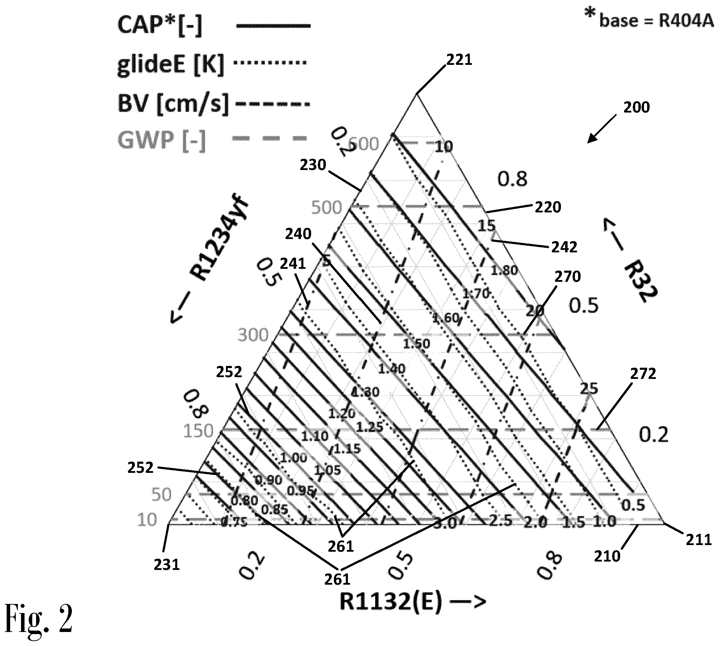

The refrigerant compositions can have a GWP of at or about or less than 750. The refrigerant compositions can have a GWP of at or about or less than 500. The refrigerant compositions can have a GWP of at or about or less than 400. The refrigerant compositions can have a GWP of at or about or less than 300. The refrigerant compositions can have a GWP of at or about or less than 150. The refrigerant compositions can have a GWP of at or about or less than 100. The refrigerant compositions can have a GWP of at or about or less than 50. The refrigerant compositions can have a GWP of at or about or less than 1. For example, a refrigerant composition having R1132(E) and R1234yf can have a GWP of at or about or less than 1. GWP is based on the GWP of individual components in Figures 2 - 51 and mass fraction of the individual components. The GWP can be, for example, in the Assessment Report version 5 (AR5) published by Intergovernmental Panel on Climate Change (IPCC).

In some embodiments, flammability of the refrigerant compositions can be characterized, for example, by Class 2, Class 2L, or the like. Class 2L can require a BV of less than 10 cm/s.

In some embodiments, the refrigerant compositions can have a BV of at or about or less than 20 cm/s. The refrigerant compositions can have a BV of at or less than 15 cm/s. The refrigerant compositions can have a BV of at or about or less than 13 cm/s. The refrigerant compositions can have a BV of at or about or less than 10 cm/s. The refrigerant compositions can have a BV of at or about or less than 8 cm/s. The refrigerant compositions can have a BV of at or about or less than 6 cm/s. The refrigerant compositions can have a BV of at or about or less than 5 cm/s. The refrigerant compositions can have a BV of at or about or less than 1 cm/s.

In some embodiments, the refrigerant compositions can satisfy safety group or classification of A1, according to ASHRAE standard 34. The refrigerant compositions can satisfy safety group or classification of A2. The refrigerant compositions can satisfy safety group or classification of A2L. The refrigerant compositions can satisfy safety group or classification of B1. The refrigerant compositions can satisfy safety group or classification of B2.

In some embodiments, the refrigerant compositions can have a temperature glide (e.g., at the condenser, at the evaporator, or the like) of at or about or less than 20 Kelvin (K). The refrigerant compositions can have a temperature glide of at or about or less than 15K. The refrigerant compositions can have a temperature glide of at or about or less than 10K. The refrigerant compositions can have a temperature glide of at or about or less than 7.5K. The refrigerant compositions can have a temperature glide of at or about or less than 5K. The refrigerant compositions can have a temperature glide of at or about or less than 3K. The refrigerant compositions can have a temperature glide of at or about or less than 2K. The refrigerant compositions can have a temperature glide of at or about or less than 2.5K. The refrigerant compositions can have a temperature glide of at or about or less than 1K.

In some embodiments, the refrigerant compositions can have a COP of at least 0.7 relative to an existing refrigerant composition (e.g., R404A, R410A, or R454A). The refrigerant compositions can have a COP of at least 0.8. The refrigerant compositions can have a COP of at least 0.9. The refrigerant compositions can have a COP of at least 0.95. The refrigerant compositions can have a COP of at least 0.96. The refrigerant compositions can have a COP of at least 0.98. The refrigerant compositions can have a COP of at least 1.0. The refrigerant compositions can have a COP of at least 1.1. The refrigerant compositions can have a COP of at least 1.2. The refrigerant compositions can have a COP of at least 1.5. The refrigerant compositions can have a COP of at least 2.0. The refrigerant compositions can have a COP of at least 3.0.

In some embodiments, the refrigerant compositions can have an OEL of at or about 50 ppm. The refrigerant compositions can have an OEL of at or about 100 ppm. The refrigerant compositions can have an OEL of at or about 150 ppm. The refrigerant compositions can have an OEL of at or about 200 ppm. The refrigerant compositions can have an OEL of at or about 300 ppm. The refrigerant compositions can have an OEL of at or about 400 ppm. The refrigerant compositions can have an OEL of at or about 500 ppm. The refrigerant compositions can have an OEL of at or about 600 ppm. It is appreciated that refrigerant compositions can be selected to have an OEL within a desired range. For example, refrigerant compositions can be selected to have an OEL of at or about or greater than 50 ppm, 200 ppm or above, 400ppm or above, 250 ppm to 500 ppm, or the like.

An HVACR system may be designed to utilize a specific existing refrigerant (e.g., R404A or R410A). If the HVACR system is modified to utilize a working fluid having a refrigerant composition that has a capacity less than 85% of the capacity of the specific exiting refrigerant, it may result in, for example, requiring the replacement or modification of the compressor to have a larger volumetric displacement, larger amounts of process fluid, and/or larger temperature differences that decrease the efficiency of the HVACR system. In some embodiments, a refrigerant composition with a capacity that is at or about or greater than 90% of the capacity of the specific existing refrigerant (e.g., R404A or R410A) may be desired. A working fluid with a capacity that has a capacity that is at or about or less than 10% from the specified existing refrigerant can result in, for example, a minimal impact on the efficiency of the HVACR system designed for the specific refrigerant. A working fluid with a capacity that is at or about or greater than 95% of the capacity of the specified existing refrigerant (e.g., R404A, R410A, or the like) can result in, for example, an even lesser impact on the efficiency of the HVACR system designed for the specific existing refrigerant (e.g., R404A, R410A, R454A, or the like). The performance properties may be relative to the performance properties of R404A, R410A, or R454A. In some embodiments, one or more properties of a refrigerant composition may be simulated and/or estimated by a vapor compression thermodynamic cycle tool utilizing Reference Fluid Thermodynamic and Transport Properties Database (REFPROP) of National Institute of Standards and Technology (NIST) to compute thermodynamic properties. It is appreciated that the refrigerant compositions are not limited to retrofit the specific existing refrigerant and can be selected, for example, for an HVACR system designed for the refrigerant compositions disclosed and/or other refrigerant compositions.

With respect to an amount of refrigerant, "about" generally allows for up to 2% variation from the recited value to account for rounding. In some embodiments, "about" may allow for up to 5% variation from the recited value for values that are along a flammability boundary (e.g., along a specific BV boundary), as further discussed below. It should be appreciated that at or about greater than zero to at or about an amount of refrigerant includes at or about the recited amount, and the range of greater than zero to at or about the recited amount. It should be appreciated that at or about an amount of refrigerant to less than 100% of refrigerant includes at or about the recited amount, and the range of less than 100% to at or about the recited amount.

An HVACR system can be used to cool or heat one or more conditioned spaces. For example, an HVACR system can cool an area by performing work on a refrigerant that is in a thermal communication with air, cooling the air. The cooled air may then be circulated to the conditioned spaces to cool the conditioned spaces. In some embodiments, the conditioned space can be a space in a residential, commercial, industrial, public, laboratory building, or the like. In some embodiments, the conditioned space can be a space in a transport unit, such as, a car, a truck, a bus, a train or light rail cart, a martin shipping container, a van, a boat, a ship, or the like.

An HVACR system may utilize a working fluid in a circuit to cool a process fluid (e.g., air, chiller liquid, water, or the like). In an embodiment, the refrigerant composition can be a blend of R1132(E), R1234yf, R1234ze(E), R134a, R32, R1123, R1132a, CO₂, or the like.

"Working fluid" can be two or more components or a mixture of chemical compounds, refrigerants, refrigerant blends, refrigerant compositions, and/or the like.

The burning velocity is estimated based on characteristics of the individual components and various binary mixtures of the components. Accordingly, the amount of each refrigerant in a composition along the burning velocity lines may, for example, vary by up to about 5 percent in an embodiment. It should be appreciated that the compositions and ranges shown and/or described may be updated based on further testing to confirm the location of the burning velocity.

In some embodiments, a refrigerant or refrigerant compositions can be a refrigerant portion of the working fluid that undergone phase chances, for example, between liquid and vapor, in one or more vapor-compression cycles in an HVACR system.

Flammability is determined according to ASHRAE Standard 34 (e.g., ASHRAE 34-2019) which includes flammability classifications of Class 1, Class 2L, Class 2, and Class 3. For example, Class 2L requires a refrigerant composition to have lower flammability and slower flame propagation (e.g., BV of less than 10 cm/s); and Class 2 allows a refrigerant composition to have lower flammability but can have faster flame propagation (e.g., BV of more than 10 cm/s). Refrigerant compositions described as non-flammable (i.e., no flame propagation) have a flammability that would result in their classification as a Class 1 refrigerant as determined under ASHRAE Standard 34.

Toxicity is determined based on ASHRAE Standard 34. Compositions described as low toxicity have a toxicity that would result in their classification as a Class A refrigerant as determined under ASHRAE Standard 34. Class A refrigerant can have an OEL greater or equal to 400 ppm by volume. Class B refrigerant can have an OEL less than to 400 ppm by volume.

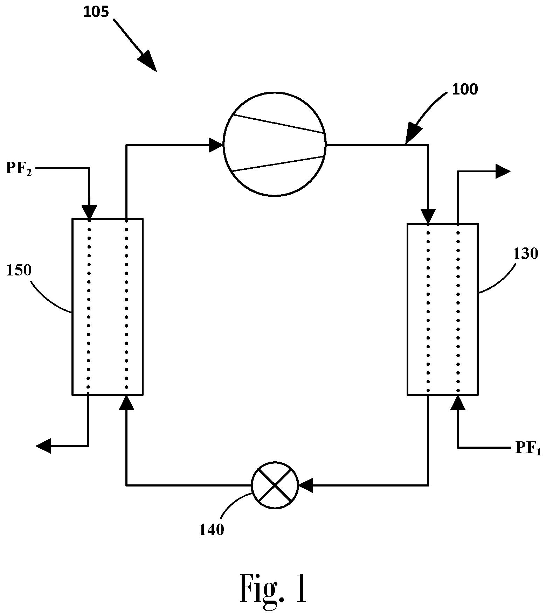

Figure 1 is a schematic diagram of a heat transfer circuit 100 of an HVACR system 105, according to an embodiment. The heat transfer circuit 100 includes a compressor 120, a condenser 130, an expansion device 140, and an evaporator 150. In an embodiment, the heat transfer circuit 100 can be modified to include additional components. For example, in an embodiment, the heat transfer circuit 100 can include one or more economizer heat exchangers, flow control devices, receiver tanks, dryers, suction-liquid heat exchangers, or the like.

The components of the heat transfer circuit 100 are fluidly connected. The heat transfer circuit 100 can be configured as a cooling system (e.g., a fluid chiller of an HVACR, an air conditioning system, and the like) that can be operated in a cooling mode. The heat transfer circuit 100 can be configured to operate as a heat pump system that can run in a cooling mode and/or a heating mode. The heat transfer circuit 100 can be configured to operate in a heating, cooling, dehumidification, refrigeration, and/or the like.

The heat transfer circuit 100 as described applies known principles of gas compression and heat transfer. The heat transfer circuit can be configured to heat or cool a process fluid (e.g., water, air). In an embodiment, the heat transfer circuit 100 may represent a chiller that cools a process fluid such as water or the like. In an embodiment, the heat transfer circuit 100 may represent an air conditioner and/or heat pump that includes a process fluid such as air or the like.

During an exemplary operation of the refrigerant circuit 100, a working fluid flows into the compressor 120 from the evaporator 150 at a relatively lower pressure in a gaseous state. The compressor 120 compresses the gas into a high pressure state, which also heats the gas. After being compressed, the relatively higher pressure and higher temperature gas flows from the compressor 120 to the condenser 130. In addition to the refrigerant flowing through the condenser 130, an external fluid (e.g., external air, external water, chiller water, and the like) also flows through the condenser 130. The external fluid absorbs the heat from the working fluid as it flows through the condenser 130. The working fluid condenses to liquid and then flows into the expansion device 140. The expansion device 140 reduces the pressure of the working fluid. The reduced pressure allows the working fluid to expand and be converted to a mixed vapor and liquid state. The relatively lower temperature, vapor/liquid working fluid then flows into the evaporator 150. A process fluid (e.g., air, water, chiller liquid, or the like) also flows through the evaporator 150. In accordance with known principles, the working fluid absorbs heat from the process fluid as it flows through the evaporator 150. As the working fluid absorbs heat, the working fluid evaporates to vapor. The working fluid then returns to the compressor 120. The above-described process continues while the heat transfer circuit 100 is operated, for example, in a cooling mode.

The refrigerant compositions and methods described herein may be used in the heat transfer circuit 100 of the HVACR system 105. For example, methods of retrofitting an existing refrigeration composition may be applied to the heat circuit 100 of Figure 1. Further, refrigeration compositions as described herein may be used in a working fluid of the heat transfer circuit 100 of Figure 1. Additionally, methods for retrofitting a refrigerant composition described here may be carried out on the working fluid in the heat transfer circuit 100 of Figure 1.

It is appreciated that the refrigerant compositions can consist of, consist essentially of, or comprise R1132(E), a second refrigerant, and a third refrigerant. The second refrigerant is one of R1234yf, R1234ze(E), and R134a. The third refrigerant is one of R32, R1132a, R1123, and CO₂. It is further appreciated that the working fluid can include a refrigerant composition, impurities, and/or additives, such as, but not limited to, lubricants, refrigeration system additives, tracers, ultraviolet (UV) dyes, solubilizing agents, and/or the like. It should be appreciated that each of the weight percentages provided herein can be used as endpoint for a given refrigerant and/or for the refrigerant it represents (e.g., the second refrigerant, the third refrigerant).

### Refrigerant Compositions including R1132(E), R1234yf, and a third refrigerant

In an embodiment, a refrigerant composition consists of, consists essentially of, or comprises R1132(E), R1234yf, and the third refrigerant. Each of Figures 2 - 50, and 51 shows a matrix 200, 400, 600, 800, 1000, 1200, 1400, or 1600 of compositions of R1132(E), R1234yf, and a third refrigerant. In each matrix, properties of the refrigerant compositions (e.g., GWP, toxicity, flammability, coefficient of performance, discharge temperature difference, temperature glide, capacity relative to another refrigerant composition, and/or the like) are plotted as a function of the weight percentage (wt%) of each R1132(E), R1234yf, and a third refrigerant. In an embodiment, a method of making a refrigerant composition utilizes one or more of the matrixes of Figures 2 - 17, 50, and 51 so that the refrigerant composition has a desired property or properties.

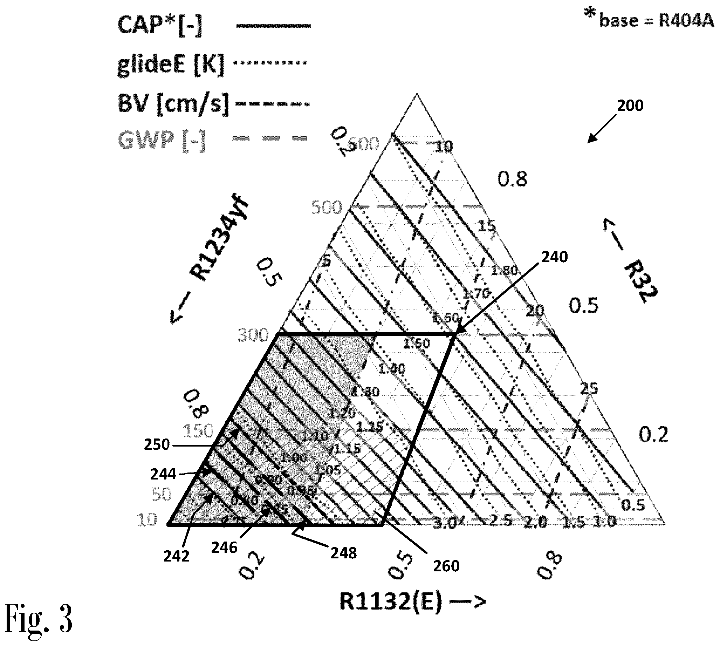

For example, as shown in Figure 2, each side 210, 220, 230 of the triangle can correspond to weight percentages (wt%) of R1132(E), R1234yf, and the third refrigerant, respectively. The third refrigerant is R32. Each vertex 211, 221, 231 corresponds to a composition of 100% R1132(E), R32, and R1234yf, respectively. For example, represented at 211, the refrigerant composition includes 100% of R1132(E); at 221, the refrigerant composition includes 100% of R32; and at 231, the refrigerant composition includes 100% of R1234yf. The properties (e.g., GWP, toxicity, flammability, coefficient of performance, discharge temperature difference, temperature glide, and capacity relative to R404A) of the refrigerant compositions and the weight percent of R1132(E), R32, and R1234yf can be estimated using the matrix 200. Properties of the compositions represented in the matrix 200 were determined using a thermodynamic model based on experimental results. Figure 3 shows embodiments of the refrigerant compositions having preferred ranges of weight percentages of R1132(E), R32, and R1234yf, respectively, and selected based on one or more properties of the refrigerant compositions.

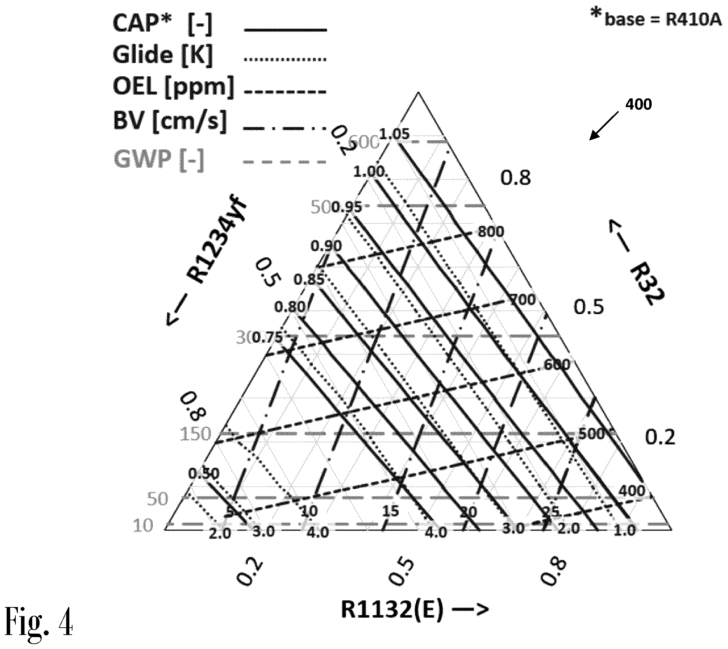

Figures 4-17 similarly illustrate refrigerant compositions of R1132(E), R1234yf, and a third refrigerant; the properties of the refrigerant compositions according to the weight percentages of R1132(E), R1234yf, and the third refrigerant; and/or the preferred ranges.

Referring to Figure 2, the matrix 200 illustrates refrigerant compositions that includes R1132(E), R32, and R1234yf, according to an embodiment. The matrix 200 is triangle having three sides 210, 220, 230, and three vertexes 211, 221, 231 that illustrate the compositions (e.g., weight percentages) of the R1132(E), R32, and R1234yf. The matrix 200 of Figure 2 includes one or more lines that represent properties of the refrigerant compositions (e.g., capacity based on R404A, temperature glide, OEL, BV, and GWP) with respect to the weight percentages of R1132(E), R32, and R1234yf, respectively.

It is appreciated that the boundary between satisfying the classification of Class 2L and Class 2 can be a linear BV of 100 mm per second determined, for example, based on ASHRAE Standard 34. As shown in Figure 2, a boundary line between flammable and non-flammable compositions is shown by a line 240 extending from side 210 to side 220. Class 2 refrigerant compositions are on the right side of the line 240 and class 2L refrigerant compositions are on the left side of the line 240. The line 240 is based on the flammability and/or the suppressant characteristics of R1132(E), R32, and R1234yf. The flammability boundary is estimated based on characteristics of the individual components and various binary mixtures of the components. Accordingly, the amount of each refrigerant in a composition along the flammability boundary may, for example, vary by about 5 percent in an embodiment. It should be appreciated that the compositions and ranges shown and/or described may be updated based on further testing to confirm the location of the flammability boundary.

The matrix 200 of Figure 2 illustrates the refrigerant compositions comprising R1132(E), R32, and R1234yf. As shown in the legend of the matrix 200, the refrigerant compositions' capacity, temperature glide, OEL, BV, and GWP are shown relative to weight percent of R1132(E), R32, and R1234yf in the refrigerant compositions. The capacity of Figure 2 is shown relative to the capacity of R404A.

In an embodiment, refrigerant compositions comprising R1132(E), R32, and R1234yf can be selected based on the capacity, temperature glide, OEL, BV, and/or GWP based as illustrated, for example in Figure 2.

In an embodiment, the refrigerant compositions represented in Figure 2 can be selected based on the capacity relative to the capacity of R404A. Line 250 represents the refrigerant compositions having the same capacity as R404A. Having a capacity that is the same or similar to the capacity of R404A, the refrigerant compositions can be used in a working fluid for an HVACR system designed for R404A with little to no modification to the HVACR system equipment. In an embodiment, the capacity of the refrigerant compositions can be within at or about 20% as illustrated in Figure 2 and bounded by lines 251 and 252. Line 251 represents the refrigerant compositions of Figure 2 having a capacity at or about 1.2 times (i.e., 20% above) of the capacity of R404A. Line 252 represents the refrigerant compositions of Figure 2 having a capacity at or about 0.8 time (i.e., 20% below) of the capacity of R404A.

In an embodiment, the refrigerant compositions represented in Figure 2 can be selected based on the temperature glide of the refrigerant composition. Temperature glide is a temperature difference in saturation temperature of R1132(E), R32, and R1234yf in the refrigerant compositions the at the same pressure level. It is appreciated that lower temperature glide is generally preferable for a refrigerant composition in a working fluid of an HVACR system. For example, a temperature glide of at or about or less than 3K (i.e., 2 degrees Kelvin) may be preferable. As shown in Figure 2, for example, line 260 (or line segments 260) represents the weight percentages of R1132(E), R32, and R1234yf, respectively, in the refrigerant compositions in Figure 2 of which the temperature glide is at or about 3K. Line 261 (or line segments 261) represents the weight percentages of R1132(E), R32, and R1234yf, respectively, in the refrigerant compositions of Figure 2 of which the temperature glide is at or about 2K. The area between lines 260 and 261 represent the range of weight percentages of R1 132(E), R32, and R1234yf, respectively, in the refrigerant compositions of Figure 2 of which the temperature glide is between at or about 2K and at or about 3K.

In an embodiment, the refrigerant compositions represented in Figure 2 can be selected based on OEL of the refrigerant composition. OEL can be upper limit of a time weighted average concentration of the refrigerant compositions a user may be exposed to, as described, for example, according to ASHRAE Standard 34, Occupational Safety and Health Administration, or the like. In an embodiment, OEL of the refrigerant compositions can be at or about 400 ppm. In an embodiment, refrigerant compositions having OEL at or about or above 400 ppm can be classified as Class A (e.g., low toxicity) and at or about below 400 ppm can be classified as Class B (e.g., high toxicity) according to ASHRAE classification standard. In an embodiment, the refrigerant compositions can be selected based on OEL of at or about 50 ppm, 100 ppm, 200 ppm, 400 ppm, 500 ppm, 600 ppm, 700 ppm, or 800 ppm, and/or any values therebetween. For example, the refrigerant compositions may be selected to have OEL of between any of the described values (e.g., 400 ppm to 500 ppm, 450 ppm to 500 ppm, 400 ppm to 600 ppm, or the like).

In an embodiment, the refrigerant compositions can be selected for their safety classification (e.g., A1, A2, A2L, B2, B2L, etc.). For example, A2L classification requires slower than 10 cm/s BV and above 400 ppm OEL, among other requirements.

In an embodiment, the refrigerant compositions represented in Figure 2 can be selected based on BV of the refrigerant compositions. BV can be determined to evaluate flammability of the refrigerant compositions. BV above 100 mm/s can be classified as class 2 and below 100 mm/s can be classified as class 2L according to ASHRAE Standard 34. For example, as shown in Figure 2, line 240 represents the refrigerant compositions having BV of 100 mm/s (or 10 cm/s as labeled in Figure 2), line 241 represents the refrigerant compositions having BV of 5 cm/s, and line 242 represents the refrigerant compositions having BV of 15 cm/s. The area between lines 241 and 242 can represent the refrigerant compositions having BV of between 5 cm/s to 10 cm/s.

In an embodiment, the refrigerant compositions represented in Figure 2 can be selected based on GWP of the refrigerant composition. For example, as shown in Figure 2, line 270 represents the refrigerant compositions having a GWP of 300, line 271 represents the refrigerant compositions having a GWP of 10, and line 272 represents the refrigerant compositions having a GWP of 150. The area between lines 271 and 272 can represent the refrigerant compositions having a GWP of between 10 to 150.

Figure 3 is the matrix 200 of Figure 2 illustrated to show selected refrigerant compositions, according to an embodiment. As shown in Figure 3, the refrigerant compositions can include (i.e., consist of, consist essentially of, or comprise) R1132(E), R32, and R1234yf. The refrigerant compositions can be selected based on one or more of the refrigerant composition properties such as the capacity relative to R404A, temperature glide, OEL, BV, and GWP.

In an embodiment, a desired set of properties of a useful refrigerant composition includes having a GWP of at or about or less than 300 and a burning velocity of at or less than 15 cm/s. Based on these desired properties, a range of useful refrigerant compositions 240 is shown in the matrix 200 of Figure 3. The useful refrigerant compositions 240 include at or about 43 wt%, or less than 43 wt% and greater than 0 wt% of R1132(E); at or about 20 wt%, or greater than 20 wt% and less than 100 wt% of R1234yf; and at or about 44 wt%, or less than 44 wt% and greater than 0 wt% of R32.

In an embodiment, the useful compositions 240 may include preferred compositions 242 as shown in Figure 3. The properties of the preferred compositions 242 include having a GWP of at or about or less than 300, a burning velocity of at or less than 15 cm/s, and a capacity at or about or greater than 75% of the capacity of R404A. The preferred compositions 242 include at or about 43 wt%, or less than 43 wt% and greater than 0 wt% of R1132(E); at or about 20 - 89 wt% of R1234yf; and at or about 44 wt%, or less than 44 wt% and greater than 0 wt% of R32.

In an embodiment, the preferred compositions 242 may include further preferred compositions 244 as shown in Figure 3. The properties of the further preferred compositions 244 include having a GWP of at or about or less than 300, a burning velocity of at or less than 15 cm/s, and at or about or greater than 80% of the capacity of R404A. The further preferred compositions 244 include at or about 43 wt%, or less than 43 wt% and greater than 0 wt% of R1132(E); at or about 20 - 86 wt% of R1234yf; and at or about 44 wt%, or less than 44 wt% and greater than 0 wt% of R32.

In an embodiment, the further preferred compositions 244 may include greater preferred compositions 246 as shown in Figure 3. The properties of the greater preferred compositions 246 include having a GWP of at or about or less than 300, a burning velocity of at or less than 15 cm/s, and at or about or greater than 85% of the capacity of R404A. The greater preferred compositions 246 include at or about 43 wt%, or less than 43 wt% and greater than 0 wt% of R1132(E); at or about 20 - 82 wt% of R1234yf; and at or about 44 wt%, or less than 44 wt% and greater than 0 wt% of R32.

In an embodiment, the greater preferred compositions 246 may include further greater preferred compositions 248 as shown in Figure 3. The properties of the further greater preferred compositions 248 include having a GWP of at or about or less than 300, a burning velocity of at or less than 15 cm/s, and at or about or greater than 90% of the capacity of R404A. The further greater preferred compositions 248 include at or about 43 wt%, or less than 43 wt% and greater than 0 wt% of R1132(E); at or about 20 - 79 wt% of R1234yf; and at or about 44 wt%, or less than 44 wt% and greater than 0 wt% of R32.

In an embodiment, the further greater preferred compositions 248 may include even further greater preferred compositions 250 as shown in Figure 3. The properties of the even further greater preferred compositions 250 include having a GWP of at or about or less than 300, a burning velocity of at or less than 15 cm/s, and at or about or greater than 95% of the capacity of R404A. The even further greater preferred compositions 250 include at or about 43 wt%, or less than 43 wt% and greater than 0 wt% of R1132(E); at or about 20 - 75 wt% of R1234yf; and at or about 44 wt%, or less than 44 wt% and greater than 0 wt% of R32.

Figure 3 also includes hatched area 260. The compositions in the hatched area 260 have a GWP of at or about or less than 150. In some embodiments, a set of desired properties may include the lower GWP provided by the compositions within the hatched area 260, 262 (e.g., a GWP that is at or about or less than 150). In such embodiments, desired compositions may be selected from the compositions illustrated in Figure 3 (e.g., useful compositions 240, preferred compositions 242, further preferred compositions 244, greater preferred compositions 246, further greater preferred compositions 248, even further greater preferred compositions 250) and described with respect to Figure 3 that are within the hatched area 260.

For example, such desired compositions of the useful compositions 240 include at or about 43 wt%, or less than 43 wt% and greater than 0 wt% of R1132(E); at or about 38 wt%, or greater than 38 wt% and less than 100 wt% of R1234yf; and at or about 22 wt%, or less than 22 wt% and greater than 0 wt% of R32. For example, such desired compositions of the preferred compositions 242 include at or about 43 wt%, or less than 43 wt% and greater than 0 wt% of R1132(E); at or about 38 - 89 wt% of R1234yf; and at or about 22 wt%, or less than 22 wt% and greater than 0 wt% of R32. For example, such desired compositions of the further preferred compositions 244 include at or about 43 wt%, or less than 43 wt% and greater than 0 wt% of R1132(E); at or about 38 - 86 wt% of R1234yf; and at or about 22 wt%, or less than 22 wt% and greater than 0 wt% of R32. For example, such desired compositions of the greater preferred compositions 246 include at or about 43 wt%, or less than 43 wt% and greater than 0 wt% of R1132(E); at or about 38 - 82 wt% of R1234yf; and at or about 22 wt%, or less than 22 wt% and greater than 0 wt% of R32.For example, such desired compositions of the further greater preferred compositions 248 include at or about 43 wt%, or less than 43 wt% and greater than 0 wt% of R1132(E); at or about 38 - 79 wt% of R1234yf; and at or about 22 wt%, or less than 22 wt% and greater than 0 wt% of R32. For example, such desired compositions of the even further greater preferred compositions 250 include at or about 4 - 43 wt% of R1132(E); at or about 38 - 74 wt% of R1234yf; and at or about 22 wt%, or less than 22 wt% and greater than 0 wt% of R32.

Figure 3 also includes shaded area 270. In some embodiments, a set of desired properties may include the lower BV provided by the compositions within the shaded area 270 (e.g., a BV that is at or less than 10 cm/s). In such embodiments, desired compositions may be selected from the compositions illustrated in Figure 3 (e.g., useful compositions 240, preferred compositions 242, further preferred compositions 244, greater preferred compositions 246, further greater preferred compositions 248, even further greater preferred compositions 250) and described with respect to Figure 3 that are within the shaded area 270.

For example, such desired compositions of the useful refrigerant compositions 240 include at or about 27 wt%, or less than 27 wt% and greater than 0 wt% of R1132(E); at or about 36 wt%, or greater than 36 wt% and less than 100 wt% of R1234yf; and at or about 44 wt%, or less than 44 wt% and greater than 0 wt% of R32. For example, such desired compositions of the preferred compositions 242 include at or about 27 wt%, or less than 27 wt% and greater than 0 wt% of R1132(E); at or about 36 - 89 wt% of R1234yf; and at or about 44 wt%, or less than 44 wt% and greater than 0 wt% of R32. For example, such desired compositions of the further preferred compositions 244 include at or about 27 wt%, or less than 27 wt% and greater than 0 wt% of R1132(E); at or about 36 - 86 wt% of R1234yf; and at or about 44 wt%, or less than 44 wt% and greater than 0 wt% of R32. For example, such desired compositions of the greater preferred compositions 246 include at or about 27 wt%, or less than 27 wt% and greater than 0 wt% of R1132(E); at or about 36 - 82 wt% of R1234yf; and at or about 44 wt%, or less than 44 wt% and greater than 0 wt% of R32. For example, such desired compositions of the further greater preferred compositions 248 include at or about 27 wt%, or less than 27 wt% and greater than 0 wt% of R1132(E); at or about 36 - 79 wt% of R1234yf; and at or about 1 - 44 wt% of R32. For example, such desired compositions of the even further greater preferred compositions 250 include at or about 4 - 27 wt% of R1132(E); at or about 36 - 75 wt% of R1234yf; and at or about 5-44 wt% of R32.In some embodiments, a set of desired properties may include having a BV of 10 cm/s or less and a GWP of at or about or less than 150. In such embodiments, desired compositions may be selected from the compositions illustrated in Figure 3 (e.g., useful compositions 240, preferred compositions 242, further preferred compositions 244, greater preferred compositions 246) and described with respect to Figure 3 that are within both the hatched area 260 and the shaded area 270. For example, an upper limit of R32 in such desired compositions is at or about 22 wt%, and a lower limit of the R1234yf in such desired compositions is at or about 55 wt%.

In some embodiments, a set of desired properties for a refrigerant composition may include a different GWP then discussed above, a different capacity then discussed above, a different BV then discussed above, and/or a temperature glide. In an embodiment, a BV of at or less than 5 cm/s may be desired. In an embodiment, glide that is at or less than 3K may be desired. In an embodiment, a temperature glide that is at or less than 2.5K may be desired. In an embodiment, a temperature glide that is at or less than 2K may be desired. In an embodiment, a GWP of at or about or less than 50 may be desired. In an embodiment, a GWP of at or about or less than 10 may be desired. In an embodiment, a capacity at or about or greater than 100% of the capacity of R404A may be desired. In an embodiment, a capacity at or about or less than 150% of the capacity of R404A may be desired. In an embodiment, a capacity at or about or less than 140% of the capacity of R404A may be desired. In an embodiment, a capacity at or about or less than 130% of the capacity of R404A may be desired. In an embodiment, a capacity at or about or less than 125% of the capacity of R404A may be desired. It should be appreciated that the matrix 200 in Figure 3 may be used to further select compositions/ranges with the desired GWP, BV, capacity, and/or temperature glide. For example, the different ranges of compositions discussed above with respect to Figure 3 may be modified/selected based on Figure 3 so as to have ranges of R1132(E), R32, and R1234yf with the desired properties (e.g., GWP, capacity, BV, and/or temperature glide). It is further appreciated that the selection described is illustrative and not limited to the selection criteria described above.

Figure 4 is a matrix 400 that illustrates refrigerant compositions that include R1132(E), R32, and R1234yf, according to an embodiment. Comparing to the matrix 200 of Figures 2 and 3, the capacity of the refrigerant compositions in Figure 4 is relative to the capacity of R410A. Referring to Figure 4, the matrix 400 shows plots of GWP, BV, temperature glide, capacity relative to R410A, and OEL of a refrigerant composition as a function of the weight percentages of R1132(E), R32, and R1234yf. In an embodiment, refrigerant compositions comprising R1132(E), R32, and R1234yf can be selected based on GWP, BV, temperature glide, capacity relative to R410A, and OEL based on Figure 4. As similarly described above for the matrix 200, the matrix 400 in Figure 4 is a triangle that has sides that correspond to weight percentages (wt%) of R1132(E), R1234yf, and R32, respectively and vertexes that correspond to a composition of 100% R1132(E), 100% R1234yf, and 100% R32, respectively.

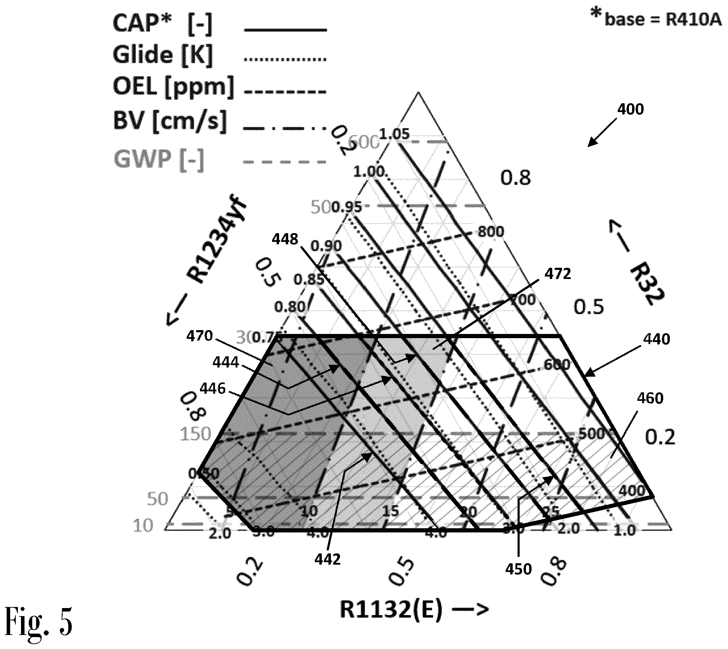

Figure 5 is the matrix 400 of Figure 4 illustrated to show selected refrigerant compositions, according to an embodiment. As shown in Figure 5, the refrigerant compositions can include R1132(E), R32, and R1234yf. The refrigerant compositions can be selected based on one or more of the refrigerant composition properties such as the GWP, BV, temperature glide, capacity relative to R410A, and OEL.

In an embodiment, a desired set of properties of a useful refrigerant composition includes having a GWP of at or about or less than 300, at or about or above 50% capacity relative to R410A, and an OEL of at least 400 ppm. Based on these desired properties, a range of useful refrigerant compositions 240 is shown in the matrix 400 of Figure 5. The useful refrigerant compositions 440 include greater than 0 wt% and less than 100 wt% of R1 132(E); at or about 87 wt%, or less than 87 wt% and greater than 0 wt% of R1234yf; and at or about 44 wt%, or less than 44 wt% and greater than 0 wt% of R32.

In an embodiment, the useful compositions 440 may include preferred compositions 442 as shown in Figure 5. The properties of the preferred compositions 442 include a GWP of at or about or less than 300, at or about or above 75% capacity relative to R410A, and an OEL of at least 400 ppm. The preferred compositions 442 include greater than 0 wt% and less than 100 wt% of R1132(E); at or about 56 wt%, or less than 56 wt% and greater than 0 wt% of R1234yf; and at or about 44 wt%, or less than 44 wt% and greater than 0 wt% of R32.

In an embodiment, the preferred compositions 442 may include further preferred compositions 444 as shown in Figure 5. The properties of the further preferred compositions 444 include having a GWP of at or about or less than 300, at or about or above 80% capacity relative to R410A, and an OEL of at least 400 ppm. The further preferred compositions 444 include at or about 8 wt%, or greater than 8 wt% and less than 100 wt% of R1132(E); at or about 48 wt%, or less than 48 wt% and greater than 0 wt% of R1234yf; and at or about 44 wt%, or less than 44 wt% and greater than 0 wt% of R32.

In an embodiment, the further preferred compositions 444 may include greater preferred compositions 446 as shown in Figure 5. The properties of the greater preferred compositions 3046 include having a GWP of at or about or less than 300, at or about or above 85% capacity relative to R410A, and an OEL of at least 400 ppm. The greater preferred compositions 446 include at or about 16 wt%, or greater than 16 wt% and less than 100 wt% of R1132(E); at or about 39 wt%, or less than 39 wt% and greater than 0 wt% of R1234yf; and at or about 1 - 44 wt% of R32.

In an embodiment, the greater preferred compositions 446 may include further greater preferred compositions 448 as shown in Figure 5. The properties of the further greater preferred compositions 3048 include having a GWP of at or about or less than 300, at or about or above 90% capacity relative to R410A, and an OEL of at least 400 ppm. The further greater preferred compositions 448 include at or about 25 wt%, or greater than 25 wt% and less than 100 wt% of R1132(E); at or about 31 wt%, or less than 31 wt% and greater than 0 wt% of R1234yf; and at or about 3 - 44 wt% of R32.

In an embodiment, the further greater preferred compositions 448 may include even further greater preferred compositions 450 as shown in Figure 5. The properties of the even further greater preferred compositions 450 include having a GWP of at or about or less than 300, at or about or above 95% capacity relative to R410A, and an OEL of at least 400 ppm. The even further greater preferred compositions 450 include at or about 33 wt%, or greater than 33 wt% and less than 100 wt% of R1132(E); at or about 22 wt%, or less than 22 wt% and greater than 0 wt% of R1234yf; and at or about 4 - 44 wt% of R32.

Figure 5 also includes a hatched area 460. The compositions in the hatched area 460 have a GWP of at or about or less than 150. In some embodiments, a set of desired properties may include the lower GWP provided by the compositions within the hatched area 460 (e.g., a GWP that is at or about or less than 150). In such embodiments, desired compositions may be selected from the compositions illustrated in Figure 5 (e.g., useful compositions 440, preferred compositions 442, further preferred compositions 444, greater preferred compositions 446, further greater preferred compositions 448, even further greater preferred compositions 450) and described with respect to Figure 5 that are within the hatched area 460.

For example, such desired compositions of the useful refrigerant compositions 440 include greater than 0 wt% and less than 100 wt% of R1132(E); at or about 87 wt%, or less than 87 wt% and greater than 0 wt% of R1234yf; and at or about 22 wt%, or less than 22 wt% and greater than 0 wt% of R32. For example, such desired compositions of the preferred compositions 442 include at or about 27 wt%, or greater than 27 wt% and less than 100 wt% of R1132(E); at or about 51 wt%, or less than 51 wt% and greater than 0 wt% of R1234yf; and at or about 22 wt%, or less than 22 wt% and greater than 0 wt% of R32. For example, such desired compositions of the further preferred compositions 444 include at or about 35 wt%, or greater than 35 wt% and less than 100 wt% of R1132(E); at or about 43 wt%, or less than 43 wt% and greater than 0 wt% of R1234yf; and at or about 22 wt%, or less than 22 wt% and greater than 0 wt% of R32. For example, such desired compositions of the greater preferred compositions 446 include at or about 43 wt%, or greater than 43 wt% and less than 100 wt% of R1132(E); at or about 35 wt%, or less than 35 wt% and greater than 0 wt% of R1234yf; and at or about 1 - 22 wt% of R32. For example, such desired compositions of the further greater preferred compositions 448 include at or about 51 wt%, or greater than 51 wt% and less than 100 wt% of R1132(E); at or about 27 wt%, or less than 27 wt% and greater than 0 wt% of R1234yf; and at or about 3 - 22 wt% of R32. For example, such desired compositions of the even further greater preferred compositions 450 include at or about 59 wt%, or greater than 59 wt% and less than 100 wt% of R1132(E); at or about 19 wt%, or less than 19 wt% and greater than 0 wt% of R1234yf; and at or about 4 - 22 wt% of R32.

Figure 5 also includes shaded areas 470, 472. In some embodiments, a set of desired properties may include the lower BV provided by the compositions within the shaded areas 470, 472 (e.g., a BV that is at or less than 15 cm/s). In such embodiments, desired compositions may be selected from the compositions illustrated in Figure 5 (e.g., useful compositions 440, preferred compositions 442, further preferred compositions 444, greater preferred compositions 446, further greater preferred compositions 448, even further greater preferred compositions 450) and described with respect to Figure 5 that are within the shaded areas 470, 470.

For example, such desired compositions of the useful refrigerant compositions 440 include at or about 43 wt%, or less than 43 wt% and greater than 0 wt% of R1132(E); at or about 20 - 87 wt% of R1234yf; and at or about 44 wt%, or less than 44 wt% and greater than 0 wt% of R32. For example, such desired compositions of the preferred compositions 442 include at or about 42 wt%, or less than 42 wt% and greater than 0 wt% of R1132(E); at or about 20 - 56 wt% of R1234yf; and at or about 10 - 44 wt% of R32. For example, such desired compositions of the further preferred compositions 444 include at or about 8-40 wt% of R1132(E); at or about 20 - 48 wt% of R1234yf; and at or about 18 - 44 wt% of R32. For example, such desired compositions of the greater preferred compositions 446 include at or about 16 - 39 wt% of R1132(E); at or about 20 - 39 wt% of R1234yf; and at or about 26 - 44 wt% of R32. For example, such desired compositions of the further greater preferred compositions 448 include at or about 25 - 37 wt% of R1132(E); at or about 20 - 31 wt% of R1234yf; and at or about 33 - 44 wt% of R32. For example, such desired compositions of the even further greater preferred compositions 450 include at or about 33 - 36 wt% of R1132(E); at or about 20 - 22 wt% of R1234yf; and at or about 42 - 44 wt% of R32.

The shaded areas 470, 472 in Figure 5 include a first shaded area 470 and a second shaded area 472. The compositions in the first shaded area 470 have a BV of 10 cm/s or less. In some embodiments, a set of desired properties may include the lower BV provided by the compositions within the first shaded area 470 (e.g., a BV of 10 cm/s or less). In such embodiments, desired compositions may be selected from the compositions illustrated in Figure 5 (e.g., useful compositions 440, preferred compositions 442, further preferred compositions 444, greater preferred compositions 446) and described with respect to Figure 5 that are within the first shaded area 470.

For example, such desired compositions of the useful refrigerant compositions 440 include at or about 27 wt%, or less than 27 wt% and greater than 0 wt% of R1132(E); at or about 36 - 87 wt% of R1234yf; and at or about 44 wt%, or less than 44 wt% and greater than 0 wt% of R32. For example, such desired compositions of the preferred compositions 442 include at or about 23 wt%, or less than 23 wt% and greater than 0 wt% of R1132(E); at or about 36 - 56 wt% of R1234yf; and at or about 26 - 44 wt% of R32. For example, such desired compositions of the further preferred compositions 444 include at or about 8 - 22 wt% of R1132(E); at or about 36 - 48 wt% of R1234yf; and at or about 33 - 44 wt% of R32. For example, such desired compositions of the greater preferred compositions 446 include at or about 16 - 20 wt% of R1132(E); at or about 36 - 39 wt% of R1234yf; and at or about 41 - 44 wt% of R32.

In some embodiments, a set of desired properties may include having a BV of 15 cm/s or less and a GWP of at or about or less than 150. In such embodiments, desired compositions may be selected from the compositions illustrated in Figure 5 (e.g., useful compositions 440, preferred compositions 442, further preferred compositions 444, greater preferred compositions 446, further greater preferred compositions 448, even further greater preferred compositions 450) and described with respect to Figure 5 that are within both the hatched area 460 and the shaded areas 470, 472. For example, an upper limit of the R1132(E) in such desired compositions is at or about 43 wt%, an upper limit of the R32 in such desired compositions is at or about 22 wt%, and a lower limit of R1234yf in such desired compositions is at or about 20 wt%. In some embodiments, a set of desired properties may include having a BV of 10 cm/s or less and a GWP of at or about or less than 150. In such embodiments, desired compositions may be selected from the compositions illustrated in Figure 5 (e.g., useful compositions 440) and described with respect to Figure 5 that are within both the hatched area 460 and the first shaded area 470. For example, an upper limit of the R1132(E) in such desired compositions is at or about 27 wt%, an upper limit of the R32 in such desired compositions is at or about 22 wt%, and a lower limit of R1234yf in such desired compositions is at or about 36 wt%.

In some embodiments, a set of desired properties for a refrigerant composition may include a different GWP than discussed above, a different capacity than discussed above, a different BV then discussed above, and/or a temperature glide. In an embodiment, a BV of at or less than 5 cm/s may be desired. In an embodiment, glide that is at or less than 4K may be desired. In an embodiment, a temperature glide that is at or less than 4K may be desired. In an embodiment, a temperature glide that is at or less than 3K may be desired. In an embodiment, a temperature glide that is at or less than 2K may be desired. In an embodiment, a temperature glide that is at or less than 1K may be desired. In an embodiment, a GWP of at or about or less than 50 may be desired. In an embodiment, a GWP of at or about or less than 10 may be desired. In an embodiment, a capacity at or about or greater than 100% of the capacity of R404A may be desired. It should be appreciated that the matrix 400 in Figure 5 may be used to further select compositions/ranges with the desired GWP, capacity, and/or temperature glide. For example, the different ranges of compositions discussed above with respect to Figure 5 may be modified/selected based on Figure 5 so as to have ranges of R1132(E), R32, and R1234yf with the desired properties (e.g., GWP, capacity, BV, and/or temperature glide). It is further appreciated that the selection described is illustrative and not limited to the selection criteria described above.

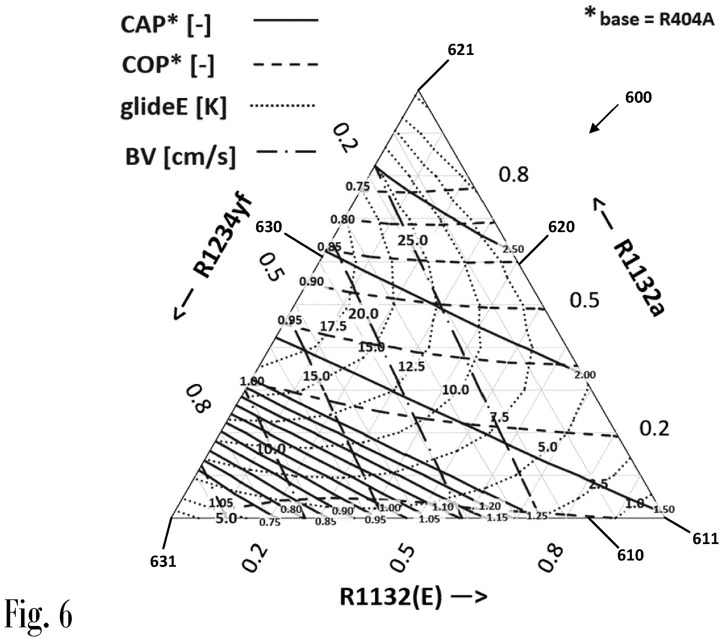

Figure 6 is a matrix 600 that illustrates refrigerant compositions that includes R1132(E), R1132a, and R1234yf, according to an embodiment. As shown in Figure 6, each side 610, 620, 630 of the triangle can correspond to weight percentages (wt%) of R1132(E), R1132a, and R1234yf, respectively. Each vertex 611, 621, 631 corresponds to a composition of 100% R1132(E), R1132a, and R1234yf, respectively. For example, represented at 611, the refrigerant composition includes 100% of R1132(E); at 621, the refrigerant composition includes 100% of R1132a; and at 631, the refrigerant composition includes 100% of R1234yf. The properties (e.g., temperature glide, BV, and/or capacity relative to R404A) of a refrigerant composition with a weight percent of R1132(E), R1132a, and R1234yf can be estimated using the matrix 600. Properties of the compositions for the matrix 600 can be estimated or determined using a thermodynamic model and/or experimental results.

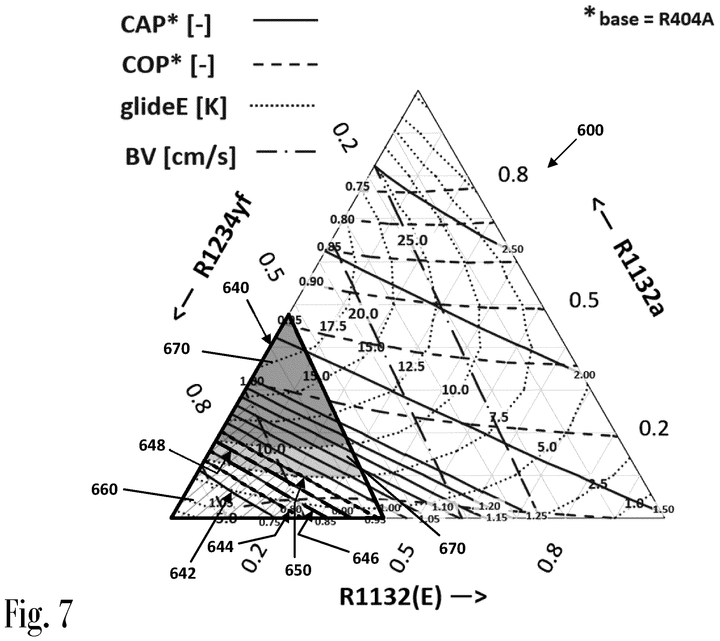

The matrix 600 of Figure 6 includes one or more lines that represent properties of the refrigerant compositions (e.g., capacity relative to R404A, temperature glide, and BV) with respect to the weight percentages of R1132(E), R1132a, and R1234yf, respectively. Figure 7 is the matrix 600 of Figure 6 illustrated to show selected refrigerant compositions, according to an embodiment. As shown in Figure 7, the refrigerant compositions can include R1132(E), R1132a, and R1234yf.

In an embodiment, a desired set of properties of a useful refrigerant composition includes having a BV of at or less than 15 cm/s. Based on these desired properties, a range of useful refrigerant compositions 640 is shown in the matrix 600 of Figure 7. The useful refrigerant compositions 640 include at or about 43 wt%, or less than 43 wt% and greater than 0 wt% of R1132(E); at or about 52 wt%, or greater than 52 wt% and less than 100 wt% of R1234yf; and at or about 48 wt%, or less than 48 wt% and greater than 0 wt% of R1132a.

In an embodiment, the useful compositions 640 may include preferred compositions 642 as shown in Figure 7. The properties of the preferred compositions 642 include having a BV of at or less than 15 cm/s and a capacity at or about or greater than 75% of the capacity of R404A. The preferred refrigerant compositions 642 include at or about 43 wt%, or less than 43 wt% and greater than 0 wt% of R1132(E); at or about 52 - 89 wt% of R1234yf; and at or about 48 wt%, or less than 48 wt% and greater than 0 wt% of R1132a.

In an embodiment, the preferred compositions 642 may include further preferred compositions 644 as shown in Figure 7. The properties of the further preferred compositions 644 include having a BV of at or less than 15 cm/s and a capacity at or about or greater than 80% of the capacity of R404A. The further preferred refrigerant compositions 644 include at or about 43 wt%, or less than 43 wt% and greater than 0 wt% of R1132(E); at or about 52 - 87 wt% of R1234yf; and at or about 48 wt%, or less than 48 wt% and greater than 0 wt% of R1132a.

In an embodiment, the further preferred compositions 644 may include greater preferred compositions 646 as shown in Figure 7. The properties of the greater preferred compositions 646 include having a BV of at or less than 15 cm/s and a capacity at or about or greater than 85% of the capacity of R404A. The greater preferred refrigerant compositions 646 include at or about 43 wt%, or less than 43 wt% and greater than 0 wt% of R1132(E); at or about 52 - 84 wt% of R1234yf; and at or about 48 wt%, or less than 48 wt% and greater than 0 wt% of R1132a.

In an embodiment, the greater preferred compositions 646 may include further greater preferred compositions 648 as shown in Figure 7. The properties of the further greater preferred compositions 648 include having a BV of at or less than 15 cm/s and a capacity at or about or greater than 90% of the capacity of R404A. The further greater preferred refrigerant compositions 648 include at or about 43 wt%, or less than 43 wt% and greater than 0 wt% of R1132(E); at or about 52 - 82 wt% of R1234yf; and at or about 48 wt%, or less than 48 wt% and greater than 0 wt% of R1132a.

In an embodiment, the further greater preferred compositions 648 may include even further greater preferred compositions 650 as shown in Figure 7. The properties of the even further greater preferred compositions 650 include having a BV of at or less than 15 cm/s and a capacity at or about or greater than 95% of the capacity of R404A. The even further greater preferred refrigerant compositions 650 include at or about 43 wt%, or less than 43 wt% and greater than 0 wt% of R1132(E); at or about 52 - 80 wt% of R1234yf; and at or about 48 wt%, or less than 48 wt% and greater than 0 wt% of R1132a.

Figure 7 also includes a hatched area 660. The compositions in the hatched area 660 have a BV of at or less than 10 cm/s. In some embodiments, a set of desired properties may include the lower BV provided by the compositions within the hatched area 660 (e.g., a BV that is at or less than 10 cm/s). In such embodiments, desired compositions may be selected from the compositions illustrated in Figure 7 (e.g., useful compositions 640, preferred compositions 642, further preferred compositions 644, greater preferred compositions 646, further greater preferred compositions 648, even further greater preferred compositions 650) and described with respect to Figure 7 that are within the hatched area 660.

For example, such desired compositions of the useful refrigerant compositions 640 include at or about 27 wt%, or less than 27 wt% and greater than 0 wt% of R1132(E); at or about 70 wt%, or greater than 70 wt% and less than 100 wt% of R1234yf; and at or about 30 wt%, or less than 30 wt% and greater than 0 wt% of R1132a. For example, such desired compositions of the preferred refrigerant compositions 642 include at or about 27 wt%, or less than 27 wt% and greater than 0 wt% of R1132(E); at or about 70 - 89 wt% of R1234yf; and at or about 30 wt%, or less than 30 wt% and greater than 0 wt% of R1132a. For example, such desired compositions of the further preferred refrigerant compositions 644 include at or about 27 wt%, or less than 27 wt% and greater than 0 wt% of R1132(E); at or about 70 - 87 wt% of R1234yf; and at or about 30 wt%, or less than 30 wt% and greater than 0 wt% of R1132a. For example, such desired compositions of the greater preferred refrigerant compositions 646 include at or about 23 wt%, or less than 23 wt% and greater than 0 wt% of R1132(E); at or about 70 - 84 wt% of R1234yf; and at or about 4-30 wt% of R1132a. For example, such desired compositions of the further greater preferred refrigerant compositions 648 include at or about 20 wt%, or less than 20 wt% and greater than 0 wt% of R1132(E); at or about 70 - 82 wt% of R1234yf; and at or about 8-30 wt% of R1132a. For example, such desired compositions of the even further greater preferred refrigerant compositions 650 include at or about 16 wt%, or less than 16 wt% and greater than 0 wt% of R1132(E); at or about 70 - 80 wt% of R1234yf; and at or about 12 - 30 wt% of R1132a.

Figure 7 also includes a first shaded area 670 and a second shaded area 672. The compositions in the first shaded area 670 have a temperature glide of at or greater than 10K. In some embodiments, a set of desired properties may include the lower temperature glide provided by the compositions outside of the first shaded area 670 (e.g., a temperature glide of at or less 10K). In such embodiments, desired compositions may be selected from the compositions illustrated in Figure 7 (e.g., useful compositions 640, preferred compositions 642, further preferred compositions 644, greater preferred compositions 646, further greater preferred compositions 648, even further greater preferred compositions 650) and described with respect to Figure 7 so as to omit those compositions within the first shaded area 670. For example, a lower limit of R1234yf in such desired compositions is at or about 54 wt%, and an upper limit of the R1132a in such desired compositions is at or about 20 wt%.

The compositions in the first shaded area 670 and the second shaded area 672 have a temperature glide of greater than 7.5K. In some embodiments, a set of desired properties may include the lower temperature glide provided by the compositions outside of the shaded areas 670, 672 (e.g., a temperature glide of at or less 7.5K). In such embodiments, desired compositions may be selected from the compositions illustrated in Figure 7 (e.g., useful compositions 640, preferred compositions 642, further preferred compositions 644, greater preferred compositions 646, further greater preferred compositions 648, even further greater preferred compositions 650) and described with respect to Figure 7 so as to omit those compositions within the shaded areas 670, 672. For example, a lower limit of R1234yf in such desired compositions is at or about 56 wt%, and an upper limit of the R1132a in such desired compositions is at or about 14 wt%.

In some embodiments, a set of desired properties may include having a BV of 10 cm/s or less and a temperature glide of at or less than 10K. In such embodiments, desired compositions may be selected from the compositions illustrated in Figure 7 (e.g., useful compositions 640, preferred compositions 642, further preferred compositions 644, greater preferred compositions 646, further greater preferred compositions 648, even further greater preferred compositions 650) and described with respect to Figure 7 that are outside of the first shaded area 670 and within the hatched area 660. For example, a lower limit of R1234yf in such desired compositions is at or about 71 wt%, and an upper limit of the R1132a in such desired compositions is at or about 18 wt%.

In some embodiments, a set of desired properties may include having a BV of 10 cm/s or less and a temperature glide of at or less than 7.5K. In such embodiments, desired compositions may be selected from the compositions illustrated in Figure 7 (e.g., useful compositions 640, preferred compositions 642, further preferred compositions 644, greater preferred compositions 646, further greater preferred compositions 648, even further greater preferred compositions 650) and described with respect to Figure 7 that are outside of the shaded areas 670, 672 and within the hatched area 660. For example, a lower limit of R1234yf in such desired compositions is at or about 71 wt%, and an upper limit of the R1132a in such desired compositions is at or about 14 wt%.

In some embodiments, a set of desired properties for a refrigerant composition may include a different capacity than discussed above, a different BV than discussed above, a temperature glide, a COP relative to R404A. In an embodiment, a BV of at or less than 5 cm/s may be desired. In an embodiment, temperature glide that is at or less than 15K may be desired. In an embodiment, a temperature glide that is at or less than 5K may be desired. In an embodiment, a capacity at or about or greater than 100% of the capacity of R404A may be desired. In an embodiment, a capacity at or about or less than 150% of the capacity of R404A may be desired. In an embodiment, a capacity at or about or less than 125% of the capacity of R404A may be desired. In an embodiment, a COP that is at least 100% of the COP of R404A may be desired. It should be appreciated that the matrix 600 in Figure 7 may be used to further select compositions/ranges with the desired capacity, BV, COP, and/or temperature glide. For example, the different ranges of compositions discussed above with respect to Figure 7 may be modified/selected based on Figure 6 so as to have ranges of R1132(E), R1132a, and R1234yf with the desired properties (e.g., capacity, BV, COP, and/or temperature glide). It is further appreciated that the selection described is illustrative and not limited to the selection criteria described above.

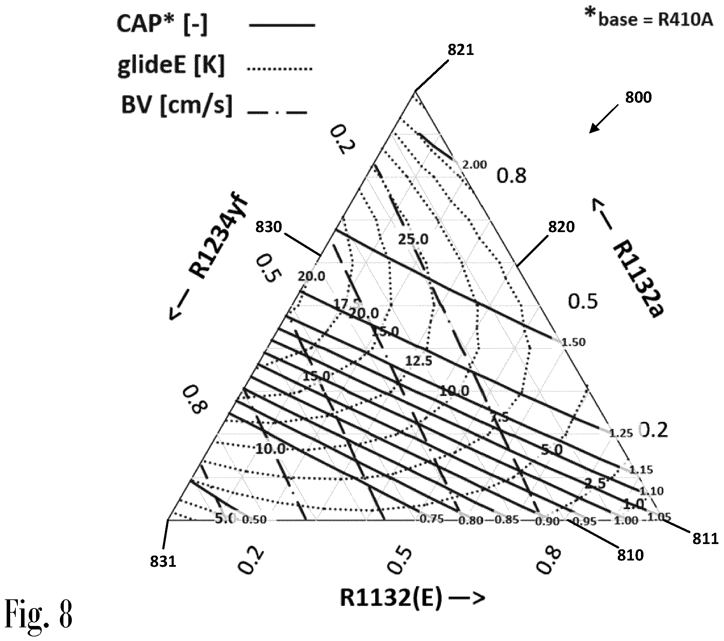

Figure 8 is a matrix 800 that illustrates refrigerant compositions that include R1132(E), R1132a, and R1234yf, according to an embodiment. Comparing to the matrix 600 of Figure 6, the capacity of the refrigerant compositions in Figure 8 is relative to the capacity of R410A. Referring to Figure 8, the matrix 800 shows plots of BV, temperature glide, and capacity relative to R410A as a function of the weight percentages of R1132(E), R1132a, and R1234yf. In an embodiment, refrigerant compositions comprising R1132(E), R1132a, and R1234yf can be selected based on BV, temperature glide, and/or capacity relative to R410A based on Figure 4. As similarly described above for the matrix 600, the matrix 800 in Figure 8 is a triangle that has sides that correspond to weight percentages (wt%) of R1132(E), R1234yf, and R1132a, respectively and vertexes that correspond to a composition of 100% R1132(E), 100% R1234yf, and 100% R1132a, respectively.

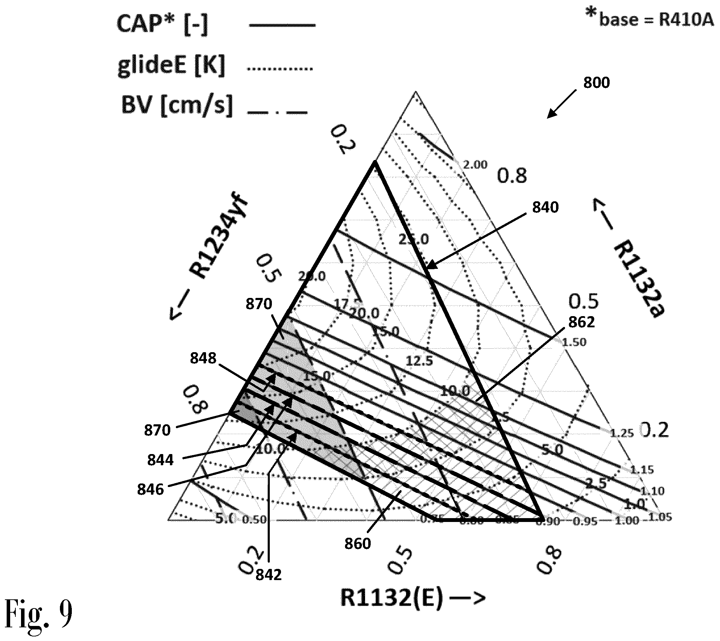

Figure 9 is the matrix 800 of Figure 8 illustrated to show selected refrigerant compositions, according to an embodiment. As shown in Figure 9, the refrigerant compositions can include R1132(E), R1132a, and R1234yf. The refrigerant compositions can be selected based on one or more of the refrigerant composition properties such as the capacity relative to R410A, temperature glide, and/or BV.

In an embodiment, a desired set of properties of a useful refrigerant composition includes having a capacity at or about or greater than 75% of the capacity of R410A and a burning velocity of at or about or less than 25 cm/s. Based on these desired properties, a range of useful refrigerant compositions 840 is shown in the matrix 800 of Figure 9. The useful refrigerant compositions 840 include at or about 76 wt%, or less than 76 wt% and greater than 0 wt% of R1132(E); at or about 17 - 75 wt% of R1234yf; and at or about 83 wt%, or less than 83 wt% and greater than 0 wt% of R1132a.

In an embodiment, the useful compositions 840 may include preferred compositions 842 as shown in Figure 9. The properties of the preferred compositions 842 include having a capacity at or about or greater than 80% of the capacity of R410A and a burning velocity of at or about or less than 25 cm/s. The preferred compositions 842 include at or about 76 wt%, or less than 76 wt% and greater than 0 wt% of R1132(E); at or about 17 - 72 wt% of R1234yf; and at or about 83 wt%, or less than 83 wt% and greater than 0 wt% of R1132a.

In an embodiment, the preferred compositions 842 may include further preferred compositions 844 as shown in Figure 9. The properties of the further preferred compositions 844 include having a capacity at or about or greater than 85% of the capacity of R410A and a burning velocity of at or about or less than 25 cm/s. The further preferred compositions 844 include at or about 76 wt%, or less than 76 wt% and greater than 0 wt% of R1132(E); at or about 17 - 69 wt% of R1234yf; and at or about 83 wt%, or less than 83 wt% and greater than 0 wt% of R1132a.

In an embodiment, the further preferred compositions 844 may include greater preferred compositions 846 as shown in Figure 9. The properties of the greater preferred compositions 846 include having a capacity at or about or greater than 90% of the capacity of R410A and a burning velocity of at or about or less than 25 cm/s. The greater preferred compositions 846 include at or about 74 wt%, or less than 74 wt% and greater than 0 wt% of R1132(E); at or about 17 - 66 wt% of R1234yf; and at or about 1 - 83 wt% of R1132a.

In an embodiment, the greater preferred compositions 846 may include further greater preferred compositions 848 as shown in Figure 9. The properties of the further greater preferred compositions 848 include having a capacity at or about or greater than 95% of the capacity of R410A and a burning velocity of at or about or less than 25 cm/s. The further greater preferred compositions 848 include at or about 70 wt%, or less than 70 wt% and greater than 0 wt% of R1132(E); at or about 17 - 64 wt% of R1234yf; and at or about 7 - 83 wt% of R1132a.

Figure 9 also includes hatched areas 860, 862. The compositions in the hatched areas 860, 862 have a temperature glide of at or less than 10K. In some embodiments, a set of desired properties may include the lower GWP provided by the compositions within the hatched areas 860, 862 (e.g., a temperature glide that is at or less than 10K). In such embodiments, desired compositions may be selected from the compositions illustrated in Figure 9 (e.g., useful compositions 840, preferred compositions 842, further preferred compositions 844, greater preferred compositions 846, further greater preferred compositions 848) and described with respect to Figure 9 that are within the hatched areas 860, 862.

For example, such desired compositions of the useful refrigerant compositions 840 include at or about 19 - 76 wt% of R1132(E); at or about 21 - 65 wt% of R1234yf; and at or about 36 wt%, or less than 36 wt% and greater than 0 wt% of R1132a. For example, such desired compositions of the example, such desired compositions of the preferred compositions 842 include at or about 24 - 76 wt% of R1132(E); at or about 21 - 59 wt% of R1234yf; and at or about 36 wt%, or less than 36 wt% and greater than 0 wt% of R1132a. For example, such desired compositions of the further preferred compositions 844 include at or about 29 - 76 wt% of R1132(E); at or about 21 - 53 wt% of R1234yf; and at or about 36 wt%, or less than 36 wt% and greater than 0 wt% of R1132a. For example, such desired compositions of the greater preferred compositions 846 include at or about 33 - 74 wt% of R1132(E); at or about 21 - 47 wt% of R1234yf; and at or about 1 - 36 wt% of R1132a. For example, such desired compositions of the further greater preferred compositions 848 include at or about 37 - 70 wt% of R1132(E); at or about 21 - 43 wt% of R1234yf; and at or about 7-36 wt% of R1132a.

The hatched areas 860, 862 in Figure 9 include a first hatched area 860 and a second hatched area 862. The compositions in the first hatched area 860 have a temperature glide of at or less than 7.5K. In some embodiments, a set of desired properties may include the even lower temperature glide provided by the compositions within the first hatched area 860 (e.g., a temperature glide that is at or less than 7.5K). In such embodiments, desired compositions may be selected from the compositions illustrated in Figure 9 (e.g., useful compositions 840, preferred compositions 842, further preferred compositions 844, greater preferred compositions 846, further greater preferred compositions 848) and described with respect to Figure 9 that are within the first hatched area 860. For example, a lower limit of R1132(E) in such desired compositions is at or about 33 wt%, an upper limit of R1234yf in such desired compositions is at or about 57 wt%, a lower limit of R1234yf in such desired compositions is at or about 21 wt%, and an upper limit of the R1132a in such desired compositions is at or about 23 wt%.

Figure 9 also includes shaded areas 870, 872. The compositions in the shaded areas 870, 872 have a BV of at or less than 15 cm/s. In some embodiments, a set of desired properties may include the lower BV provided by the compositions within the shaded areas 870, 872 (e.g., a BV that is at or less than 15 cm/s). In such embodiments, desired compositions may be selected from the compositions illustrated in Figure 9 (e.g., useful compositions 840, preferred compositions 842, further preferred compositions 844, greater preferred compositions 846, further greater preferred compositions 848) and described with respect to Figure 9 that are within the shaded areas 870, 870. For example, an upper limit of R1132(E) in such desired compositions is at or about 36 wt%, a lower limit of R1234yf in such desired compositions is at or about 52 wt%, an upper limit of R1132a in such desired compositions is at or about 48 wt%, and a lower limit of R1132a in such desired compositions is at or about 8 wt%.

The shaded areas 870, 872 in Figure 9 include a first shaded area 870 and a second shaded area 872. The compositions in the first shaded area 870 have a BV of 10 cm/s or less. In some embodiments, a set of desired properties may include the lower BV provided by the compositions within the first shaded area 470 (e.g., a BV of 10 cm/s or less). In such embodiments, desired compositions may be selected from the compositions illustrated in Figure 9 (e.g., useful compositions 840, preferred compositions 842) and described with respect to Figure 9 that are within the first shaded area 870. For example, an upper limit of R1132(E) in such desired compositions is at or about 9 wt%, a lower limit of R1234yf in such desired compositions is at or about 70 wt%, an upper limit of R1132a in such desired compositions is at or about 31 wt%, and a lower limit of R1132a in such desired compositions is at or about 21 wt%.

In some embodiments, a set of desired properties may include having a BV of 15 cm/s or less and a temperature glide of 10K or less. In such embodiments, desired compositions may be selected from the compositions illustrated in Figure 9 (e.g., useful compositions 840, preferred compositions 842) and described with respect to Figure 9 that are within both the hatched areas 860, 862 and the shaded areas 870, 872. It will be appreciated that ranges for such desired compositions may be formed using end points for ranges described for the compositions illustrated in Figure 9 and/or described for compositions in the shaded area 870, the first hatched area 860, and/or both hatched areas 882, 882. For example, lower and upper limits of R1132(E) in such desired compositions are at or about 36 wt% and at or about 24 wt%, lower and upper limits of R1234yf in such desired compositions are at or about 54 wt% and at or about 65 wt%, and lower and upper limits of R1132a in such desired compositions are at or about 8 wt% and at or about 17 wt%.

In some embodiments, a set of desired properties for a refrigerant composition may include a different capacity than discussed above, a different BV, and/or a temperature glide than discussed above. In an embodiment, a temperature glide that is at or less than 15K may be desired. In an embodiment, a temperature glide that is at or less than 12.5K may be desired. In an embodiment, a temperature glide that is at or less than 5K may be desired. In an embodiment, a capacity at or about or greater than 100% of the capacity of R410A may be desired. In an embodiment, a capacity at or about or less than 150% of the capacity of R410A may be desired. In an embodiment, a capacity at or about or less than 125% of the capacity of R410A may be desired. It should be appreciated that the matrix 800 in Figure 9 may be used to further select compositions/ranges with the desired BV, capacity, and/or temperature glide. For example, the different ranges of compositions discussed above with respect to Figure 9 may be modified/selected based on Figure 9 so as to have ranges of R1132(E), R1132a, and R1234yf with the desired properties (e.g., BV, capacity, and/or temperature glide). It is further appreciated that the selection described is illustrative and not limited to the selection criteria described above.

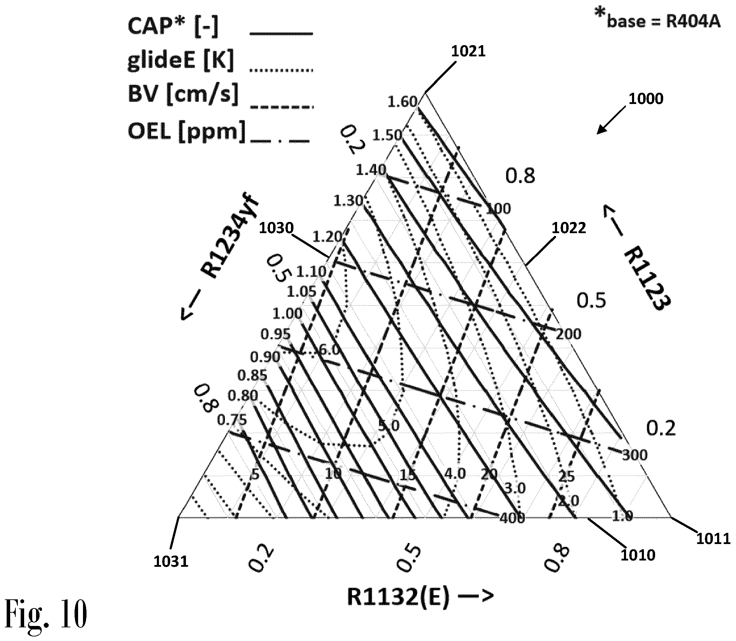

Figure 10 is a matrix 1000 that illustrates refrigerant compositions that include R1132(E), R1123, and R1234yf, according to an embodiment. As shown in Figure 10, each side 1010, 1020, 1030 of the triangle can correspond to weight percentages (wt%) of R1132(E), R1123, and R1234yf, respectively. Each vertex 1011, 1021, 1031 corresponds to a composition of 100% R1132(E), R1123, and R1234yf, respectively. For example, represented at 1011, the refrigerant composition includes 100% of R1132(E); at 1021, the refrigerant composition includes 100% of R1123; and at 1031, the refrigerant composition includes 100% of R1234yf. The properties (e.g., temperature glide, BV, OEL, and/or capacity relative to R404A) of a refrigerant composition with a weight percent of R1132(E), R1123, and R1234yf can be estimated using the matrix 1000. Properties of the compositions for the matrix 1000 can be estimated or determined using a thermodynamic model and/or experimental results.

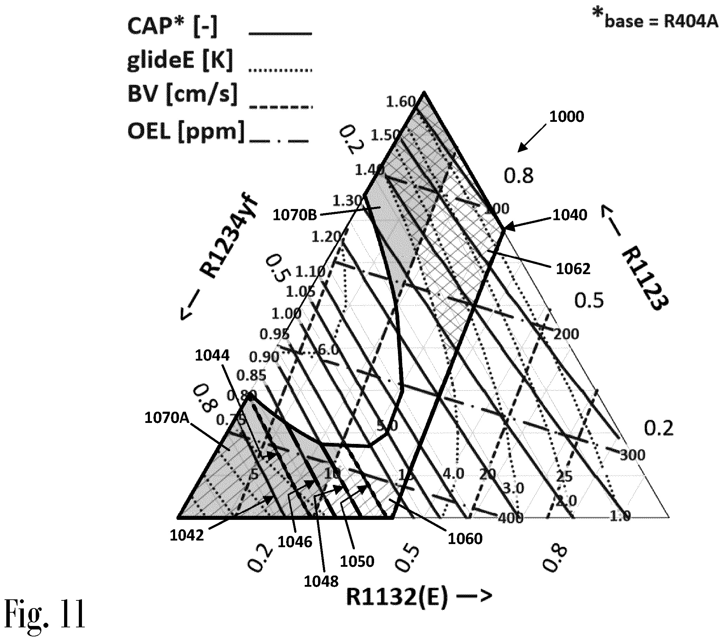

The matrix 1000 of Figure 10 includes one or more lines that represent properties of the refrigerant compositions (e.g., capacity relative to R404A, temperature glide, OEL, and BV) with respect to the weight percentages of R1132(E), R1123, and R1234yf, respectively. Figure 11 is the matrix 1000 of Figure 10 illustrated to show selected refrigerant compositions according to an embodiment. As shown in Figure 11, the refrigerant compositions can include R1132(E), R1123, and R1234yf.

In an embodiment, a desired set of properties of a useful refrigerant composition includes having a burning velocity of at or less than 15 cm/s and a temperature glide of 5K or less. Based on these desired properties, a range of useful refrigerant compositions 1040 is shown in the matrix 1000 of Figure 11. The useful refrigerant compositions 1040 include at or about 43 wt%, or less than 43 wt% and greater than 0 wt% of R1132(E); greater than 0 wt% and less than 100 wt% of R1234yf; and greater than 0 wt% and less than 100 wt% of R1123.

In an embodiment, the useful compositions 1040 may include preferred compositions 1042 as shown in Figure 11. The properties of the preferred compositions 1042 include having a burning velocity of at or less than 15 cm/s, a temperature glide of 5K or less, and a capacity at or about or greater than 75% of the capacity of R404A. The preferred refrigerant compositions 1042 include at or about 43 wt%, or less than 43 wt% and greater than 0 wt% of R1132(E); at or about 78 wt%, or less than 78 wt% of R1234yf; and greater than 0 wt% and less than 100 wt% of R1123.

In an embodiment, the preferred compositions 1042 may include further preferred compositions 1044 as shown in Figure 11. The properties of the further preferred compositions 1044 include having a burning velocity of at or less than 15 cm/s, a temperature glide of 5K or less, and a capacity at or about or greater than 80% of the capacity of R404A. The further preferred refrigerant compositions 1044 include at or about 43 wt%, or less than 43 wt% and greater than 0 wt% of R1132(E); at or about 73 wt%, or less than 73 wt% of R1234yf; and greater than 0 wt% and less than 100 wt% of R1123.

In an embodiment, the further preferred compositions 1044 may include greater preferred compositions 1046 as shown in Figure 11. The properties of the greater preferred compositions 1046 include having a burning velocity of at or less than 15 cm/s, a temperature glide of 5K or less, and a capacity at or about or greater than 85% of the capacity of R404A. The greater preferred refrigerant compositions 1046 include at or about 43 wt%, or less than 43 wt% and greater than 0 wt% of R1132(E); at or about 68 wt%, or less than 68 wt% of R1234yf; and greater than 0 wt% and less than 100 wt% of R1123.

In an embodiment, the greater preferred compositions 1046 may include further greater preferred compositions 1048 as shown in Figure 11. The properties of the further greater preferred compositions 1048 include having a burning velocity of at or less than 15 cm/s, a temperature glide of 5K or less, and a capacity at or about or greater than 90% of the capacity of R404A. The further greater preferred refrigerant compositions 1048 include at or about 43 wt%, or less than 43 wt% and greater than 0 wt% of R1132(E); at or about 63 wt%, or less than 63 wt% of R1234yf; and greater than 0 wt% and less than 100 wt% of R1123.

In an embodiment, the further greater preferred compositions 1048 may include even further greater preferred compositions 1050 as shown in Figure 11. The properties of the even further greater preferred compositions 1050 include having a burning velocity of at or less than 15 cm/s, a temperature glide of 5K or less, and a capacity at or about or greater than 95% of the capacity of R404A. The even further greater preferred refrigerant compositions 1050 include at or about 43 wt%, or less than 43 wt% and greater than 0 wt% of R1132(E); at or about 58 wt%, or less than 58 wt% of R1234yf; and greater than 0 wt% and less than 100 wt% of R1123.

Figure 11 includes a first hatched area 1060. The compositions in the first hatched area 660 have an OEL at or above 400ppm. In some embodiments, a set of desired properties may include the higher OEL provided by the compositions within the first hatched area 660 (e.g., an OEL that is at or above 400ppm). In such embodiments, desired compositions may be selected from the compositions illustrated in Figure 11 (e.g., useful compositions 1040, preferred compositions 1042, further preferred compositions 1044, greater preferred compositions 1046, further greater preferred compositions 1048, even further greater preferred compositions 1050) and described with respect to Figure 11 that are within the first hatched area 1060.

For example, such desired compositions of the useful refrigerant compositions 1040 include at or about 43 wt%, or less than 43 wt% and greater than 0 wt% of R1132(E); at or about 50 wt%, or greater than 50 wt% and less than 100 wt% of R1234yf; and at or about 20 wt%, or less than 20 wt% and greater than 0 wt% of R1123. For example, such desired compositions of the preferred refrigerant compositions 1042 include at or about 5 - 43 wt% of R1132(E); at or about 50 - 76 wt% of R1234yf; and at or about 19 wt%, or less than 19 wt% and greater than 0 wt% of R1123. For example, such desired compositions of the further preferred refrigerant compositions 1044 include at or about 11 - 43 wt% of R1132(E); at or about 50 - 72 wt% of R1234yf; and at or about 17 wt%, or less than 17 wt% and greater than 0 wt% of R1123. For example, such desired compositions of the greater preferred refrigerant compositions 1046 include at or about 18 - 43 wt% of R1132(E); at or about 50 - 62 wt% of R1234yf; and at or about 15 wt%, or less than 15 wt% and greater than 0 wt% of R1123. For example, such desired compositions of the further greater preferred refrigerant compositions 1048 include at or about 25 - 43 wt% of R1132(E); at or about 50 - 62 wt% of R1234yf; and at or about 12 wt%, or less than 12 wt% and greater than 0 wt% of R1123. For example, such desired compositions of the even further greater preferred refrigerant compositions 1050 include at or about 32 - 43 wt% of R1132(E); at or about 50 - 57 wt% of R1234yf; and at or about 10 wt%, or less than 10 wt% and greater than 0 wt% of R1123.

Figure 11 also includes a second hatched area 1062. The compositions in the second hatched area 662 have a temperature glide of at or less than 4K. In some embodiments, a set of desired properties may include the lower temperature glide provided by the compositions within the second hatched area 1062 (e.g., a temperature glide of at or less than 4K). In such embodiments, desired compositions may be selected from the compositions illustrated in Figure 11 (e.g., useful compositions 1040, preferred compositions 1042, further preferred compositions 1044, greater preferred compositions 1046, further greater preferred compositions 1048, even further greater preferred compositions 1050) and described with respect to Figure 11 that are within the second hatched area 1062. For example, such desired compositions include at or about 38 wt%, or less than 38 wt% and greater than 0 wt% of R1132(E); at or about 27 wt%, or less than 27 wt% and greater than 0 wt% of 1234yf; and at or about 35 wt%, or greater than 35 wt% and less than 100 wt% of R1123.

Figure 11 also includes shaded areas 1070A, 1070B. The compositions in the shaded areas 1070A, 1070B have a BV of at or less than 10 cm/s. In some embodiments, a set of desired properties may include the lower BV provided by the compositions within the shaded areas 1070A, 1070B (e.g., a BV that is at or less than 10 cm/s). In such embodiments, desired compositions may be selected from the compositions illustrated in Figure 11 (e.g., useful compositions 1040, preferred compositions 1042, further preferred compositions 1044, greater preferred compositions 1046, further greater preferred compositions 1048, even further greater preferred compositions 1050) and described with respect to Figure 11 that are within the shaded areas 1070, 1070B. For example, in the first shaded area 1070A, an upper limit of R1132(E) in such desired compositions is at or about 28 wt%, a lower limit of R1234yf in such desired compositions is at or about 58 wt%, and an upper limit of R1123 in such desired compositions is at or about 29 wt%. For example, in the second shaded area 1070B, an upper limit of R1132(E) in such desired compositions is at or about 19 wt%, an upper limit of R1234yf in such desired compositions is at or about 31 wt%, and a lower limit of R1123 in such desired compositions is at or about 50 wt%.

In some embodiments, a set of desired properties may include having a BV of 10 cm/s or less and an OEL of at or above 400ppm. In such embodiments, desired compositions may be selected from the compositions illustrated in Figure 11 (e.g., useful compositions 1040, preferred compositions 1042, further preferred compositions 1044, greater preferred compositions 1046, further greater preferred compositions 1048) and described with respect to Figure 11 that are within both the first hatched area 1060 and the shaded area 1070A. In some embodiments, a set of desired properties may include having a BV of 10 cm/s or less and a temperature glide of at or less than 4K. In such embodiments, desired compositions may be selected from the compositions illustrated in Figure 11 (e.g., useful compositions 1040, preferred compositions 1042, further preferred compositions 1044, greater preferred compositions 1046, further greater preferred compositions 1048, even further greater preferred compositions 1050) and described with respect to Figure 11 that are within both the second hatched area 1062 and the shaded area 1070B. It will be appreciated that ranges for such desired compositions may be formed using end points for ranges described for the compositions illustrated in Figure 11 and/or described for compositions in the shaded area(s) 1070A, 1070B and for compositions in the hatched area(s) 882, 882.

In some embodiments, a set of desired properties for a refrigerant composition may include a different capacity, a different BV, a different OEL, and/or a different temperature glide than discussed above. In an embodiment, a temperature glide that is at or less than 6K may be desired. In an embodiment, a temperature glide that is at or less than 3K may be desired. In an embodiment, a temperature glide that is at or less than 2K may be desired. In an embodiment, an OEL of at or above 300ppm may be desired. In an embodiment, an OEL of at or above 200ppm may be desired. In an embodiment, an OEL of at or above 100ppm may be desired. In an embodiment, a capacity at or about or less than 150% of the capacity of R404A may be desired. In an embodiment, a capacity at or about or less than 125% of the capacity of R404A may be desired. In an embodiment, a capacity at or about or less than 120% of the capacity of R404A may be desired. In an embodiment, a capacity at or about or greater than 100% of the capacity of R404A may be desired. In an embodiment, a BV of at or less than 5 cm/s may be desired. It should be appreciated that the matrix 1000 in Figure 11 may be used to further select compositions/ranges with the desired BV, capacity, OEL, and/or temperature glide. For example, the different ranges of compositions discussed above with respect to Figure 11 may be modified/selected based on Figure 11 so as to have ranges of R1132(E), R1123, and R1234yf with the desired properties (e.g., BV, capacity, OEL, and/or temperature glide). It is further appreciated that the selection described is illustrative and not limited to the selection criteria described above.

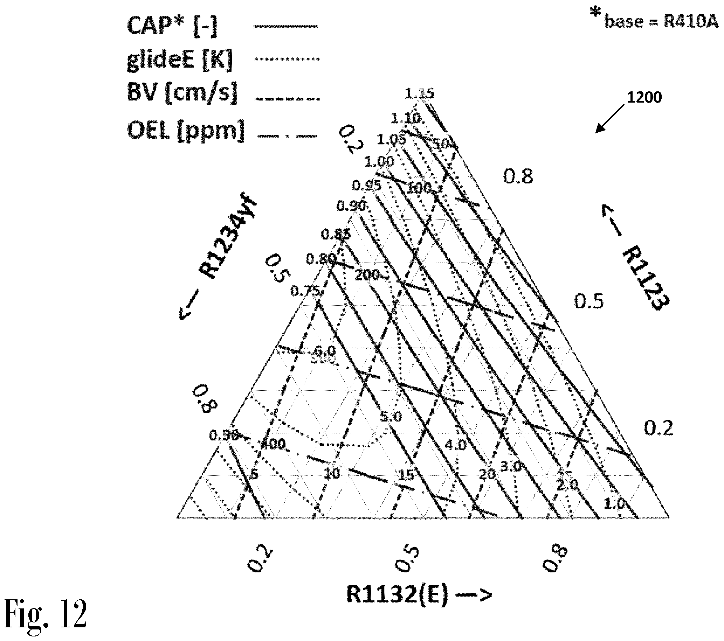

Figure 12 is a matrix 1200 that illustrates refrigerant compositions that include R1132(E), R1123, and R1234yf, according to an embodiment. Comparing to the matrix 1000 of Figure 10, the capacity of the refrigerant compositions in Figure 12 is relative to the capacity of R410A. Referring to Figure 12, the matrix 1200 shows plots of BV, temperature glide, capacity relative to R410A, and OEL of a refrigerant composition as a function of the weight percentages of R1132(E), R1123, and R1234yf. In an embodiment, refrigerant compositions comprising R1132(E), R1123, and R1234yf can be selected based on BV, temperature glide, capacity relative to R410A, and OEL based on Figure 12. As similarly described above for the matrix 1000, the matrix 1200 in Figure 11 is a triangle that has sides that correspond to weight percentages

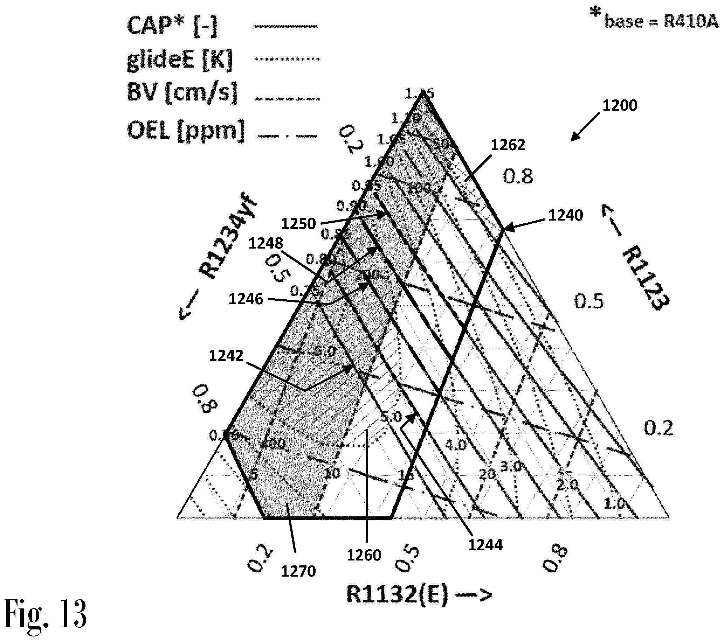

Figure 13 is the matrix 1200 of Figure 12 illustrated to show selected refrigerant compositions, according to an embodiment. As shown in Figure 13, the refrigerant compositions can include R1132(E), R1123, and R1234yf. The useful refrigerant compositions can be selected based on one or more of the refrigerant composition properties such as the capacity relative to R410A, temperature glide, OEL, and/or BV.

In an embodiment, a desired set of properties of a useful refrigerant composition includes having a burning velocity of at or less than 15 cm/s and at or about or greater than 50% of the capacity of R410A. Based on these desired properties, a range of useful refrigerant compositions 1240 is shown in the matrix 1200 of Figure 13. The useful refrigerant compositions 1240 include at or about 43 wt%, or less than 43 wt% and greater than 0 wt% of R1132(E); at or about 82 wt%, or less than 82 wt% and greater than 0 wt% of R1234yf; and greater than 0 wt% and less than 100 wt% of R1123.

In an embodiment, the useful compositions 1240 may include preferred compositions 1242 as shown in Figure 13. The properties of the preferred compositions 1242 include having a burning velocity of at or less than 15 cm/s and at or about or greater than 75% of the capacity of R410A. The preferred compositions 1242 include at or about 41 wt%, or less than 41 wt% and greater than 0 wt% of R1132(E); at or about 46 wt%, or less than 46 wt% and greater than 0 wt% of R1234yf; and at or about 13 wt%, or greater than 13 wt% and less than 100 wt% of R1123.

In an embodiment, the preferred compositions 1242 may include further preferred compositions 1244 as shown in Figure 13. The properties of the further preferred compositions 1244 include having a burning velocity of at or less than 15 cm/s and at or about or greater than 80% of the capacity of R410A. The further preferred compositions 1244 include at or about 40 wt%, or less than 40 wt% and greater than 0 wt% of R1132(E); at or about 40 wt%, or less than 40 wt% and greater than 0 wt% of R1234yf; and at or about 21 wt%, or greater than 21 wt% and less than 100 wt% of R1123.

In an embodiment, the further preferred compositions 1244 may include greater preferred compositions 1246 as shown in Figure 13. The properties of the greater preferred compositions 1046 include having a burning velocity of at or less than 15 cm/s and at or about or greater than 85% of the capacity of R410A. The greater preferred compositions 1246 include at or about 39 wt%, or less than 39 wt% and greater than 0 wt% of R1132(E); at or about 34 wt%, or less than 34 wt% and greater than 0 wt% of R1234yf; and at or about 29 wt%, or greater than 29 wt% and less than 100 wt% of R1123.

In an embodiment, the greater preferred compositions 1246 may include further greater preferred compositions 1248 as shown in Figure 13. The properties of the further greater preferred compositions 1248 include having a burning velocity of at or less than 15 cm/s and at or about or greater than 90% of the capacity of R410A. The further greater preferred compositions 1248 include at or about 37 wt%, or less than 37 wt% and greater than 0 wt% of R1132(E); at or about 28 wt%, or less than 28 wt% and greater than 0 wt% of R1234yf; and at or about 37 wt%, or greater than 37 wt% and less than 100 wt% of R1123.

In an embodiment, the further greater preferred compositions 1248 may include even further greater preferred compositions 1250 as shown in Figure 13. The properties of the even further greater preferred compositions 1250 include having a burning velocity of at or less than 15 cm/s and at or about or greater than 95% of the capacity of R410A. The even further greater preferred compositions 1250 include at or about 36 wt%, or less than 36 wt% and greater than 0 wt% of R1132(E); at or about 22 wt%, or less than 22 wt% and greater than 0 wt% of R1234yf; and at or about 44 wt%, or greater than 44 wt% and less than 100 wt% of R1123.

Figure 13 includes a first hatched area 1260. The compositions in the first hatched area 1260 have a temperature glide above 5K. In some embodiments, a set of desired properties may include the lower temperature glide (e.g., a temperature glide of at or below 5K). In such embodiments, desired compositions may be selected from the compositions illustrated in Figure 13 (e.g., useful compositions 1240, preferred compositions 1242, further preferred compositions 1244, greater preferred compositions 1246, further greater preferred compositions 1248) and described with respect to Figure 13 so as to omit those compositions within the first hatched area 1260.

Figure 13 also includes a second hatched area 1262. The compositions in the second hatched area 1262 have capacity of greater than 110% of the capacity of R410A. In some embodiments, a set of desired properties may include a capacity more similar to the capacity of R410A (e.g., a capacity that is not greater than 110% of the capacity of R410A). In such embodiments, desired compositions may be selected from the compositions illustrated in Figure 13 (e.g., useful compositions 1240, preferred compositions 1242, further preferred compositions 1244, greater preferred compositions 1246, further greater preferred compositions 1248, even further greater preferred compositions 1250) and described with respect to Figure 13 so as to omit those compositions within the second hatched area 1262. For example, a lower limit of R1234yf in such desired compositions is at or about 3 wt%.

Figure 13 also includes shaded area 1270. The compositions in the shaded area 1270 have a BV of at or less than 10 cm/sec. In some embodiments, a set of desired properties may include the lower BV provided by the compositions within the shaded area 1270 (e.g., a BV that is at or less than 10 cm/s). In such embodiments, desired compositions may be selected from the compositions illustrated in Figure 13 (e.g., useful compositions 1240, preferred compositions 1242, further preferred compositions 1244, greater preferred compositions 1246, further greater preferred compositions 1248, even further greater preferred compositions 1250) and described with respect to Figure 13 that are within the shaded area 1270.

For example, such desired compositions of the useful refrigerant compositions 1240 include at or about 28 wt%, or less than 28 wt% and greater than 0 wt% of R1132(E); at or about 82 wt%, or less than 82 wt% and greater than 0 wt% of R1234yf; and greater than 0 wt% and less than 100 wt% of R1123. For example, such desired compositions of the preferred compositions 1242 include at or about 23 wt%, or less than 23 wt% and greater than 0 wt% of R1132(E); at or about 46 wt%, or less than 46 wt% and greater than 0 wt% of R1234yf; and at or about 31 wt%, or greater than 31 wt% and less than 100 wt% of R1123. For example, such desired compositions of the further preferred compositions 1244 include at or about 21 wt%, or less than 21 wt% and greater than 0 wt% of R1132(E); at or about 40 wt%, or less than 40 wt% and greater than 0 wt% of R1234yf; and at or about 31 wt%, or greater than 31 wt% and less than 100 wt% of R1123. For example, such desired compositions of the greater preferred compositions 1246 include at or about 20 wt%, or less than 20 wt% and greater than 0 wt% of R1132(E); at or about 34 wt%, or less than 34 wt% and greater than 0 wt% of R1234yf; and at or about 29 wt%, or greater than 47 wt% and less than 100 wt% of R1123. For example, such desired compositions of the further greater preferred compositions 1248 include at or about 19 wt%, or less than 19 wt% and greater than 0 wt% of R1132(E); at or about 28 wt%, or less than 28 wt% and greater than 0 wt% of R1234yf; and at or about 55 wt%, or greater than 55 wt% and less than 100 wt% of R1123. For example, such desired compositions of the even further greater preferred compositions 1250 include at or about 18 wt%, or less than 18 wt% and greater than 0 wt% of R1132(E); at or about 22 wt%, or less than 22 wt% and greater than 0 wt% of R1234yf; and at or about 62 wt%, or greater than 62 wt% and less than 100 wt% of R1123.

In some embodiments, a set of desired properties may include having a BV of 10 cm/s and a temperature glide of at or less than 5K. In such embodiments, desired compositions may be selected from the compositions illustrated in Figure 13 (e.g., useful compositions 1240, greater preferred compositions 1246, further greater preferred compositions 1248, even further greater preferred compositions 1250) and described with respect to Figure 13 that are within the shaded area 1270 and outside of the hatched area 1260. It will be appreciated that ranges for such desired compositions may be formed using end points for ranges described for the compositions illustrated in Figure 13 and/or described for compositions in the shaded area 1260 and/or for compositions the hatched area 1260.

In some embodiments, a set of desired properties for a refrigerant composition may include a different BV than discussed above, a different capacity then discussed above, different temperature glide than discussed above, and/or an OEL. In an embodiment, a BV of at or greater than 5 cm/s may be desired. In an embodiment, a temperature glide that is at or less than 6K may be desired. In an embodiment, a temperature glide that is at or less than 4K may be desired. In an embodiment, a temperature glide that is at or less than 3K may be desired. In an embodiment, a temperature glide that is at or less than 2K may be desired. In an embodiment, a capacity at or about or greater than 100% of the capacity of R410A may be desired. In an embodiment, an OEL of at or greater than 400ppm may be desired. In an embodiment, an OEL of at or greater than 300ppm may be desired. In an embodiment, an OEL of at or greater than 200ppm may be desired. In an embodiment, an OEL of at or greater than 100ppm may be desired. It should be appreciated that the matrix 1200 in Figure 13 may be used to further select compositions/ranges with the desired BV, capacity, OEL, and/or temperature glide. For example, the different ranges of compositions discussed above with respect to Figure 13 may be modified/selected based on Figure 13 so as to have ranges of R1132(E), R1123, and R1234yf with the desired properties (e.g., GWP, OEL, capacity, and/or temperature glide). It is further appreciated that the selection described is illustrative and not limited to the selection criteria described above.

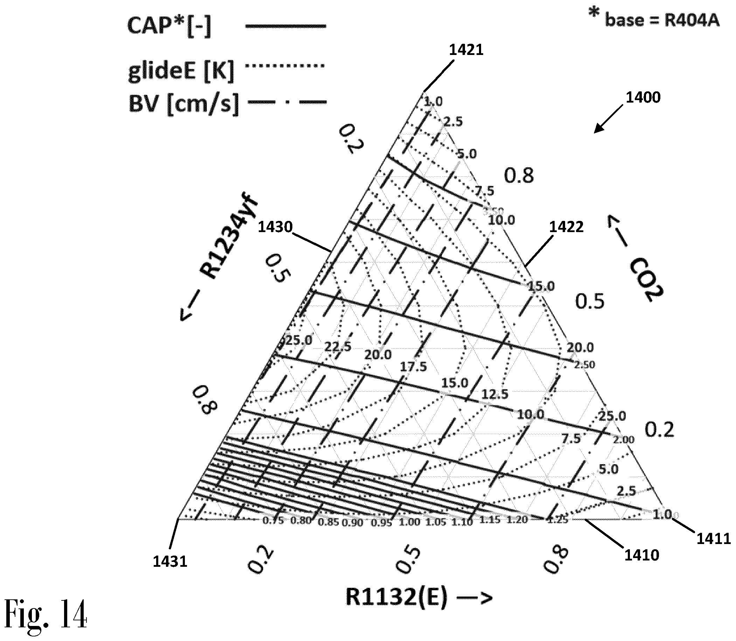

Figure 14 is a matrix 1400 that illustrates refrigerant compositions that include R1132(E), R1123, and CO₂, according to an embodiment. As shown in Figure 14, each side 1410, 1420, 1430 of the triangle can correspond to weight percentages (wt%) of R1132(E), CO₂, and R1234yf, respectively. Each vertex 1411, 1421, 1431 corresponds to a composition of 100% R1132(E), CO₂, and R1234yf, respectively. For example, represented at 1411, the refrigerant composition includes 100% of R1132(E); at 1421, the refrigerant composition includes 100% of CO₂; and at 1431, the refrigerant composition includes 100% of R1234yf. The properties (e.g., temperature glide, BV, and/or capacity relative to R404A) of a refrigerant composition with a weight percent of R1132(E), CO₂, and R1234yf can be estimated using the matrix 1400. Properties of the compositions for the matrix 1400 can be estimated or determined using a thermodynamic model and/or experimental results.

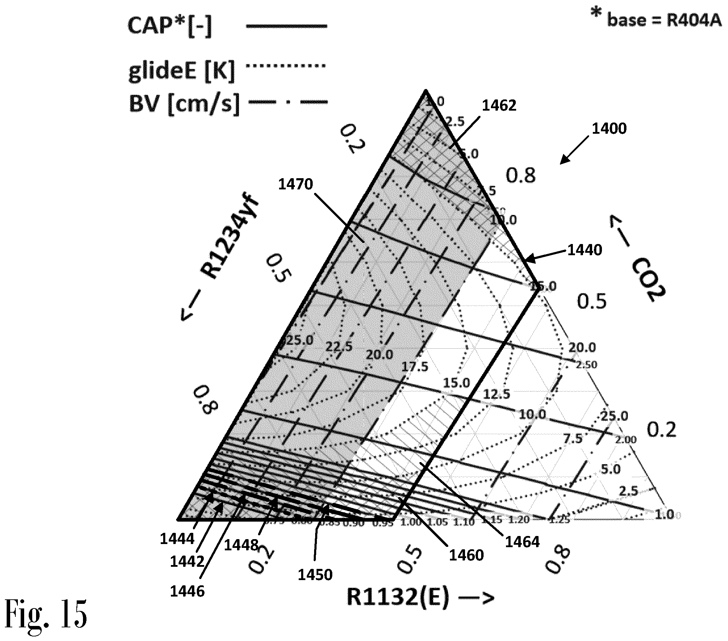

The matrix 1400 of Figure 14 includes one or more lines that represent properties of the refrigerant compositions (e.g., capacity relative to R404A, temperature glide, and BV) with respect to the weight percentages of R1132(E), CO₂, and R1234yf, respectively. Figure 15 is the matrix 1400 of Figure 14 illustrated to show se0lected refrigerant compositions, according to an embodiment. As shown in Figure 15, the refrigerant compositions can include R1132(E), CO₂, and R1234yf. The refrigerant compositions can be selected based on one or more of the refrigerant composition properties such as the capacity relative to R404A, temperature glide, and/or BV.

In an embodiment, a desired set of properties of a useful refrigerant composition includes having a burning velocity of at or less than 15 cm/s. Based on these desired properties, a range of useful refrigerant compositions 1440 is shown in the matrix 1400 of Figure 15. The useful refrigerant compositions 1440 include at or about 46 wt%, or less than 46 wt% and greater than 0 wt% of R1132(E); greater than 0 wt% and less than 100 wt% of R1234yf; and greater than 0 wt% and less than 100 wt% of CO₂.

In an embodiment, the useful compositions 1440 may include preferred compositions 1442 as shown in Figure 15. The properties of the preferred compositions 1442 include having a BV of at or less than 15 cm/s and at or about or greater than 75% of the capacity of R404A. The preferred compositions 1442 include at or about 46 wt%, or less than 46 wt% and greater than 0 wt% of R1132(E); at or about 94 wt%, or less than 94 wt% and greater than 0 wt% of R1234yf; and greater than 0 wt% and less than 100 wt% of CO₂.

In an embodiment, the preferred compositions 1442 may include further preferred compositions 1444 as shown in Figure 15. The properties of the further preferred compositions 1444 include having a BV of at or less than 15 cm/s and at or about or greater than 80% of the capacity of R404A. The further preferred compositions 1444 include at or about 46 wt%, or less than 46 wt% and greater than 0 wt% of R1132(E); at or about 92 wt%, or less than 92 wt% and greater than 0 wt% of R1234yf; and greater than 0 wt% and less than 100 wt% of CO₂.

In an embodiment, the further preferred compositions 1444 may include greater preferred compositions 1446 as shown in Figure 15. The properties of the greater preferred compositions 1446 include having a BV of at or less than 15 cm/s and at or about or greater than 85% of the capacity of R404A. The greater preferred compositions 1446 include at or about 46 wt%, or less than 46 wt% and greater than 0 wt% of R1132(E); at or about 91 wt%, or less than 91 wt% and greater than 0 wt% of R1234yf; and greater than 0 wt% and less than 100 wt% of CO₂.

In an embodiment, the greater preferred compositions 1446 may include further greater preferred compositions 1448 as shown in Figure 15. The properties of the further greater preferred compositions 1448 include having a BV of at or less than 15 cm/s and at or about or greater than 90% of the capacity of R404A. The further greater preferred compositions 1448 include at or about 46 wt%, or less than 46 wt% and greater than 0 wt% of R1132(E); at or about 89 wt%, or less than 89 wt% and greater than 0 wt% of R1234yf; and greater than 0 wt% and less than 100 wt% of CO₂.

In an embodiment, the further greater preferred compositions 1448 may include even further greater preferred compositions 1450 as shown in Figure 15. The properties of the even further greater preferred compositions 1450 include having a BV of at or less than 15 cm/s and at or about or greater than 95% of the capacity of R404A. The even further greater preferred compositions 1450 include at or about 46 wt%, or less than 46 wt% and greater than 0 wt% of R1132(E); at or about 88 wt%, or less than 88 wt% and greater than 0 wt% of R1234yf; and greater than 0 wt% and less than 100 wt% of CO₂.

Figure 15 also includes a first hatched area 1460 and a second hatched area 1462. Compositions in the first and second hatched areas 1460, 1462 have a temperature glide of at or less than 10K. In some embodiments, a set of desired properties may include the lower temperature glide provided by the compositions within the first and second hatched areas 1460, 1462 (e.g., a temperature glide at or less than 10K). In such embodiments, desired compositions may be selected from the compositions illustrated in Figure 15 (e.g., useful compositions 1440, preferred compositions 1442, further preferred compositions 1444, greater preferred compositions 1446, further greater preferred compositions 1448, even further greater preferred compositions 1450) and described with respect to Figure 15 that are within the first and second hatched areas 1460, 1462. For example, such desired compositions have at or about 54%, greater than 54 wt% and less than 100 wt%, at or about 11 wt%, or less than 11 wt% and greater than 0 wt% of CO₂; at or about 15 wt%, less than 15 wt% and greater than 0 wt%, at or about 45 wt%, or greater than 45 wt% and less than 100 wt% of R1234yf.

Figure 15 also includes a third hatched area 1464. Compositions in in the first and third hatched areas 1460, 1464 have a temperature glide of at or less than 15K and at or less than 200% of the capacity of R404A. In some embodiments, a set of desired properties may include the lower temperature glide and more similar R404A capacity provided by the compositions within the first and third hatched areas 1460, 1464 (e.g., a temperature glide at or less than 15K and a capacity that is at or less than 200% of the capacity of R404A). In such embodiments, desired compositions may be selected from the compositions illustrated in Figure 15 (e.g., useful compositions 1440, preferred compositions 1442, further preferred compositions 1444, greater preferred compositions 1446, further greater preferred compositions 1448, even further greater preferred compositions 1450) and described with respect to Figure 15 that are within the first and third hatched areas 1460, 1464. For example, an upper limit of R1132(E) in such desired compositions is at or about 45 wt%, a lower limit of R1234yf in such desired compositions is at or about 27 wt%, and an upper limit of CO₂ in such desired compositions is at or about 29 wt%.

Compositions in the first hatched area 1460 have a temperature glide of at or less than 10K and at or about or less than 150% of the capacity of R404A. In some embodiments, a set of desired properties may include the lower temperature glide and even more similar R40A capacity provided by the compositions within the first hatched area 1460 (e.g., a temperature glide at or less than 10K and a capacity that is at or about or less than 150% of the capacity of R404A). In such embodiments, desired compositions may be selected from the compositions illustrated in Figure 15 (e.g., useful compositions 1440, preferred compositions 1442, further preferred compositions 1444, greater preferred compositions 1446, further greater preferred compositions 1448, even further greater preferred compositions 1450) and described with respect to Figure 15 that are within the first hatched area 1460. For example, a lower limit of R1234yf in such desired compositions is at or about 45 wt%, and an upper limit of CO₂ in such desired compositions is at or about 11 wt%.

Figure 15 also includes shaded area 1470. The compositions in the shaded area 1470 have a BV of at or less than 10 cm/sec. In some embodiments, a set of desired properties may include the lower BV provided by the compositions within the shaded area 1470 (e.g., a BV that is at or less than 10 cm/s). In such embodiments, desired compositions may be selected from the compositions illustrated in Figure 15 (e.g., useful compositions 1440, preferred compositions 1442, further preferred compositions 1444, greater preferred compositions 1446, further greater preferred compositions 1448, even further greater preferred compositions 1450) and described with respect to Figure 15 that are within the shaded area 1470.

For example, such desired compositions of the useful refrigerant compositions 1440 include at or about 28 wt%, or less than 28 wt% and greater than 0 wt% of R1132(E); greater than 0 wt% and less than 100 wt% of R1234yf; and greater than 0 wt% and less than 100 wt% of CO₂. For example, such desired compositions of the preferred compositions 1442 include at or about 28 wt%, or less than 28 wt% and greater than 0 wt% of R1132(E); at or about 94 wt%, or less than 94 wt% and greater than 0 wt% of R1234yf; and greater than 0 wt% and less than 100 wt% of CO₂. For example, such desired compositions of the further preferred compositions 1444 include at or about 28 wt%, or less than 28 wt% and greater than 0 wt% of R1132(E); at or about 92 wt%, or less than 92 wt% and greater than 0 wt% of R1234yf; and greater than 0 wt% and less than 100 wt% of CO₂. For example, such desired compositions of the greater preferred compositions 1446 include at or about 28 wt%, or less than 28 wt% and greater than 0 wt% of R1132(E); at or about 91 wt%, or less than 91 wt% and greater than 0 wt% of R1234yf; and at or about 1 wt%, or greater than 1 wt% and less than 100 wt% of CO₂. For example, such desired compositions of the further greater preferred compositions 1448 include at or about 28 wt%, or less than 28 wt% and greater than 0 wt% of R1132(E); at or about 89 wt%, or less than 89 wt% and greater than 0 wt% of R1234yf; and at or about 3 wt%, or greater than 3 wt% and less than 100 wt% of CO₂. For example, such desired compositions of the even further greater preferred compositions 1450 include at or about 28 wt%, or less than 28 wt% and greater than 0 wt% of R1132(E); at or about 88 wt%, or less than 88 wt% and greater than 0 wt% of R1234yf; and at or about 4 wt%, or greater than 4 wt% and less than 100 wt% of CO₂.

In some embodiments, a set of desired properties may include having a BV of 10 cm/s or less and a temperature glide of 10K or less. In such embodiments, desired compositions may be selected from the compositions illustrated in Figure 15 (e.g., useful compositions 1440, preferred compositions 1442, further preferred compositions 1444, greater preferred compositions 1446, further greater preferred compositions 1448, even further greater preferred compositions 1450) and described with respect to Figure 15 that are within both the first and second hatched areas 1460, 1462 and the shaded area 1470. For example, such desired compositions have at or about 65%, greater than 65 wt% and less than 100 wt%, at or about 19 wt%, or less than 19 wt% and greater than 0 wt% of CO₂; at or about 15 wt%, less than 15 wt% and greater than 0 wt%, at or about 53 wt%, or greater than 53 wt% and less than 100 wt% of R1234yf; and at or about 31 wt%, or less 31 wt% and greater than 0 wt% of R1123ze(E).

In some embodiments, a set of desired properties may include having a BV of 10 cm/s or less, a temperature glide of 15K or less, and at or about or less than 200% of the capacity of R404A. In such embodiments, desired compositions may be selected from the compositions illustrated in Figure 15 (e.g., useful compositions 1440, preferred compositions 1442, further preferred compositions 1444, greater preferred compositions 1446, further greater preferred compositions 1448, even further greater preferred compositions 1450) and described with respect to Figure 15 that are within both the first and third hatched areas 1460, 1464 and the shaded area 1470. For example, an upper limit of R1234ze(E) in such embodiments is at or about 28 wt%, a lower limit of R1234yf in such desired compositions is at or about 53 wt%, and an upper limit of CO₂ in such desired compositions is at or about 19 wt%.

In some embodiments, a set of desired properties may include having a BV of 10 cm/s or less, a temperature glide of 10K or less, and at or about or less than 150% of the capacity of R404A. In such embodiments, desired compositions may be selected from the compositions illustrated in Figure 15 (e.g., useful compositions 1440, preferred compositions 1442, further preferred compositions 1444, greater preferred compositions 1446, further greater preferred compositions 1448, even further greater preferred compositions 1450) and described with respect to Figure 15 that are within both the first hatched area 1460 and the shaded area 1470.

For example, such desired compositions of the useful refrigerant compositions 1440 include at or about 28 wt%, or less than 28 wt% and greater than 0 wt% of R1132(E); at or about 63 wt%, or greater than 63 wt% and less than 100 wt% of R1234yf; and at or about 11 wt%, or less than 11 wt% and greater than 0 wt% of CO₂. For example, such desired compositions of the preferred compositions 1442 include at or about 28 wt%, or less than 28 wt% and greater than 0 wt% of R1132(E); at or about 63 - 94 wt% of R1234yf; and at or about 11 wt%, or less than 11 wt% and greater than 0 wt% of CO₂. For example, such desired compositions of the further preferred compositions 1444 include at or about 28 wt%, or less than 28 wt% and greater than 0 wt% of R1132(E); at or about 63 - 92 wt% of R1234yf; and at or about 11 wt%, or less than 11 wt% and greater than 0 wt% of CO₂. For example, such desired compositions of the greater preferred compositions 1446 include at or about 28 wt%, or less than 28 wt% and greater than 0 wt% of R1132(E); at or about 63 - 91 wt% of R1234yf; and at or about 11 wt%, or less than 11 wt% and greater than 0 wt% of CO₂. For example, such desired compositions of the further greater preferred compositions 1448 include at or about 2 - 28 wt% of R1132(E); at or about 63 - 88 wt% of R1234yf; and at or about 11 wt%, or less than 11 wt% and greater than 0 wt% of CO₂. For example, such desired compositions of the even further greater preferred compositions 1450 include at or about 9-28 wt% of R1132(E); at or about 63 - 82 wt% of R1234yf; and at or about 9 wt%, or less than 9 wt% and greater than 0 wt% of CO₂.

In some embodiments, a set of desired properties for a refrigerant composition may include a different BV than discussed above, a different capacity then discussed above, and/or a different temperature glide then discussed above. In an embodiment, a BV of at or less than 5 cm/sec may be desired. In an embodiment, a temperature glide that is at or less than 20K may be desired. In an embodiment, a temperature glide that is at or less than 15K may be desired. In an embodiment, a temperature glide that is at or less than 12.5K may be desired. In an embodiment, a capacity at or about or greater than 100% of the capacity of R404A may be desired. In an embodiment, a capacity at or about or less than 250% of the capacity of R404A may be desired. In an embodiment, a capacity at or about or less than 200% of the capacity of R404A may be desired. In an embodiment, a capacity at or about or less than 150% of the capacity of R404A may be desired. In an embodiment, a capacity at or about or less than 125% of the capacity of R404A may be desired. It should be appreciated that the matrix 1400 in Figure 15 may be used to further select compositions/ranges with the desired BV, capacity, and/or temperature glide. For example, the different ranges of compositions discussed above with respect to Figure 15 may be modified/selected based on Figure 15 so as to have ranges of R1132(E), R1123, and CO₂ with the desired properties (e.g., GWP, capacity, and/or temperature glide). It is further appreciated that the selection described is illustrative and not limited to the selection criteria described above. It is further appreciated that the selection described is illustrative and not limited to the selection criteria described above.

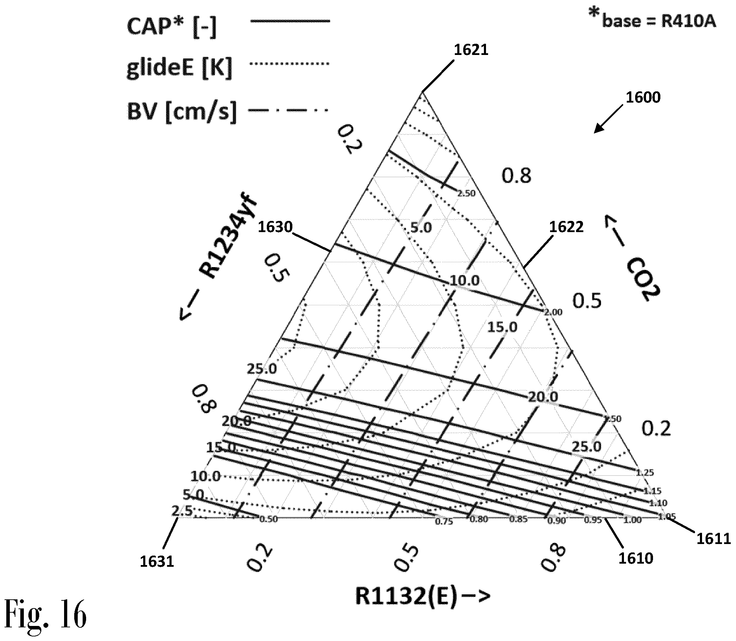

Figure 16 is a matrix 1600 that illustrates refrigerant compositions that include R1132(E), CO₂, and R1234yf, according to an embodiment. Comparing to the matrix 1400 of Figure 14, the capacity of the refrigerant compositions in the matrix 1600 is relative to the capacity of R410A. Referring to Figure 16, the matrix 1600 shows plots of BV, temperature glide, and capacity relative to R410A of a refrigerant composition as a function of the weight percentages of R1132(E), CO₂, and R1234yf. In an embodiment, refrigerant compositions comprising R1132(E), CO₂, and R1234yf can be selected based on BV, temperature glide, and capacity relative to R410A based on Figure 16. As similarly described above for the matrix 1400, the matrix 1600 in Figure 16 is a triangle that has sides that correspond to weight percentages (wt%) of R1132(E), R1234yf, and R32, respectively and vertexes that correspond to a composition of 100% R1132(E), 100% CO₂, and 100% R1234yf, respectively.

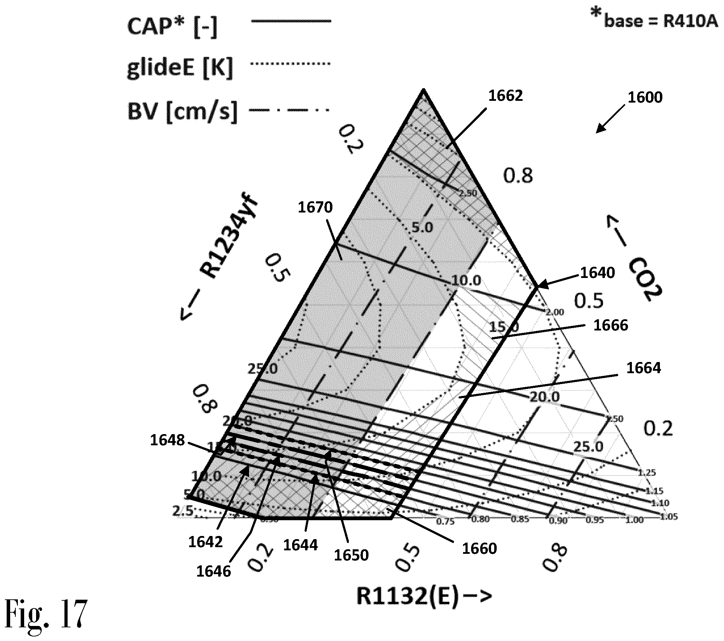

Figure 17 is the matrix 1600 of Figure 16 illustrated to show selected refrigerant compositions, according to an embodiment. As shown in Figure 16, the refrigerant compositions can include R1132(E), CO₂, and R1234yf. The refrigerant compositions can be selected based on one or more of the refrigerant composition properties such as the capacity relative to R410A, temperature glide, and/or BV.

In an embodiment, a desired set of properties of a useful refrigerant composition includes having a burning velocity of at or less than 15 cm/s and at or about or greater than 50% of the capacity of R410A. Based on these desired properties, a range of useful refrigerant compositions 1640 is shown in the matrix 1600 of Figure 17. The useful refrigerant compositions 1640 include at or about 46 wt%, or less than 46 wt% and greater than 0 wt% of R1132(E); at or about 95 wt%, or less than 95 wt% and greater than 0 wt% of R1234yf; and greater than 0 wt% and less than 100 wt% of CO₂.

In an embodiment, the useful compositions 1640 may include preferred compositions 1642 as shown in Figure 17. The properties of the preferred compositions 1642 include having a burning velocity of at or less than 15 cm/s and at or about or greater than 75% of the capacity of R410A. The preferred compositions 1642 include at or about 46 wt%, or less than 46 wt% and greater than 0 wt% of R1132(E); at or about 85 wt%, or less than 85 wt% and greater than 0 wt% of R1234yf; and at or about 3 wt%, or greater than 3 wt% and less than 100 wt% of CO₂.

In an embodiment, the preferred compositions 1642 may include further preferred compositions 1644 as shown in Figure 17. The properties of the further preferred compositions 1644 include having a burning velocity of at or less than 15 cm/s and at or about or greater than 80% of the capacity of R410A. The further preferred compositions 1644 include at or about 46 wt%, or less than 46 wt% and greater than 0 wt% of R1132(E); at or about 84 wt%, or less than 84 wt% and greater than 0 wt% of R1234yf; and at or about 5 wt%, or greater than 5 wt% and less than 100 wt% of CO₂.

In an embodiment, the further preferred compositions 1644 may include greater preferred compositions 1646 as shown in Figure 17. The properties of the greater preferred compositions 1646 include having a burning velocity of at or less than 15 cm/s and at or about or greater than 85% of the capacity of R410A. The greater preferred compositions 1646 include at or about 46 wt%, or less than 46 wt% and greater than 0 wt% of R1132(E); at or about 82 wt%, or less than 82 wt% and greater than 0 wt% of R1234yf; and at or about 7 wt%, or greater than 7 wt% and less than 100 wt% of CO₂.

In an embodiment, the greater preferred compositions 1646 may include further greater preferred compositions 1648 as shown in Figure 17. The properties of the further greater preferred compositions 1648 include having a burning velocity of at or less than 15 cm/s and at or about or greater than 90% of the capacity of R410A. The further greater preferred compositions 1648 include at or about 46 wt%, or less than 46 wt% and greater than 0 wt% of R1132(E); at or about 80 wt%, or less than 80 wt% and greater than 0 wt% of R1234yf; and at or about 9 wt%, or greater than 9 wt% and less than 100 wt% of CO₂.

In an embodiment, the further greater preferred compositions 1650 may include even further greater preferred compositions 1650 as shown in Figure 17. The properties of the even further greater preferred compositions 1650 include having a burning velocity of at or less than 15 cm/s and at or about or greater than 95% of the capacity of R410A. The even further greater preferred compositions 1650 include at or about 46 wt%, or less than 46 wt% and greater than 0 wt% of R1132(E); at or about 78 wt%, or less than 78 wt% and greater than 0 wt% of R1234yf; and at or about 11 wt%, or greater than 11 wt% and less than 100 wt% of CO₂.

Figure 17 also includes a first hatched area 1660 and a second hatched area 1662. Compositions in the first and second hatched areas 1660, 1662 have a temperature glide of at or less than 10K. In some embodiments, a set of desired properties may include the lower temperature glide provided by the compositions within the first and second hatched areas 1660, 1662 (e.g., a temperature glide at or less than 10K). In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within the first and second hatched areas 1460, 1462. For example, such desired compositions have at or about 54 - 95 wt%, at or about 11 wt%, or less than 11 wt% and greater than 0 wt% of CO₂; at or about 15 wt%, less than 15 wt% and greater than 0 wt%, at or about 45 wt%, or greater than 45 wt% and less than 100 wt% of R1234yf.

Figure 17 also includes a third hatched area 1664 and a fourth hatched area 1666. Compositions in in the first, third, and fourth hatched areas 1660, 1664, 1666 have a temperature glide of at or less than 15K and at or less than 200% of the capacity of R410A. In some embodiments, a set of desired properties may include the lower temperature glide and the more similar R404A capacity provided by the compositions within the first, third, and fourth hatched areas 1660, 1464, 1466 (e.g., a temperature glide at or less than 15K and a capacity that is at or less than 200% of the capacity of R410A). In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within the first, third, and fourth hatched areas 1660, 1664, 1666.

For example, such desired compositions of the useful refrigerant compositions 1640 include at or about 46 wt%, or less than 46 wt% and greater than 0 wt% of R1132(E); at or about 4 - 95 wt% of R1234yf; and at or about 56 wt%, or less than 56 wt% and greater than 0 wt% of CO₂. For example, such desired compositions of the preferred compositions 1642 include at or about 46 wt%, or less than 46 wt% and greater than 0 wt% of R1132(E); at or about 4 - 85 wt% of R1234yf; and at or about 3 - 56 wt% of CO₂. For example, such desired compositions of the further preferred compositions 1644 include at or about 3 - 46 wt% of R1132(E); at or about 4 - 82 wt% of R1234yf; and at or about 5 - 56 wt% of CO₂. For example, such desired compositions of the greater preferred compositions 1646 include at or about 9 - 46 wt% of R1132(E); at or about 4 - 75 wt% of R1234yf; and at or about 7 - 56 wt% of CO₂. For example, such desired compositions of the further greater preferred compositions 1648 include at or about 15 - 46 wt% of R1132(E); at or about 4 - 69 wt% of R1234yf; and at or about 9-56 wt% of CO₂. For example, such desired compositions of the even further greater preferred compositions 1650 include at or about 20 - 46 wt% of R1132(E); at or about 4 - 63 wt% of R1234yf; and at or about 11 - 56 wt% of CO₂.

Compositions in the first hatched area 1660 and third hatched area 1664 have a temperature glide of at or less than 10K and at or about or less than 150% of the capacity of R404A. In some embodiments, a set of desired properties may include the lower temperature glide and even more similar R410A capacity provided by the compositions within the first and third hatched areas 1660 (e.g., a temperature glide at or less than 15K and a capacity that is at or about or less than 150% of the capacity of R410A). In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within the first and third hatched area 1660. For example, an upper limit of R1234(E) in such embodiments is at or about 45 wt%, a lower limit of R1234yf in such desired compositions is at or about 53 wt%, and an upper limit of CO₂ in such desired compositions is at or about 33 wt%.

Compositions in the first hatched area have a temperature glide of at or less than 10K and at or about or less than 100% of the capacity of R410A. In some embodiments, a set of desired properties may include the lower temperature glide and even more similar R410A capacity provided by the compositions within the first hatched area 1660 (e.g., a temperature glide at or less than 10K and a capacity that is at or about or less than 100% of the capacity of R410A). In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 16 that are within the first hatched area 1660.

For example, such desired compositions of the useful refrigerant compositions 1640 include at or about 45 wt%, or less than 45 wt% and greater than 0 wt% of R1132(E); at or about 45 - 95 wt% of R1234yf; and at or about 11 wt%, or less than 11 wt% and greater than 0 wt% of CO₂. For example, such desired compositions of the preferred compositions 1642 include at or about 22 - 45 wt% of R1132(E); at or about 45 - 69 wt% of R1234yf; and at or about 3 - 11 wt% of CO₂. For example, such desired compositions of the further preferred compositions 1644 include at or about 29 - 45 wt% of R1132(E); at or about 45 - 62 wt% of R1234yf; and at or about 5-11 wt% of CO₂. For example, such desired compositions of the greater preferred compositions 1646 include at or about 35 -45 wt% of R1132(E); at or about 45 - 56 wt% of R1234yf; and at or about 7-11 wt% of CO₂. For example, such desired compositions of the further greater preferred compositions 1648 include at or about 40 - 45 wt% of R1132(E); at or about 45 - 50 wt% of R1234yf; and at or about 9-11 wt% of CO₂. For example, such desired compositions of the even further greater preferred compositions 1650 include at or about 43 - 45 wt% of R1132(E); at or about 45 - 46 wt% of R1234yf; and at or about 11 wt%, or greater than 11 wt% and less than 100 wt% of CO₂.

Figure 17 also includes shaded area 1670. The compositions in the shaded area 1670 have a BV of at or less than 10 cm/sec. In some embodiments, a set of desired properties may include the lower BV provided by the compositions within the shaded area 1670 (e.g., a BV that is at or less than 10 cm/s). In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within the shaded area 1670.

For example, such desired compositions of the useful refrigerant compositions 1640 include at or about 31 wt%, or less than 31 wt% and greater than 0 wt% of R1132(E); at or about 95 wt%, or less than 95 wt% and greater than 0 wt% of R1234yf; and at or about 7 wt%, or greater than 7 wt% and less than 100 wt% of CO₂. For example, such desired compositions of the preferred compositions 1642 include at or about 31 wt%, or less than 31 wt% and greater than 0 wt% of R1132(E); at or about 85 wt%, or less than 85 wt% and greater than 0 wt% of R1234yf; and at or about 9 wt%, or greater than 9 wt% and less than 100 wt% of CO₂. For example, such desired compositions of the further preferred compositions 1644 include at or about 31 wt%, or less than 31 wt% and greater than 0 wt% of R1132(E); at or about 84 wt%, or less than 84 wt% and greater than 0 wt% of R1234yf; and at or about 11 wt%, or greater than 11 wt% and less than 100 wt% of CO₂. For example, such desired compositions of the further greater preferred compositions 1648 include at or about 31 wt%, or less than 31 wt% and greater than 0 wt% of R1132(E); at or about 80 wt%, or less than 80 wt% and greater than 0 wt% of R1234yf; and at or about 13 wt%, or greater than 13 wt% and less than 100 wt% of CO₂. For example, such desired compositions of the even further greater preferred compositions 1650 include at or about 31 wt%, or less than 31 wt% and greater than 0 wt% of R1132(E); at or about 78 wt%, or less than 78 wt% and greater than 0 wt% of R1234yf; and at or about 15 wt%, or greater than 15 wt% and less than 100 wt% of CO₂.

In some embodiments, a set of desired properties may include having a BV of 10 cm/s or less and a temperature glide of 10K or less. In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within both the first and second hatched areas 1660, 1662 and the shaded area 1670. In some embodiments, a set of desired properties may include having a BV of 10 cm/s or less, a temperature glide of 15K or less, and at or about or less than 200% of the capacity of R410A. In such embodiments, desired compositions may be selected from the compositions illustrated in Figure 15 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within both the first, third, and fourth hatched areas 1660, 1664, 1666 and the shaded area 1670. In some embodiments, a set of desired properties may include having a BV of 10 cm/s or less, a temperature glide of 15K or less, and at or about or less than 150% of the capacity of R410A. In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within both the first and third hatched areas 1460, 1464 and the shaded area 1470. For example, an upper limit of R1234(E) in such embodiments is at or about 28 wt%, a lower limit of R1234yf in such desired compositions is at or about 53 wt%, and an upper limit of CO₂ in such desired compositions is at or about 19 wt%. In some embodiments, a set of desired properties may include having a BV of 10 cm/s or less, a temperature glide of 10K or less, and at or about or less than 100% of the capacity of R410A. In such embodiments, desired compositions may be selected from the compositions illustrated in Figure 17 (e.g., useful compositions 1640, preferred compositions 1642, further preferred compositions 1644, greater preferred compositions 1646, further greater preferred compositions 1648, even further greater preferred compositions 1650) and described with respect to Figure 17 that are within both the first hatched area 1660 and the shaded area 1670. For example, an upper limit of R1234(E) in such embodiments is at or about 28 wt%, a lower limit of R1234yf in such desired compositions is at or about 63 wt%, and an upper limit of CO₂ in such desired compositions is at or about 9 wt%.

In some embodiments, a set of desired properties for a refrigerant composition may include a different BV than discussed above, a different capacity then discussed above, and/or a different temperature glide then discussed above. In an embodiment, a BV of at or less than 5 cm/sec may be desired. In an embodiment, a temperature glide that is at or less than 20K may be desired. In an embodiment, a temperature glide that is at or less than 15K may be desired. In an embodiment, a temperature glide that is at or less than 12.5K may be desired. In an embodiment, a capacity at or about or greater than 100% of the capacity of R410A may be desired. In an embodiment, a capacity at or about or less than 250% of the capacity of R410A may be desired. In an embodiment, a capacity at or about or less than 200% of the capacity of R410A may be desired. In an embodiment, a capacity at or about or less than 150% of the capacity of R410A may be desired. In an embodiment, a capacity at or about or less than 125% of the capacity of R410A may be desired. It should be appreciated that the matrix 1600 in Figure 17 may be used to further select compositions/ranges with the desired BV, capacity, and/or temperature glide. For example, the different ranges of compositions discussed above with respect to Figure 17 may be modified/selected based on Figure 17 so as to have ranges of R1132(E), R1123, and CO₂ with the desired properties (e.g., GWP, capacity, and/or temperature glide). It is further appreciated that the selection described is illustrative and not limited to the selection criteria described above. It is further appreciated that the selection described is illustrative and not limited to the selection criteria described above.

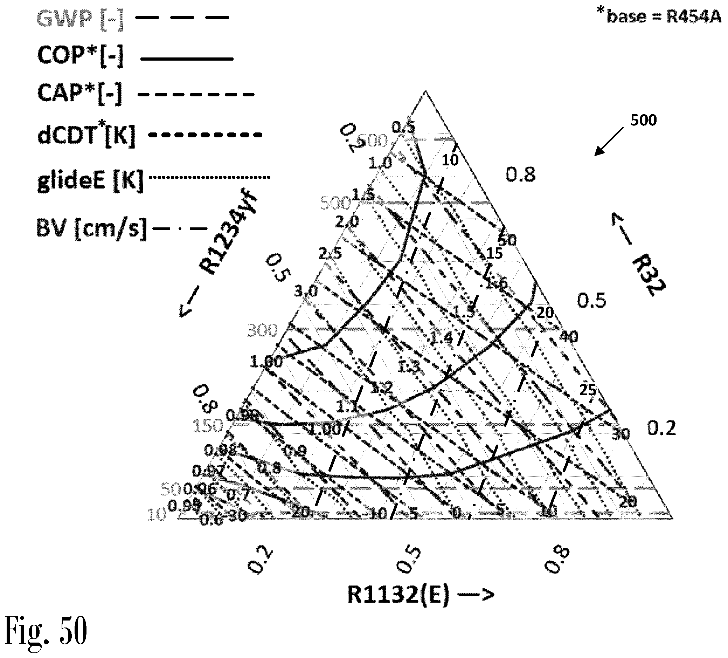

Figure 50 is a matrix 500 that illustrates refrigerant compositions that include R1132(E), R32, and R1234yf, according to an embodiment. Comparing to the matrix 200 of Figures 2 and 3, the capacity of the refrigerant compositions in Figure 50 is relative to the capacity of R454A. Referring to Figure 50, the matrix 500 shows plots of GWP, BV, temperature glide, capacity relative to R454A, COP (coefficient of performance) relative to R454A, and change in compressor discharge temperature (dCDT) relative to R454A of a refrigerant composition as a function of the weight percentages of R1132(E), R32, and R1234yf. In an embodiment, refrigerant compositions comprising R1132(E), R32, and R1234yf can be selected based on GWP, BV, temperature glide, capacity relative to R454A, COP relative to R454A, and dCDT relative to R454A based on Figure 50. As similarly described above for the matrix 200, the matrix 500 in Figure 50 is a triangle that has sides that correspond to weight percentages (wt%) of R1132(E), R1234yf, and R32, respectively and vertexes that correspond to a composition of 100% R1132(E), 100% R1234yf, and 100% R32, respectively.

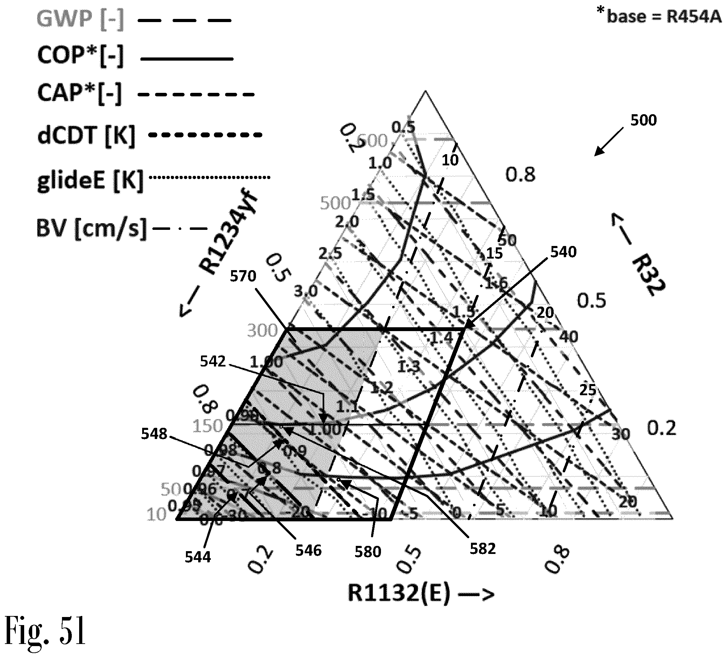

Figure 51 is the matrix 500 of Figure 50 illustrated to show selected refrigerant compositions, according to an embodiment. As shown in Figure 51, the refrigerant compositions can include R1132(E), R32, and R1234yf. The refrigerant compositions can be selected based on one or more of the refrigerant composition properties such as the GWP, BV, temperature glide, capacity relative to R454A, COP relative to R454A, and dCDT relative to R454A.

In an embodiment, a desired set of properties of a useful refrigerant composition includes having a GWP of at or about or less than 300 and a burning velocity of at or less than 15 cm/s. Based on these desired properties, a range of useful refrigerant compositions 540 is shown in the matrix 500 of Figure 51. The useful refrigerant compositions 540 include at or about 43 wt%, or less than 43 wt% and greater than 0 wt% of R1132(E); at or about 20 wt%, or greater than 20 wt% and less than 100 wt% of R1234yf; and at or about 44 wt%, or less than 44 wt% and greater than 0 wt% of R32.

In an embodiment, the useful compositions 540 may include preferred compositions 542 as shown in Figure 51. The properties of the preferred compositions 542 include having a GWP of at or about or less than 150 and a burning velocity of at or less than 15 cm/s. The preferred compositions 542 include at or about 43 wt%, or less than 43 wt% and greater than 0 wt% of R1132(E); at or about 20 wt%, or greater than 20 wt% and greater less 100 wt% of R1234yf; and at or about 22 wt%, or less than 22 wt% and greater than 0 wt% of R32.

In an embodiment, the preferred compositions 542 may include further preferred compositions 544 as shown in Figure 51. The properties of the further preferred compositions 544 include having a GWP of at or about or less than 150, a burning velocity of at or less than 15 cm/s, and at or about or greater than 70% of the capacity of R454A. The further preferred compositions 544 include at or about 43 wt%, or less than 43 wt% and greater than 0 wt% of R1132(E); at or about 20 - 87 wt% of R1234yf; and at or about 22 wt%, or less than 22 wt% and greater than 0 wt% of R32.

In an embodiment, the further preferred compositions 544 may include greater preferred compositions 546 as shown in Figure 51. The properties of the greater preferred compositions 546 include having a GWP of at or about or less than 150, a burning velocity of at or less than 15 cm/s, and at or about or greater than 80% of the capacity of R454A. The greater preferred compositions 546 include at or about 43 wt%, or less than 43 wt% and greater than 0 wt% of R1132(E); at or about 20 - 80 wt% of R1234yf; and at or about 22 wt%, or less than 22 wt% and greater than 0 wt% of R32.

In an embodiment, the greater preferred compositions 546 may include further greater preferred compositions 548 as shown in Figure 51. The properties of the further greater preferred compositions 548 include having a GWP of at or about or less than 150, a burning velocity of at or less than 15 cm/s, and at or about or greater than 90% of the capacity of R454A. The further greater preferred compositions 548 include at or about 8 - 43 wt% of R1132(E); at or about 20 - 80 wt% of R1234yf; and at or about 22 wt%, or less than 22 wt% and greater than 0 wt% of R32.

As shown in Figure 51, the greater preferred compositions 546 may include a first preferred composition 582 and a second preferred composition 582. For example, the first preferred composition 580 and the second preferred composition 582 may be desired for use as replacement for R454A in HVACR system designed for use with R454A. The first preferred composition 580 includes at or about 28 wt% of R1132(E), at or about 68.5 wt% of R1234yf, and at or about 21.5 wt% of R32. The second preferred composition 582 includes at or about 10 wt% of R1132(E), at or about 63 wt% of R1234yf, and at or about 9 wt% of R32.

Figure 51 also includes shaded area 570. In some embodiments, a set of desired properties may include the lower BV provided by the compositions within the shaded area 570 (e.g., a BV that is at or less than 10 cm/s). In such embodiments, desired compositions may be selected from the compositions illustrated in Figure 3 (e.g., useful compositions 540, preferred compositions 542, further preferred compositions 544, greater preferred compositions 546, further greater preferred compositions 548) and described with respect to Figure 51 that are within the shaded area 570.

For example, such desired compositions of the useful refrigerant compositions 540 include at or about 27 wt%, or less than 27 wt% and greater than 0 wt% of R1132(E); at or about 36 wt%, or greater than 36 wt% and less than 100 wt% of R1234yf; and at or about 44 wt%, or less than 44 wt% and greater than 0 wt% of R32.

For example, such desired compositions of the preferred compositions 542 include at or about 27 wt%, or less than 27 wt% and greater than 0 wt% of R1132(E); at or about 5 wt%, or greater than 55 wt% and greater than 100 wt% of R1234yf; and at or about 22 wt%, or less than 22 wt% and greater than 0 wt% of R32.

For example, such desired compositions of further preferred compositions 544 include at or about 27 wt%, or less than 27 wt% and greater than 0 wt% of R1132(E); at or about 36 - 87 wt% of R1234yf; and at or about 22 wt%, or less than 22 wt% and greater than 0 wt% of R32.

For example, such desired compositions of the useful refrigerant compositions greater preferred compositions 546 include at or about 27 wt%, or less than 27 wt% and greater than 0 wt% of R1132(E); at or about 55 - 80 wt% of R1234yf; and at or about 22 wt%, or less than 22 wt% and greater than 0 wt% of R32.

In some embodiments, a set of desired properties for a refrigerant composition may include a different GWP then discussed above, a different capacity then discussed above, a different BV then discussed above, a temperature glide, a COP relative to R454A, and/or a dCDT relative to R454A. In an embodiment, a BV of at or less than 5 cm/s may be desired. In an embodiment, glide that is at or less than 3K may be desired. In an embodiment, a temperature glide that is at or less than 2.5K may be desired. In an embodiment, a temperature glide that is at or less than 2K may be desired. In an embodiment, a GWP of at or about or less than 50 may be desired. In an embodiment, a GWP of at or about or less than 10 may be desired. In an embodiment, a capacity at or about or greater than 100% of the capacity of R404A may be desired. In an embodiment, a capacity at or about or less than 150% of the capacity of R454A may be desired. In an embodiment, a capacity at or about or less than 140% of the capacity of R454A may be desired. In an embodiment, a capacity at or about or less than 130% of the capacity of R404A may be desired. In an embodiment, a capacity at or about or less than 120% of the capacity of R404A may be desired. In an embodiment, a COP that is at or about or greater than 95% (e.g., labeled as "0.95" in Figure 51) of R454A may be desired. In an embodiment, a COP that is at or about or greater than 96% of R454A may be desired. In an embodiment, a COP that is at or about or greater than 97% of R454A may be desired. In an embodiment, a COP that is at or about or greater than 98% of R454A may be desired. In an embodiment, a dCDT relative to R454A of at or about or greater than -20K may be desired. In an embodiment, a dCDT relative to R454A of at or about or greater than -10K may be desired. In an embodiment, a dCDT relative to R454A of at or about or less than 5K may be desired. In an embodiment, a dCDT relative to R454A of at or about or less than 10K may be desired.

It should be appreciated that the matrix 500 in Figure 51 may be used to further select compositions/ranges with the desired GWP, BV, capacity, temperature glide, COP, and/or dCDT. For example, the different ranges of compositions discussed above with respect to Figure 51 may be modified/selected based on Figure 51 so as to have ranges of R1132(E), R32, and R1234yf with the desired properties (e.g., GWP, capacity, BV, temperature glide, COP, and/or dCDT). It is further appreciated that the selection described is illustrative and not limited to the selection criteria described above.

### Refrigerant Compositions including R1132(E), R1234ze(E), and a third refrigerant

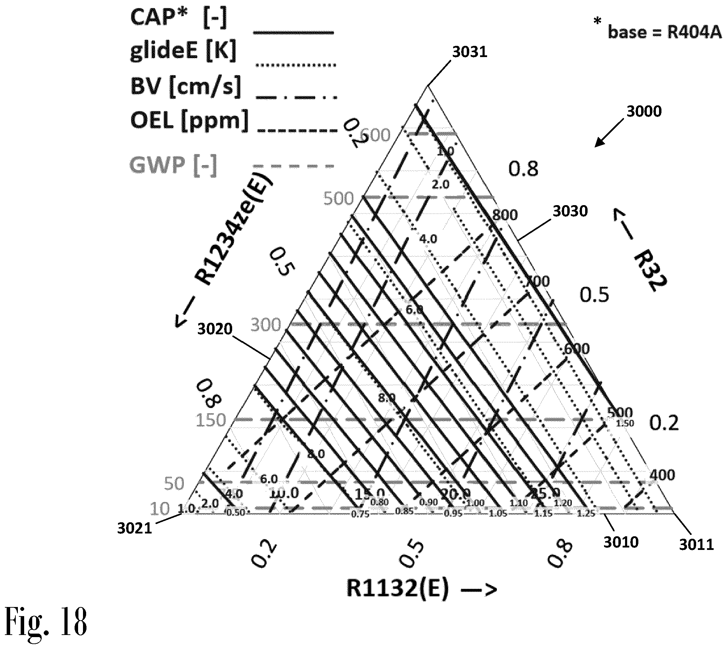

In an embodiment, a refrigerant composition consists of, consists essentially of, or comprises R1132(E), R1234ze(E), and the third refrigerant. Each of Figures 18 - 33 shows a matrix 3000, 3100, 3200, 3300, 3400, 3500, 3600, or 3700 of compositions of R1132(E), R1234ze(E), and a third refrigerant. In each matrix, properties of the refrigerant compositions (e.g., GWP, toxicity, flammability, temperature glide, capacity relative to another refrigerant composition, and/or the like) are plotted as a function of the weight percentage (wt%) of each R1132(E), R1234ze(E), and a third refrigerant. In an embodiment, a method of making a refrigerant composition utilizes one or more of the matrixes of Figures 18 - 33 so that the refrigerant composition has a desired property or properties.

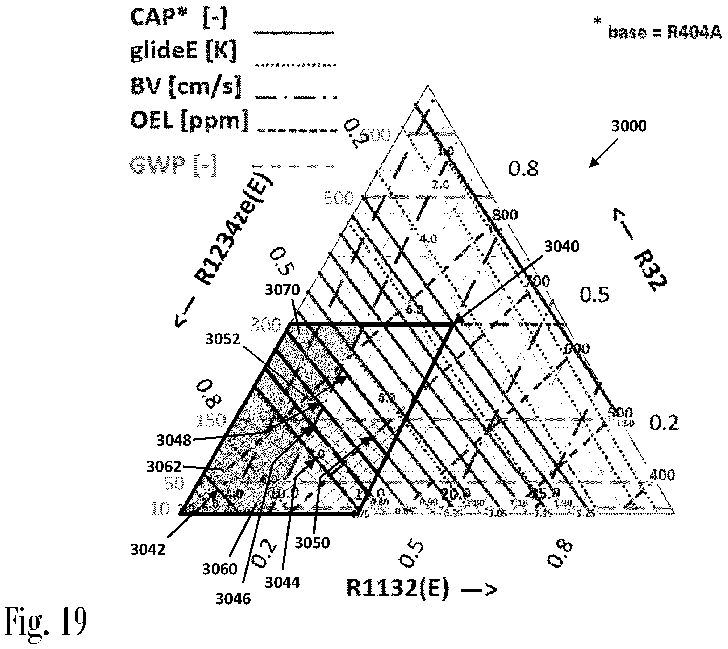

For example, as shown in Figure 18, each side 3010, 3020, 3030 of the triangle can correspond to weight percentages (wt%) of R1132(E), R1234ze(E), and the third refrigerant, respectively. The third refrigerant is R32. Each vertex 3011, 3021, 3031 corresponds to a composition of 100% R1132(E), 100% R1234ze(E), and 100% R32, respectively. The properties (e.g., GWP, toxicity, flammability, temperature glide, and/or capacity relative to R404A) of the refrigerant compositions and the weight percent of R1132(E), R1234ze(E), and R32, can be determined using the matrix 3000. Properties of the compositions represented in the matrix 3000 were determined using a thermodynamic model based on experimental results. Figure 19 shows embodiments of the refrigerant compositions having preferred ranges of weight percentages of R1132(E), R1234ze(E), and R32, respectively, and selected based on one or more desired properties for a refrigerant composition.

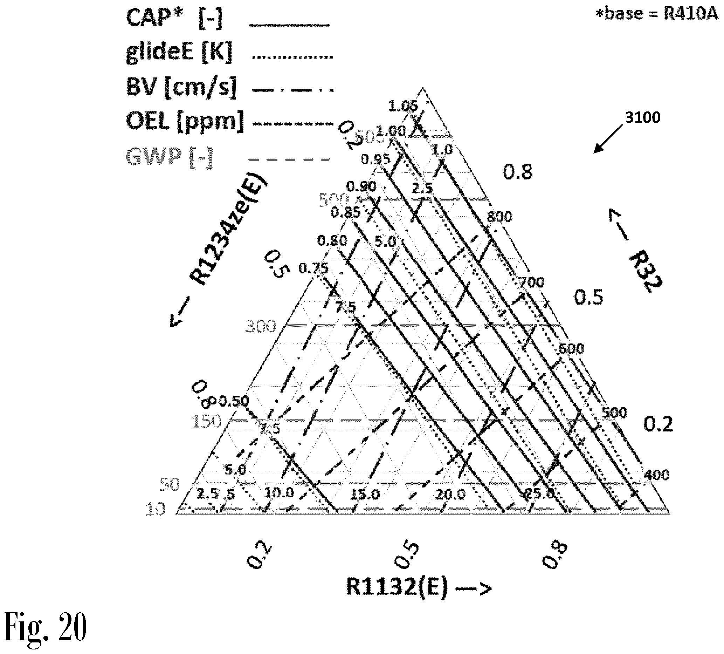

Figures 20 - 33 similarly illustrate refrigerant compositions of R1132(E), R1234ze(E), and a third refrigerant; the properties of the refrigerant compositions according to the weight percentages of R1132(E), R1234ze(E), and the third refrigerant; and/or the preferred ranges.

It is appreciated that the boundary between satisfying the classification of Class 2L and Class 2 can be a BV of 100 mm (i.e., 10 cm) per second determined, for example, based on ASHRAE Standard 34. The BV lines are estimated based on characteristics of the individual components and/or various binary mixtures of the components. Accordingly, the amount of each refrigerant in a composition along each burning velocity line may, for example, vary by about 5 percent in an embodiment. It should be appreciated the compositions and ranges shown and/or described may be updated based on further testing to confirm the location(s) of the burning velocity line(s).

Figures 18 - 21 each show a matrix 3000, 3100 of refrigerant compositions that include R1132(E), R1234ze(E), and R32, according to an embodiment. Referring to Figure 18, the matrix 3000 shows plots of GWP, BV, temperature glide, capacity relative to R404A of a refrigerant composition as a function of the weight percentages of R1132(E), R1234ze(E), and R32. In an embodiment, refrigerant compositions comprising R1132(E), R1234ze(E), and R32 can be selected based on the capacity, temperature glide, BV, and/or GWP based on Figure 18.

Figure 19 is the matrix 3000 of Figure 18 illustrated to show selected refrigerant compositions, according to an embodiment. As shown in Figure 19, the refrigerant compositions include (i.e., consist of, consist essentially of, or comprise) R1132(E), R1234ze(E), and R32. The refrigerant compositions can be selected based on one or more desired refrigerant composition properties such as the capacity relative to R404A, temperature glide, BV, and GWP.

In an embodiment, a desired set of properties of a useful refrigerant composition includes having a GWP of at or about or less than 300 and a burning velocity of at or less than 15 cm/s. Based on these desired properties, a range of useful refrigerant compositions 3040 is shown in the matrix 3000 of Figure 19. The useful refrigerant compositions 3040 include at or about 36 wt%, or less than 36 wt% and greater than 0 wt% of R1132(E); at or about 23 wt%, or greater than 23 wt% and less than 100 wt% of R1234ze(E); and at or about 44 wt%, or less than 44 wt% and greater than 0 wt% of R32.

In an embodiment, the useful compositions 3040 may include preferred compositions 3042 as shown in Figure 19. The properties of the preferred compositions 3042 include having a GWP of at or about or less than 300, a burning velocity of at or less than 15 cm/s, and a capacity at or about or greater than 50% of the capacity of R404A. The preferred compositions 3042 include at or about 36 wt%, or less than 36 wt% and greater than 0 wt% of R1132(E); at or about 23 - 91 wt% of R1234ze(E); and at or about 44 wt%, or less than 44 wt% and greater than 0 wt% of R32.

In an embodiment, the preferred compositions 3042 may include further preferred compositions 3044 as shown in Figure 19. The properties of the further preferred compositions 3044 include having a GWP of at or about or less than 300, a burning velocity of at or less than 15 cm/s, and at or about or greater than 75% of the capacity of R404A. The further preferred compositions 3044 include at or about 36 wt%, or less than 36 wt% and greater than 0 wt% of R1132(E); at or about 23 - 70 wt% of R1234ze(E); and at or about 1 - 44 wt% of R32.

In an embodiment, the further preferred compositions 3044 may include greater preferred compositions 3046 as shown in Figure 19. The properties of the greater preferred compositions 3046 include having a GWP of at or about or less than 300, a burning velocity of at or less than 15 cm/s, and at or about or greater than 80% of the capacity of R404A. The greater preferred compositions 3046 include at or about 35 wt%, or less than 35 wt% and greater than 0 wt% of R1132(E); at or about 23 - 66 wt% of R1234ze(E); and at or about 5-44 wt% of R32.

In an embodiment, the greater preferred compositions 3046 may include further greater preferred compositions 3048 as shown in Figure 19. The properties of the further greater preferred compositions 3048 include having a GWP of at or about or less than 300, a burning velocity of at or less than 15 cm/s, and at or about or greater than 85% of the capacity of R404A. The further greater preferred compositions 3048 include at or about 35 wt%, or less than 35 wt% and greater than 0 wt% of R1132(E); at or about 23 - 62 wt% of R1234ze(E); and at or about 9 - 44 wt% of R32.

In an embodiment, the further greater preferred compositions 3048 may include even further greater preferred compositions 3050 as shown in Figure 19. The properties of the even further greater preferred compositions 3050 include having a GWP of at or about or less than 300, a burning velocity of at or less than 15 cm/s, and at or about or greater than 90% of the capacity of R404A. The even further greater preferred compositions 3050 include at or about 35 wt%, or less than 35 wt% and greater than 0 wt% of R1132(E); at or about 23 - 57 wt% of R1234ze(E); and at or about 14 - 44 wt% of R32.

In an embodiment, the even further greater preferred compositions 3050 may include more further greater preferred compositions 3052 as shown in Figure 19. The properties of the more further greater preferred compositions 3052 include having a GWP of at or about or less than 300, a burning velocity of at or less than 15 cm/s, and at or about or greater than 95% of the capacity of R404A. The more further greater preferred compositions 3052 include at or about 35 wt%, or less than 35 wt% and greater than 0 wt% of R1132(E); at or about 23 - 52 wt% of R1234ze(E); and at or about 18 - 44 wt% of R32.

Figure 19 also includes hatched areas 3060, 3062. The compositions in the hatched areas 3060, 3062 have a GWP of at or about or less than 150. In some embodiments, a set of desired properties may include the lower GWP provided by the compositions within the hatched areas 3060, 3062 (e.g., a GWP that is at or about or less than 150). In such embodiments, desired compositions may be selected from the compositions illustrated in Figure 19 (e.g., useful compositions 3040, preferred compositions 3042, further preferred compositions 3044, greater preferred compositions 3046, further greater preferred compositions 3048, even further greater preferred compositions 3050, more further greater preferred compositions 3052) and described with respect to Figure 19 that are within the hatched areas 3060, 3062.

The useful refrigerant compositions 3040 include at or about 36 wt%, or less than 36 wt% and greater than 0 wt% of R1132(E); at or about 44 wt%, or greater than 44 wt% and less than 100 wt% of R1234ze(E); and at or about 23 wt%, or less than 23 wt% and greater than 0 wt% of R32. The preferred compositions 3042 include at or about 36 wt%, or less than 36 wt% and greater than 0 wt% of R1132(E); at or about 44 - 91 wt% of R1234ze(E); and at or about 22 wt%, or less than 22 wt% and greater than 0 wt% of R32. The further preferred compositions 3044 include at or about 9 - 36 wt% of R1132(E); at or about 44 - 68 wt% of R1234ze(E); and at or about 1 - 22 wt% of R32. The greater preferred compositions 3046 include at or about 15 - 35 wt% of R1132(E); at or about 44 - 63 wt% of R1234ze(E); and at or about 5 - 22 wt% of R32. The further greater preferred compositions 3048 include at or about 20 - 35 wt% of R1132(E); at or about 44 - 58 wt% of R1234ze(E); and at or about 9 - 22 wt% of R32. The even further greater preferred compositions 3050 include at or about 25 - 35 wt% of R1132(E); at or about 44 - 53 wt% of R1234ze(E); and at or about 14 - 22 wt% of R32. The more further greater preferred compositions 3052 include at or about 30 - 35 wt% of R1132(E); at or about 44 - 48 wt% of R1234ze(E); and at or about 18 - 22 wt% of R32.

The hatched areas 3060, 3062 in Figure 19 include a first hatched area 3060 and a second hatched area 3062. The compositions in the first hatched area 3060 have a GWP of at or about or less than 50. In some embodiments, a set of desired properties may include the even lower GWP provided by the compositions within the first hatched area 3060 (e.g., a GWP that is at or about or less than 50). In such embodiments, desired compositions may be selected from the compositions illustrated in Figure 19 (e.g., useful compositions 3040, preferred compositions 3042, further preferred compositions 3044, greater preferred compositions 3046) and described with respect to Figure 19 that are within the first hatched area 3060.

For example, such desired compositions of the useful refrigerant compositions 3040 include at or about 36 wt%, or less than 36 wt% and greater than 0 wt% of R1132(E); at or about 57 wt%, or greater than 57 wt% and less than 100 wt% of R1234ze(E); and at or about 44 wt%, or less than 7 wt% and greater than 0 wt% of R32. For example, such desired compositions of the preferred compositions 3042 include at or about 2 - 36 of R1132(E); at or about 57 - 90 wt% of R1234ze(E); and at or about 7 wt%, or less than 7 wt% and greater than 0 wt% of R32. For example, such desired compositions of the further preferred compositions 3044 include at or about 28 - 36 wt% of R1132(E); at or about 57 - 65 wt% of R1234ze(E); and at or about 1 - 7 wt% of R32. For example, such desired compositions of the greater preferred compositions 3046 include at or about 33 - 35 wt% of R1132(E); at or about 57 - 60 wt% of R1234ze(E); and at or about 5 - 7 wt% of R32.

Figure 19 also includes shaded area 3070. In some embodiments, a set of desired properties may include the lower BV provided by the compositions within the shaded area 3070 (e.g., a BV that is at or less than 10 cm/s). In such embodiments, desired compositions may be selected from the compositions illustrated in Figure 19 (e.g., useful compositions 3040, preferred compositions 3042, further preferred compositions 3044, greater preferred compositions 3046, further greater preferred compositions 3048, even further greater preferred compositions 3050, more further greater preferred compositions 3052) and described with respect to Figure 19 that are within the shaded area 3070.

For example, such desired compositions of the useful refrigerant compositions 3040 include at or about 18 wt%, or less than 18 wt% and greater than 0 wt% of R1132(E); at or about 41 wt%, or greater than 41 wt% and less than 100 wt% of R1234ze(E); and at or about 44 wt%, or less than 44 wt% and greater than 0 wt% of R32. For example, such desired compositions of the preferred compositions 3042 include at or about 18 wt%, or less than 18 wt% and greater than 0 wt% of R1132(E); at or about 41 - 91 wt% of R1234ze(E); and at or about 44 wt%, or less than 44 wt% and greater than 0 wt% of R32. For example, such desired compositions of the further preferred compositions 3044 include at or about 17 wt%, or less than 17 wt% and greater than 0 wt% of R1132(E); at or about 41 - 70 wt% of R1234ze(E); and at or about 16 - 44 wt% of R32. For example, such desired compositions of the greater preferred compositions 3046 include at or about 17 wt%, or less than 17 wt% and greater than 0 wt% of R1132(E); at or about 41 - 66 wt% of R1234ze(E); and at or about 20 - 44 wt% of R32. For example, such desired compositions of the further greater preferred compositions 3048 include at or about 16 wt%, or less than 16 wt% and greater than 0 wt% of R1132(E); at or about 41 - 62 wt% of R1234ze(E); and at or about 25 - 44 wt% of R32. For example, such desired compositions of the even further greater preferred compositions 3050 include at or about 16 wt%, or less than 16 wt% and greater than 0 wt% of R1132(E); at or about 41 - 57 wt% of R1234ze(E); and at or about 29 - 44 wt% of R32. For example, such desired compositions of the more further greater preferred compositions 3052 include at or about 3 - 16 wt% of R1132(E); at or about 41 - 52 wt% of R1234ze(E); and at or about 34 - 44 wt% of R32.

In some embodiments, a set of desired properties may include having a BV of 10 cm/s or less and a GWP of at or about or less than 150. In such embodiments, desired compositions may be selected from the compositions illustrated in Figure 19 (e.g., useful compositions 3040, preferred compositions 3042, further preferred compositions 3044, greater preferred compositions 3046) and described with respect to Figure 19 that are within both the hatched areas 3060, 3062 and the shaded area 3070. For example, a lower limit of R1234ze(E) in such desired compositions is at or about 39 wt%. In some embodiments, a set of desired properties may include having a BV of 10 cm/s or less and a GWP of at or about or less than 50. In such embodiments, desired compositions may be selected from the compositions illustrated in Figure 19 (e.g., useful compositions 3040, preferred compositions 3042, further preferred compositions 3044, greater preferred compositions 3046) and described with respect to Figure 19 that are within both the first hatched area 3060 and the shaded area 3070. For example, a lower limit of R1234ze(E) in such desired compositions is at or about 75 wt%. It will be appreciated that ranges for such desired compositions may be formed using end points for ranges described for the compositions illustrated in Figure 19 and/or described for compositions in the shaded area 3070, the first hatched area 3060, and/or both hatched areas 3060, 3062.

In some embodiments, a set of desired properties for a refrigerant composition may include a different GWP than discussed above, a different burning velocity than discussed above, a different capacity than discussed above, and/or a temperature glide. In an embodiment, a temperature glide that is at or about or less than 10K may be desired. In an embodiment, a temperature glide that is at or about or less than 7.5K may be desired. In an embodiment, a GWP of at or about or less than 10 may be desired. In an embodiment, a burning velocity of at or less than 5 cm/s may be desired. In an embodiment, a capacity at or about or less than 125% of the capacity of R404A may be desired. It should be appreciated that the matrix 3000 in Figure 19 may be used to further select compositions/ranges with the desired GWP, capacity, and/or temperature glide. For example, the different ranges of compositions discussed above with respect to Figure 19 may be modified/selected based on Figure 19 so as to have ranges of R1132(E), R1234ze(E), and R32 with the desired properties (e.g., GWP, BV, capacity, and/or temperature glide).

Referring to Figure 20, the matrix 3100 shows plots of GWP, BV, temperature glide, capacity relative to R410A of a refrigerant composition as a function of the weight percentages of R1132(E), R1234ze(E), and R32. In an embodiment, refrigerant compositions comprising R1132(E), R1234ze(E), and R32 can be selected based on the capacity, temperature glide, BV, and/or GWP based on Figure 20. As similarly described above for the matrix 3000, the matrix 3100 in Figure 20 is a triangle that has sides that correspond to weight percentages (wt%) of R1132(E), R1234ze(E), and R32, respectively and vertexes that correspond to a composition of 100% R1132(E), 100% R1234ze(E), and 100% R32, respectively.

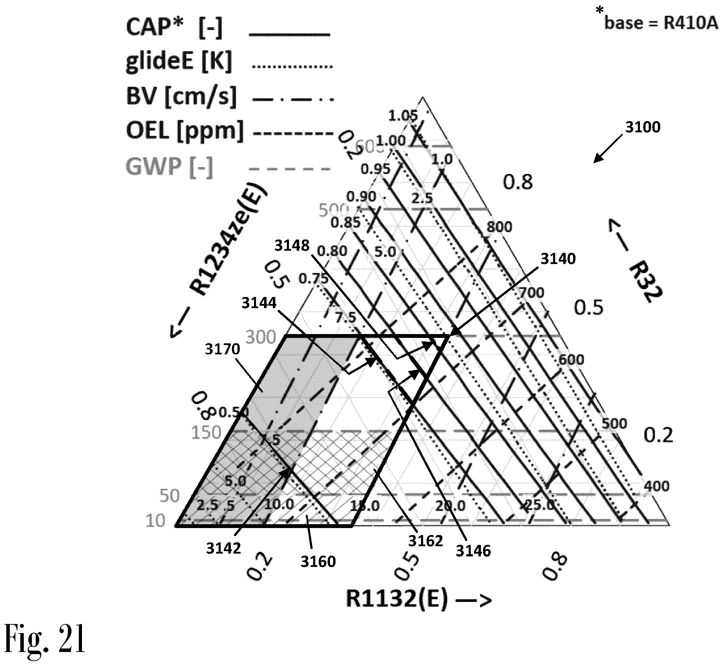

Figure 21 is the matrix 3100 of Figure 20 illustrated to show selected refrigerant compositions, according to an embodiment. As shown in Figure 21, the refrigerant compositions include (i.e., consist of, consist essentially of, or comprise) R1132(E), R1234ze(E), and R32. The refrigerant compositions can be selected based on one or more desired refrigerant composition properties such as the capacity relative to R410A, temperature glide, BV, and GWP.

In an embodiment, a desired set of properties of a useful refrigerant composition includes having a GWP of at or about or less than 300 and a burning velocity of at or less than 15 cm/s. Based on these desired properties, a range of useful refrigerant compositions 3140 is shown in the matrix 3100 of Figure 21. The useful refrigerant compositions 3140 include at or about 36 wt%, or less than 36 wt% and greater than 0 wt% of R1132(E); at or about 23 wt%, or greater than 23 wt% and less than 100 wt% of R1234ze(E); and at or about 44 wt%, or less than 44 wt% and greater than 0 wt% of R32.

In an embodiment, the useful refrigerant compositions 3140 may include preferred compositions 3142 as shown in Figure 21. The properties of the preferred compositions 3142 include having a GWP of at or about or less than 300, a burning velocity of at or less than 15 cm/s, and a capacity at or about or greater than 50% of the capacity of R410A. The preferred compositions 3142 include at or about 36 wt%, or less than 36 wt% and greater than 0 wt% of R1132(E); at or about 23 - 74 wt% of R1234ze(E); and at or about 44 wt%, or less than 44 wt% and greater than 0 wt% of R32.

In an embodiment, the preferred compositions 3142 may include further preferred compositions 3144 as shown in Figure 21. The properties of the further preferred compositions 3144 include having a GWP of at or about or less than 300, a burning velocity of at or less than 15 cm/s, and at or about or greater than 75% of the capacity of R410A. The further preferred compositions 3144 include at or about 15 - 34 wt% of R1132(E); at or about 23 - 40 wt% of R1234ze(E); and at or about 28 - 44 wt% of R32.

In an embodiment, the further preferred compositions 3144 may include greater preferred compositions 3146 as shown in Figure 21. The properties of the greater preferred compositions 3146 include having a GWP of at or about or less than 300, a burning velocity of at or less than 15 cm/s, and at or about or greater than 80% of the capacity of R410A. The greater preferred compositions 3146 include at or about 22 - 33 wt% of R1132(E); at or about 23 - 33 wt% of R1234ze(E); and at or about 35 - 44 wt% of R32.

In an embodiment, the greater preferred compositions 3146 may include further greater preferred compositions 3148 as shown in Figure 21. The properties of the further greater preferred compositions 3148 include having a GWP of at or about or less than 300, a burning velocity of at or less than 15 cm/s, and at or about or greater than 85% of the capacity of R410A. The greater preferred compositions 3146 include at or about 29 - 33 wt% of R1132(E); at or about 23 - 27 wt% of R1234ze(E); and at or about 41 - 44 wt% of R32.

Figure 21 also includes hatched areas 3160, 3162. The compositions in the hatched areas 3160, 3162 have a GWP of at or about or less than 150. In some embodiments, a set of desired properties may include the lower GWP provided by the compositions within the hatched areas 3160, 3162 (e.g., a GWP that is at or about or less than 150). In such embodiments, desired compositions may be selected from the compositions illustrated in Figure 21 (e.g., useful compositions 3140, preferred compositions 3142) and described with respect to Figure 21 that are within the hatched areas 3160, 3162.

For example, such desired compositions of the useful refrigerant compositions 3140 include at or about 35 wt%, or less than 35 wt% and greater than 0 wt% of R1132(E); at or about 44 wt%, or greater than 44 wt% and less than 100 wt% of R1234ze(E); and at or about 22 wt%, or less than 22 wt% and greater than 0 wt% of R32. For example, such desired compositions of the preferred compositions 3142 include at or about 6-35 wt% of R1132(E); at or about 23 - 72 wt% of R1234ze(E); and at or about 22 wt%, or less than 22 wt% and greater than 0 wt% of R32.

The hatched areas 3160, 3162 in Figure 21 include a first hatched area 3160 and a second hatched area 3162. The compositions in the first hatched area 3160 have a GWP of at or about or less than 50. In some embodiments, a set of desired properties may include the even lower GWP provided by the compositions within the first hatched area 3160 (e.g., a GWP that is at or about or less than 50). In such embodiments, desired compositions may be selected from the compositions illustrated in Figure 21 (e.g., useful compositions 3140, preferred compositions 3142) and described with respect to Figure 21 that are within the first hatched area 3160.

For example, such desired compositions of the useful refrigerant compositions 3140 include at or about 36 wt%, or less than 36 wt% and greater than 0 wt% of R1132(E); at or about 58 wt%, or greater than 58 wt% and less than 100 wt% of R1234ze(E); and at or about 7 wt%, or less than 7 wt% and greater than 0 wt% of R32. For example, such desired compositions of the preferred compositions 3142 include at or about 24 - 36 wt% of R1132(E); at or about 58 - 69 wt% of R1234ze(E); and at or about 7 wt%, or less than 7 wt% and greater than 0 wt% of R32.

Figure 21 also includes shaded area 3170. The compositions in the shaded area 3170 have a BV of 10 cm/s or lower. In some embodiments, a set of desired properties may include the lower BV provided by the compositions within the shaded area 3170 (e.g., a BV that is at or less than 10 cm/s). In such embodiments, desired compositions may be selected from the compositions illustrated in Figure 21 (e.g., useful compositions 3140, preferred compositions 3142) and described with respect to Figure 21 that are within the shaded area 3170.

For example, such desired compositions of the useful refrigerant compositions 3140 include at or about 18 wt%, or less than 18 wt% and greater than 0 wt% of R1132(E); at or about 41 wt%, or greater than 41 wt% and less than 100 wt% of R1234ze(E); and at or about 44 wt%, or less than 44 wt% and greater than 0 wt% of R32. For example, such desired compositions of the preferred compositions 3142 include at or about 18 wt%, or less than 18 wt% and greater than 0 wt% of R1132(E); at or about 41 - 74 wt% of R1234ze(E); and at or about 13 - 44 wt% of R32.In some embodiments, a set of desired properties may include having a BV of 10 cm/s or less and a GWP of at or about or less than 150. In such embodiments, desired compositions may be selected from the compositions illustrated in Figure 21 (e.g., useful compositions 3140, preferred compositions 3142) and described with respect to Figure 21 that are within both the hatched areas 3160, 3162 and the shaded area 3170. For example, a lower limit of R1234ze(E) in such desired compositions is at or about 61 wt%. In some embodiments, a set of desired properties may include having a BV of 10 cm/s or less and a GWP of at or about or less than 50. In such embodiments, desired compositions may be selected from the compositions illustrated in Figure 21 (e.g., useful compositions 3140, preferred compositions 3142) and described with respect to Figure 21 that are within both the first hatched area 3160 and the shaded area 3170. For example, a lower limit of R1234ze(E) in such desired compositions is at or about 75 wt%.

In some embodiments, a set of desired properties for a refrigerant composition may include a different BV, a different GWP than discussed above, a temperature glide, and/or an OEL. In an embodiment, a temperature glide that is at or about or less than 7.5K may be desired. In an embodiment, a temperature glide that is at or about or less than 5K may be desired. In an embodiment, a GWP of at or about or less than 10 may be desired. In an embodiment, an OEL of at or about 700ppm may be desired. In an embodiment, an OEL of at or about 800ppm may be desired. GWP of at or about or less than 10 may be desired. It should be appreciated that the matrix 3100 in Figure 21 may be used to further select compositions/ranges with the desired GWP and/or temperature glide. For example, the different ranges of compositions described above with respect to Figure 21 may be modified/selected based on Figure 21 so as to have ranges of R1132(E), R1234ze(E), and R32 with the desired properties (e.g., GWP, capacity, and/or temperature glide).

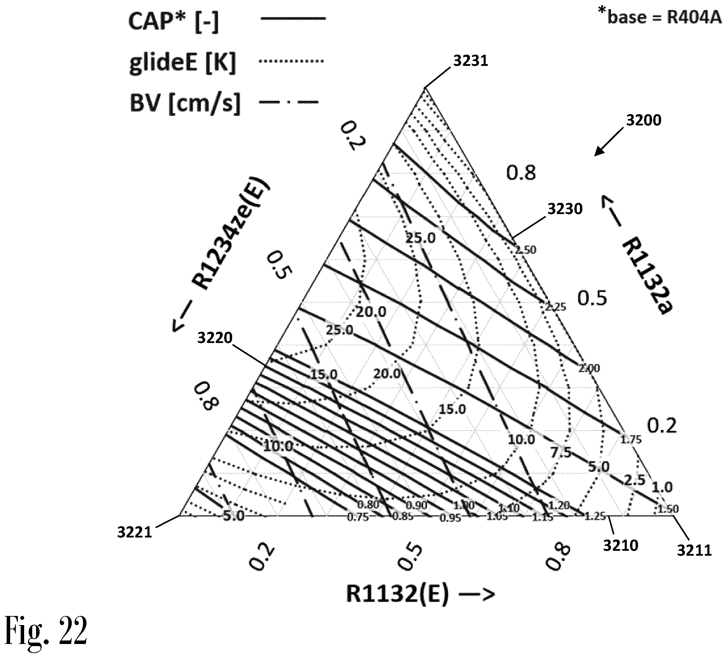

Figures 22 - 25 each show a matrix 3200, 3300 of refrigerant compositions that include R1132(E), R1234ze(E), and R1132a, according to an embodiment. In the illustrated embodiment, the R1132a is the third refrigerant. The matrix 3200, 3300 in Figures 22 - 25 have a similar triangle layout as described above for the matrixes 3000, 3100 in Figures 18 - 23. For example, as shown in Figure 22, each side 3210, 3220, 3230 of the triangle can correspond to weight percentages (wt%) of R1132(E), R1234ze(E), and R1132a, respectively. Each vertex 3211, 3221, 3231 corresponds to a composition of 100% R1132(E), 100% R1234ze(E), and 100% R1132a, respectively. The properties (e.g., flammability, temperature glide, capacity relative to R404A, and/or capacity relative to R410A) of the refrigerant compositions and the weight percent of R1132(E), R1234ze(E), and R1132a, can be determined using the matrix 3200 and/or the matrix 3300. Properties of the compositions represented in the matrixes 3200, 3300 were determined using a thermodynamic model based on experimental results. Figure 22 shows embodiments of the refrigerant compositions having preferred ranges of weight percentages of R1132(E), R1234ze(E), and R1132a, respectively, and selected based on one or more desired properties for a refrigerant composition.

Referring to Figure 22, the matrix 3200 shows plots of BV, temperature glide, and capacity relative to R404A of a refrigerant composition as a function of the weight percentages of R1132(E), R1234ze(E), and R1132a. In an embodiment, refrigerant compositions comprising R1132(E), R1234ze(E), and R1132a can be selected based on the capacity, temperature glide, and/or BV as shown by the matrix 3200 in Figure 22.

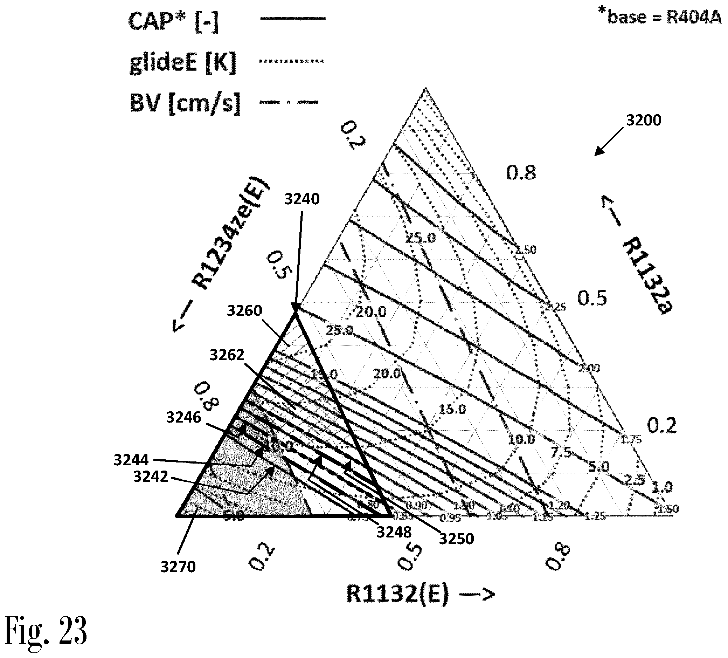

Figure 23 is the matrix 3200 of Figure 22 illustrated to show selected refrigerant compositions, according to an embodiment. As shown in Figure 23, the refrigerant compositions include (i.e., consist of, consist essentially of, or comprise) R1132(E), R1234ze(E), and R1132a. The refrigerant compositions can be selected based on one or more desired refrigerant composition properties such as the capacity relative to R404A, temperature glide, and BV.

In an embodiment, a desired set of properties of a useful refrigerant composition includes having a BV of at or less than 15 cm/s. Based on this desired properties, a range of useful refrigerant compositions 3240 is shown in the matrix 3200 of Figure 23. The useful refrigerant compositions 3240 include at or about 43 wt%, or less than 43 wt% and greater than 0 wt% of R1132(E); at or about 53 wt%, or greater than 53 wt% and less than 100 wt% of R1234ze(E); and at or about 47 wt%, or less than 47 wt% and greater than 0 wt% of R1132a.

In an embodiment, the useful refrigerant compositions 3240 may include preferred compositions 3242 as shown in Figure 23. The properties of the preferred compositions 3242 include having a BV of at or less than 15 cm/s and at or about or greater than 75% of the capacity of R404A. The preferred compositions 3242 include at or about 43 wt%, or less than 43 wt% and greater than 0 wt% of R1132(E); at or about 53 - 81 wt% of R1234ze(E); and at or about 47 wt%, or less than 47 wt% and greater than 0 wt% of R1132a.

In an embodiment, the preferred compositions 3242 may include further preferred compositions 3244 as shown in Figure 23. The properties of the further preferred compositions 3244 include having a burning velocity of at or less than 15 cm/s and at or about or greater than 80% of the capacity of R404A. The further preferred compositions 3244 include at or about 43 wt%, or less than 43 wt% and greater than 0 wt% of R1132(E); at or about 53 - 79 wt% of R1234ze(E); and at or about 47 wt%, or less than 47 wt% and greater than 0 wt% of R1132a.

In an embodiment, the further preferred compositions 3244 may include greater preferred compositions 3246 as shown in Figure 23. The properties of the greater preferred compositions 3246 include a burning velocity of at or less than 15 cm/s and at or about or greater than 85% of the capacity of R404A. The greater preferred compositions 3246 include at or about 40 wt%, or less than 40 wt% and greater than 0 wt% of R1132(E); at or about 53 - 77 wt% of R1234ze(E); and at or about 3 - 47 wt% of R1132a.

In an embodiment, the greater preferred compositions 3246 may include further greater preferred compositions 3248 as shown in Figure 23. The properties of the further greater preferred compositions 3248 include having a burning velocity of at or less than 15 cm/s and at or about or greater than 90% of the capacity of R404A. The further greater preferred compositions 3248 include at or about 37 wt%, or less than 37 wt% and greater than 0 wt% of R1132(E); at or about 53 - 75 wt% of R1234ze(E); and at or about 7 - 47 wt% of R1132a.

In an embodiment, the further greater preferred compositions 3248 may include even further greater preferred compositions 3250 as shown in Figure 23. The properties of the even further greater preferred compositions 3250 include having a burning velocity of at or less than 15 cm/s and at or about or greater than 95% of the capacity of R404A. The even further greater preferred compositions 3250 include at or about 33 wt%, or less than 33 wt% and greater than 0 wt% of R1132(E); at or about 53 - 73 wt% of R1234ze(E); and at or about 11 - 47 wt% of R1132a.

Figure 23 includes a first hatched area 3260. The compositions in the hatched area 3260 have a temperature glide of greater than 20°K. In some embodiments, a set of desired properties may include a temperature glide of at or less than 20°K. In such embodiments, desired compositions may be selected from the compositions illustrated in Figure 23 (e.g., useful compositions 3240, preferred compositions 3242, further preferred compositions 3244, greater preferred compositions 3246, further greater preferred compositions 3248, further greater preferred compositions 3250) and described with respect to Figure 23 so as to omit those compositions within the hatched area 3260. For example, a lower limit of R1234ze(E) in such desired compositions is at or about 54 wt%, and an upper limit of R1132a in such desired compositions is at or about 28 wt%.

Figure 23 also includes a second hatched area 3262. The compositions in the first and second hatched areas 3260, 3262 have a temperature glide of greater than 15°K. In some embodiments, a set of desired properties may include a temperature glide of at or less than 15°K. In such embodiments, desired compositions may be selected from the compositions illustrated in Figure 23 (e.g., useful compositions 3240, preferred compositions 3242, further preferred compositions 3244, greater preferred compositions 3246, further greater preferred compositions 3248, even further greater preferred compositions 3050) and described with respect to Figure 23 so as to omit those compositions within the first and second hatched areas 3260, 3262.

For example, such desired compositions of the useful refrigerant compositions 3240 include at or about 43 wt%, or less than 43 wt% and greater than 0 wt% of R1132(E); at or about 56 wt%, or greater than 56 wt% and less than 100 wt% of R1234ze(E); and at or about 20 wt%, or less than 20 wt% and greater than 0 wt% of R1132a. For example, such desired compositions of the preferred compositions 3242 include at or about 43 wt%, or less than 43 wt% and greater than 0 wt% of R1132(E); at or about 56 - 81 wt% of R1234ze(E); and at or about 20 wt%, or less than 20 wt% and greater than 0 wt% of R1132a. For example, such desired compositions of the further preferred compositions 3244 include at or about 5 - 43 wt% of R1132(E); at or about 56 - 77 wt% of R1234ze(E); and at or about 19 wt%, or less than 19 wt% and greater than 0 wt% of R1132a. For example, such desired compositions of the greater preferred compositions 3246 include at or about 12 - 40 wt% of R1132(E); at or about 56 - 71 wt% of R1234ze(E); and at or about 3 - 17 wt% of R1132a. For example, such desired compositions of the further greater preferred compositions 3248 include at or about 18 - 37 wt% of R1132(E); at or about 56 - 66 wt% of R1234ze(E); and at or about 7-16 wt% of R1132a. For example, such desired compositions of the even further greater preferred compositions 3250 include at or about 23 - 33 wt% of R1132(E); at or about 53 - 61 wt% of R1234ze(E); and at or about 11 - 16 wt% of R1132a.

Figure 23 includes shaded area 3270. The compositions in the shaded area 3270 have a BV of at or less than 10 cm/s. In some embodiments, a set of desired properties may include the lower BV provided by the compositions within the shaded area 3270 (e.g., a BV that is at or less than 10 cm/s). In such embodiments, desired compositions may be selected from the compositions illustrated in Figure 23 (e.g., useful compositions 3240, preferred compositions 3242, further preferred compositions 3244, greater preferred compositions 3246, further greater preferred compositions 3248, even further greater preferred compositions 3050) and described with respect to Figure 23 that are within the shaded area 3270.

For example, such desired compositions of the useful refrigerant compositions 3240 include at or about 27 wt%, or less than 27 wt% and greater than 0 wt% of R1132(E); at or about 70 wt%, or greater than 70 wt% and less than 100 wt% of R1234ze(E); and at or about 30 wt%, or less than 30 wt% and greater than 0 wt% of R1132a. For example, such desired compositions of the preferred compositions 3242 include at or about 19 wt%, or less than 19 wt% and greater than 0 wt% of R1132(E); at or about 70 - 81 wt% of R1234ze(E); and at or about 9-30 wt% of R1132a. For example, such desired compositions of the further preferred compositions 3244 include at or about 15 wt%, or less than 15 wt% and greater than 0 wt% of R1132(E); at or about 70 - 79 wt% of R1234ze(E); and at or about 13 - 30 wt% of R1132a. For example, such desired compositions of the greater preferred compositions 3246 include at or about 11 wt%, or less than 11 wt% and greater than 0 wt% of R1132(E); at or about 70 - 77 wt% of R1234ze(E); and at or about 18 - 30 wt% of R1132a. For example, such desired compositions of the further greater preferred compositions 3248 include at or about 7 wt%, or less than 7 wt% and greater than 0 wt% of R1132(E); at or about 70 - 75 wt% of R1234ze(E); and at or about 22 - 30 wt% of R1132a. For example, such desired compositions of the even further greater preferred compositions 3250 include at or about 5 wt%, or less than 5 wt% and greater than 0 wt% of R1132(E); at or about 70 - 73 wt% of R1234ze(E); and at or about 25 - 30 wt% of R1132a.In some embodiments, a set of desired properties for a refrigerant composition may include a different GWP, a different BV, and/or a different temperature glide then discussed above. In an embodiment, a temperature glide that is at or less than 25K may be desired. In an embodiment, a temperature glide that is at or less than 10K may be desired. In an embodiment, a BV of at or less than 5 cm/sec may be desired. In an embodiment, a GWP of at or about or less than 10 may be desired. It should be appreciated that the matrix 3200 in Figure 23 may be used to further select compositions/ranges with the desired GWP and/or temperature glide. For example, the different ranges of compositions described above with respect to Figure 23 may be modified/selected based on Figure 23 so as to have ranges of R1132(E), R1234ze(E), and R1132a with the desired properties (e.g., GWP and/or temperature glide).

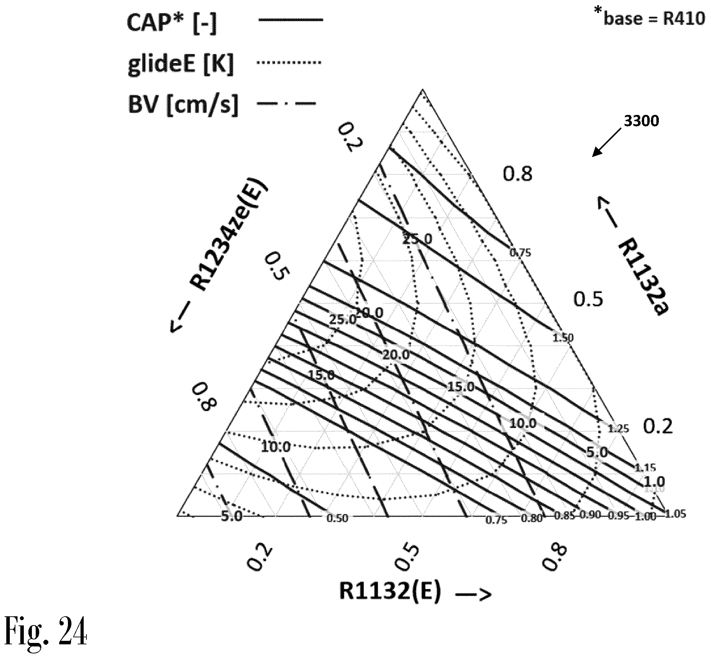

Referring to Figure 24, the matrix 3300 shows plots of BV, temperature glide, and capacity relative to R410A of a refrigerant composition as a function of the weight percentages of R1132(E), R1234ze(E), and R1132a. In an embodiment, refrigerant compositions comprising R1132(E), R1234ze(E), and R1132a can be selected based on the capacity, temperature glide, and/or BV as shown by the matrix 3300 in Figure 24. As similarly described above for the matrix 3200, the matrix 3300 in Figure 24 is a triangle that has sides that correspond to weight percentages (wt%) of R1132(E), R1234ze(E), and R1132a, respectively and vertexes that correspond to a composition of 100% R1132(E), 100% R1234ze(E), and 100% R1132a, respectively.

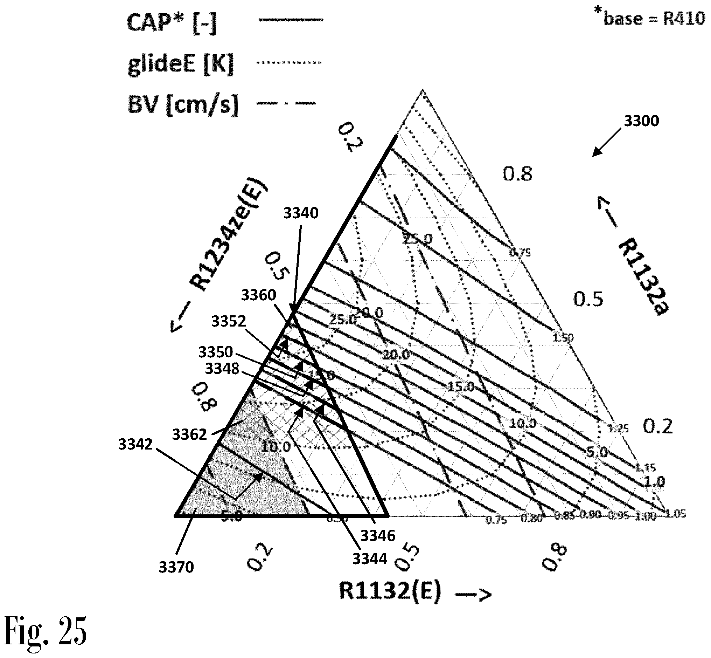

Figure 25 is the matrix 3300 of Figure 24 illustrated to show selected refrigerant compositions, according to an embodiment. As shown in Figure 25, the refrigerant compositions include (i.e., consist of, consist essentially of, or comprise) R1132(E), R1234ze(E), and R1132a. The refrigerant compositions can be selected based on one or more desired refrigerant composition properties such as the capacity relative to R410A, temperature glide, and BV.

In an embodiment, a desired set of properties of a useful refrigerant composition includes having a BV of at or less than 15 cm/s. Based on these desired properties, a range of useful refrigerant compositions 3340 is shown in the matrix 3300 of Figure 25. The useful refrigerant compositions 3340 include at or about 43 wt%, or less than 43 wt% and greater than 0 wt% of R1132(E); at or about 53 wt%, or greater than 53 wt% and less than 100 wt% of R1234ze(E); and at or about 47 wt%, or less than 47 wt% and greater than 0 wt% of R1132a.

In an embodiment, the useful compositions 3340 may include preferred compositions 3342 as shown in Figure 25. The properties of the preferred compositions 3342 include having a BV of at or less than 15 cm/s and at or about or greater than 50% of the capacity of R410A. The useful refrigerant compositions 3340 include at or about 43 wt%, or less than 43 wt% and greater than 0 wt% of R1132(E); at or about 53 wt%, or greater than 53 wt% and less than 100 wt% of R1234ze(E); and at or about 47 wt%, or less than 47 wt% and greater than 0 wt% of R1132a.The preferred compositions 3342 include at or about 43 wt%, or less than 43 wt% and greater than 0 wt% of R1132(E); at or about 53 - 83 wt% of R1234ze(E); and at or about 47 wt%, or less than 47 wt% and greater than 0 wt% of R1132a.

In an embodiment, the preferred compositions 3342 may include further preferred compositions 3344 as shown in Figure 25. The properties of the further preferred compositions 3344 include having a burning velocity of at or less than 15 cm/s and at or about or greater than 75% of the capacity of R410A. The further preferred compositions 3344 include at or about 25 wt%, or less than 25 wt% and greater than 0 wt% of R1132(E); at or about 53 - 68 wt% of R1234ze(E); and at or about 20 - 47 wt% of R1132a.

In an embodiment, the further preferred compositions 3344 may include greater preferred compositions 3346 as shown in Figure 25. The properties of the greater preferred compositions 3346 include a burning velocity of at or less than 15 cm/s and at or about or greater than 80% of the capacity of R410A. The greater preferred compositions 3346 include at or about 20 wt%, or less than 20 wt% and greater than 0 wt% of R1132(E); at or about 53 - 66 wt% of R1234ze(E); and at or about 25 - 47 wt% of R1132a.

In an embodiment, the greater preferred compositions 3346 may include further greater preferred compositions 3348 as shown in Figure 25. The properties of the further greater preferred compositions 3348 include having a burning velocity of at or less than 15 cm/s and at or about or greater than 85% of the capacity of R410A. The further greater preferred compositions 3348 include at or about 16 wt%, or less than 16 wt% and greater than 0 wt% of R1132(E); at or about 53 - 63 wt% of R1234ze(E); and at or about 30 - 47 wt% of R1132a.

In an embodiment, further greater preferred compositions 3348 may include even further greater preferred compositions 3350 as shown in Figure 25. The properties of the further greater preferred compositions 3348 include having a burning velocity of at or less than 15 cm/s and at or about or greater than 90% of the capacity of R410A. The even further greater preferred compositions 3350 include at or about 11 wt%, or less than 11 wt% and greater than 0 wt% of R1132(E); at or about 53 - 60 wt% of R1234ze(E); and at or about 35 - 47 wt% of R1132a.

In an embodiment, the even further greater preferred compositions 3350 may include more further greater preferred compositions 3352 as shown in Figure 25. The properties of the more further greater preferred compositions 3352 include having a burning velocity of at or about or less than 15 cm/s and at or about or greater than 95% of the capacity of R404A. The more further greater preferred compositions 3352 include at or about 7 wt%, or less than 7 wt% and greater than 0 wt% of R1132(E); at or about 53 - 57 wt% of R1234ze(E); and at or about 40 - 47 wt% of R1132a.

Figure 25 also includes a first hatched area 3360. The compositions in the first hatched area 3360 have a temperature glide of greater than 20°K. In some embodiments, a set of desired properties may include a temperature glide of at or less than 20°K. In such embodiments, desired compositions may be selected from the compositions illustrated in Figure 25 (e.g., useful compositions 3340, preferred compositions 3342, further preferred compositions 3344, greater preferred compositions 3346) and described with respect to Figure 25 so as to omit those compositions within the hatched area 3360.

For example, such desired compositions of the useful refrigerant compositions 3340 include at or about 43 wt%, or less than 43 wt% and greater than 0 wt% of R1132(E); at or about 54 wt%, or greater than 54 wt% and less than 100 wt% of R1234ze(E); and at or about 28 wt%, or less than 28 wt% and greater than 0 wt% of R1132a. For example, such desired compositions of the preferred compositions 3342 include at or about 43 wt%, or less than 43 wt% and greater than 0 wt% of R1132(E); at or about 54 - 83 wt% of R1234ze(E); and at or about 28 wt%, or less than 28 wt% and greater than 0 wt% of R1132a. For example, such desired compositions of the further preferred compositions 3344 include at or about 11 - 25 wt% of R1132(E); at or about 54 - 62 wt% of R1234ze(E); and at or about 20 - 28 wt% of R1132a. For example, such desired compositions of the greater preferred compositions 3346 include at or about 20 wt%, or less than 20 wt% and greater than 0 wt% of R1132(E); at or about 54 - 57 wt% of R1234ze(E); and at or about 25 - 28 wt% of R1132a.

Figure 25 also includes a second hatched area 3362. The compositions in the first and second hatched areas 3360, 3362 have a temperature glide of greater than 15°K. In some embodiments, a set of desired properties may include a temperature glide of at or less than 15°K. In such embodiments, desired compositions may be selected from the compositions illustrated in Figure 25 (e.g., useful compositions 3240, preferred compositions 3242) and described with respect to Figure 25 so as to omit those compositions within the first and second hatched areas 3360, 3362.

For example, such desired compositions of the useful refrigerant compositions 3340 include at or about 43 wt%, or less than 43 wt% and greater than 0 wt% of R1132(E); at or about 56 wt%, or greater than 56 wt% and less than 100 wt% of R1234ze(E); and at or about 20 wt%, or less than 20 wt% and greater than 0 wt% of R1132a. For example, such desired compositions of the preferred compositions 3342 include at or about 43 wt%, or less than 43 wt% and greater than 0 wt% of R1132(E); at or about 56 - 83 wt% of R1234ze(E); and at or about 20 wt%, or less than 20 wt% and greater than 0 wt% of R1132a.

Figure 25 also includes shaded area 3370. The compositions in the shaded area 3370 have a BV of at or less than 10 cm/s. In some embodiments, a set of desired properties may include the lower BV provided by the compositions within the shaded area 3370 (e.g., a BV that is at or less than 10 cm/s). In such embodiments, desired compositions may be selected from the compositions illustrated in Figure 25 (e.g., useful compositions 3340, preferred compositions 3342) and described with respect to Figure 25 that are within the shaded area 3370.

For example, such desired compositions of the useful refrigerant compositions 3340 include at or about 27 wt%, or less than 27 wt% and greater than 0 wt% of R1132(E); at or about 70 wt%, or greater than 70 wt% and less than 100 wt% of R1234ze(E); and at or about 30 wt%, or less than 30 wt% and greater than 0 wt% of R1132a. For example, such desired compositions of the preferred compositions 3342 include at or about 23 wt%, or less than 23 wt% and greater than 0 wt% of R1132(E); at or about 70 - 83 wt% of R1234ze(E); and at or about 5-30 wt% of R1132a.

In some embodiments, a set of desired properties for a refrigerant composition may include a different temperature glide. In an embodiment, a temperature glide that is at or less than 25K may be desired. In an embodiment, a temperature glide that is at or about or less than 10K may be desired. It should be appreciated that the matrix 3300 in Figure 25 may be used to further select compositions/ranges with the desired temperature glide.

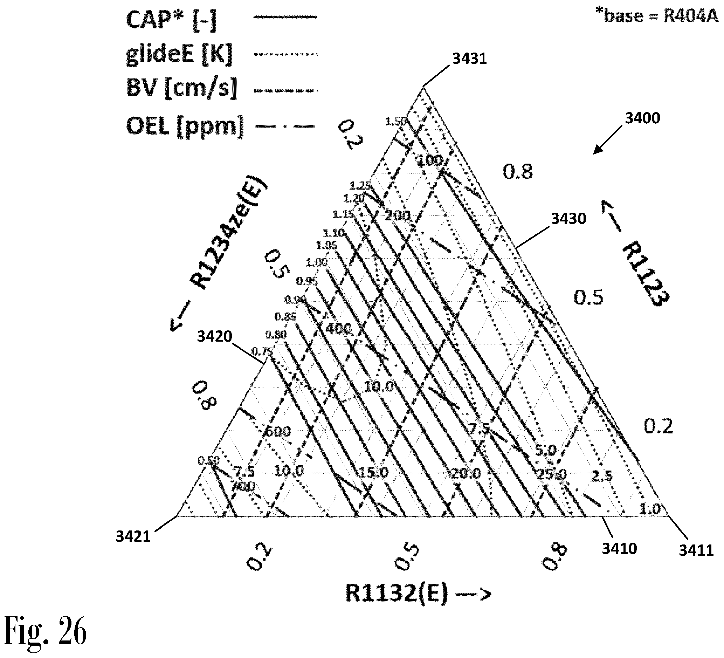

Figures 26 - 29 each show a matrix 3400, 3500 of refrigerant compositions that include R1132(E), R1234ze(E), and R1123, according to an embodiment. In the illustrated embodiment, the R1123 is the third refrigerant. The matrix 3400, 3500 in each of Figures 26 - 29 have a similar triangle layout as described above for the matrixes 3000, 3100 in Figures 18 - 21. For example, as shown in Figure 26, each side 3410, 3420, 3430 of the triangle can correspond to weight percentages (wt%) of R1132(E), R1234ze(E), and R1123, respectively. Each vertex 3411, 3421, 3431 corresponds to a composition of 100% R1132(E), 100% R1234ze(E), and 100% R1123, respectively. The properties (e.g., flammability, temperature glide, and/or capacity relative to R404A, and/or capacity relative to R410A) of the refrigerant compositions and the weight percent of R1132(E), R1234ze(E), and R1132a, can be determined using the matrix 3400 and/or the matrix 3500. Properties of the compositions represented in the matrixes 3400, 3500 were determined using a thermodynamic model based on experimental results. Figure 26 shows embodiments of the refrigerant compositions having preferred ranges of weight percentages of R1132(E), R1234ze(E), and R1123, respectively, and selected based on one or more desired properties for a refrigerant composition.

Referring to Figure 26, the matrix 3400 shows plots of BV, temperature glide, toxicity (e.g., OEL), and capacity relative to R404A of a refrigerant composition as a function of the weight percentages of R1132(E), R1234ze(E), and R1123. In an embodiment, refrigerant compositions comprising R1132(E), R1234ze(E), and R1123 can be selected based on the capacity, temperature glide, OEL, and/or BV as shown by the matrix 3400 in Figure 26.

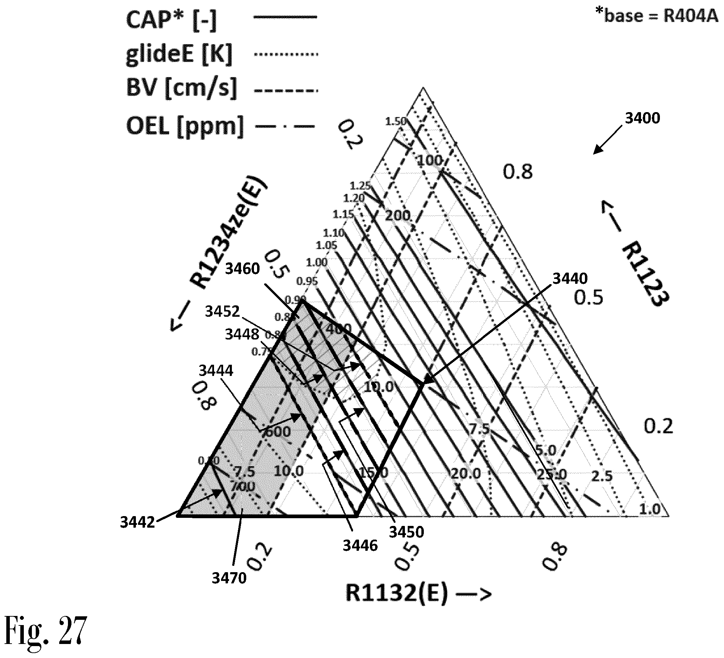

Figure 27 is the matrix 3400 of Figure 26 illustrated to show selected refrigerant compositions, according to an embodiment. As shown in Figure 27, the refrigerant compositions include (i.e., consist of, consist essentially of, or comprise) R1132(E), R1234ze(E), and R1123. The refrigerant compositions can be selected based on one or more desired refrigerant composition properties such as the capacity relative to R404A, temperature glide, toxicity, and BV.

In an embodiment, a desired set of properties of a useful refrigerant composition includes having a BV of at or less than 15 cm/s and an OEL of at or greater than 400 ppm. Based on these desired properties, a range of useful refrigerant compositions 3440 is shown in the matrix 3400 of Figure 27. The useful refrigerant compositions 3440 include at or about 36 wt%, or less than 36 wt% and greater than 0 wt% of R1132(E); at or about 34 wt%, or greater than 34 wt% and less than 100 wt% of R1234ze(E); and at or about 51 wt%, or less than 51 wt% and greater than 0 wt% of R1123.

In an embodiment, the useful compositions 3440 may include preferred compositions 3442 as shown in Figure 27. The properties of the preferred compositions 3442 include having a BV of at or less than 15 cm/s, an OEL of at or greater than 400 ppm, and at or about or greater than 50% of the capacity of R404A. The preferred compositions 3442 include at or about 36 wt%, or less than 36 wt% and greater than 0 wt% of R1132(E); at or about 34 - 87 wt% of R1234ze(E); and at or about 51 wt%, or less than 51 wt% and greater than 0 wt% of R1123.

In an embodiment, the preferred compositions 3442 may include further preferred compositions 3444 as shown in Figure 27. The properties of the further preferred compositions 3444 include having a burning velocity of at or less than 15 cm/s, an OEL of at or greater than 400 ppm, and at or about or greater than 75% of the capacity of R404A. The further preferred compositions 3444 include at or about 36 wt%, or less than 36 wt% and greater than 0 wt% of R1132(E); at or about 34 - 63 wt% of R1234ze(E); and at or about 1 - 51 wt% of R1123.

In an embodiment, the further preferred compositions 3444 may include greater preferred compositions 3446 as shown in Figure 27. The properties of the greater preferred compositions 3446 include having a burning velocity of at or less than 15 cm/s, an OEL of at or greater than 400 ppm, and at or about or greater than 80% of the capacity of R404A. The greater preferred compositions 3446 include at or about 36 wt%, or less than 36 wt% and greater than 0 wt% of R1132(E); at or about 34 - 58 wt% of R1234ze(E); and at or about 6-51 wt% of R1123.

In an embodiment, the greater preferred compositions 3446 may include further greater preferred compositions 3448 as shown in Figure 27. The properties of the further greater preferred compositions 3448 include having a burning velocity of at or less than 15 cm/s, an OEL of at or greater than 400 ppm, and at or about or greater than 85% of the capacity of R404A. The further greater preferred compositions 3448 include at or about 36 wt%, or less than 36 wt% and greater than 0 wt% of R1132(E); at or about 34 - 53 wt% of R1234ze(E); and at or about 11 - 54 wt% of R1123.

In an embodiment, the further greater preferred compositions 3448 may include even further greater preferred compositions 3450 as shown in Figure 27. The properties of the even further greater preferred compositions 3450 include having a burning velocity of at or less than 15 cm/s, an OEL of at or greater than 400 ppm, and at or about or greater than 90% of the capacity of R404A. The even further greater preferred compositions 3450 include at or about 1 - 35 wt% of R1132(E); at or about 34 - 49 wt% of R1234ze(E); and at or about 16 - 50 wt% of R1123.

In an embodiment, the even further greater preferred compositions 3450 may include more further greater preferred compositions 3452 as shown in Figure 27. The properties of the more further greater preferred compositions 3452 include having a burning velocity of at or about or less than 15 cm/s and at or about or greater than 95% of the capacity of R404A. The more further greater preferred compositions 3452 include at or about 11 - 35 wt% of R1132(E); at or about 34 - 45 wt% of R1234ze(E); and at or about 20 - 44 wt% of R1123.

Figure 27 includes a hatched area 3460. The compositions in the hatched area 3460 have a temperature glide of greater than 10°K. In some embodiments, a set of desired properties may include a temperature glide of at or less than 10°K. In such embodiments, desired compositions may be selected from the compositions illustrated in Figure 25 (e.g., useful compositions 3440, preferred compositions 3442, further preferred compositions 3444, greater preferred compositions 3446, further greater preferred compositions 3448, even further greater preferred compositions 3450, more further greater preferred compositions 3452) and described with respect to Figure 27 so as to omit those compositions within the hatched area 3460.

For example, such desired compositions of the useful refrigerant compositions 3440 include at or about 36 wt%, or less than 36 wt% and greater than 0 wt% of R1132(E); at or about 34 wt%, or greater than 34 wt% and less than 100 wt% of R1234ze(E); and at or about 39 wt%, or less than 39 wt% and greater than 0 wt% of R1123. For example, such desired compositions of the preferred compositions 3442 include at or about 36 wt%, or less than 36 wt% and greater than 0 wt% of R1132(E); at or about 34 - 87 wt% of R1234ze(E); and at or about 39 wt%, or less than 39 wt% and greater than 0 wt% of R1123. For example, such desired compositions of the further preferred compositions 3444 include at or about 36 wt%, or less than 36 wt% and greater than 0 wt% of R1132(E); at or about 34 - 63 wt% of R1234ze(E); and at or about 1 - 39 wt% of R1123. For example, such desired compositions of the greater preferred compositions 3446 include at or about 12 - 36 wt% of R1132(E); at or about 34 - 58 wt% of R1234ze(E); and at or about 6 - 38 wt% of R1123. For example, such desired compositions of the further greater preferred compositions 3448 include at or about 19 - 36 wt% of R1132(E); at or about 34 - 54 wt% of R1234ze(E); and at or about 11 - 37 wt% of R1123. For example, such desired compositions of the even further greater preferred compositions 3450 include at or about 23 - 35 wt% of R1132(E); at or about 34 - 49 wt% of R1234ze(E); and at or about 16 - 37 wt% of R1123. For example, such desired compositions of the more further greater preferred compositions 3452 include at or about 23 -35 wt% of R1132(E); at or about 34 - 45 wt% of R1234ze(E); and at or about 20 - 37 wt% of R1123.

Figure 27 also includes shaded area 3470. The compositions in the shaded area 3470 have a BV of at or less than 10 cm/s. In some embodiments, a set of desired properties may include the lower BV provided by the compositions within the shaded area 3470 (e.g., a BV that is at or less than 10 cm/s). In such embodiments, desired compositions may be selected from the compositions illustrated in Figure 27 (e.g., useful compositions 3440, preferred compositions 3442, further preferred compositions 3444, greater preferred compositions 3446, further greater preferred compositions 3448, even further greater preferred compositions 3450) and described with respect to Figure 27 that are within the shaded area 3470.

For example, such desired compositions of the useful refrigerant compositions 3440 include at or about 18 wt%, or less than 18 wt% and greater than 0 wt% of R1132(E); at or about 43 wt%, or greater than 43 wt% and less than 100 wt% of R1234ze(E); and at or about 51 wt%, or less than 51 wt% and greater than 0 wt% of R1123. For example, such desired compositions of the preferred compositions 3442 include at or about 18 wt%, or less than 18 wt% and greater than 0 wt% of R1132(E); at or about 43 - 87 wt% of R1234ze(E); and at or about 51 wt%, or less than 51 wt% and greater than 0 wt% of R1123. For example, such desired compositions of the further preferred compositions 3444 include at or about 17 wt%, or less than 17 wt% and greater than 0 wt% of R1132(E); at or about 43 - 63 wt% of R1234ze(E); and at or about 20 - 51 wt% of R1123. For example, such desired compositions of the greater preferred compositions 3446 include at or about 17 wt%, or less than 17 wt% and greater than 0 wt% of R1132(E); at or about 43 - 58 wt% of R1234ze(E); and at or about 25 - 51 wt% of R1123. For example, such desired compositions of the further greater preferred compositions 3448 include at or about 17 wt%, or less than 17 wt% and greater than 0 wt% of R1132(E); at or about 43 - 53 wt% of R1234ze(E); and at or about 30 - 51 wt% of R1123. For example, such desired compositions of the even further greater preferred compositions 3450 include at or about 1 - 35 wt% of R1132(E); at or about 43 - 49 wt% of R1234ze(E); and at or about 35 - 50 wt% of R1123. For example, such desired compositions of the more further greater preferred compositions 3452 include at or about 11 - 16 wt% of R1132(E); at or about 43 - 45 wt% of R1234ze(E); and at or about 39 - 44 wt% of R1123.

In some embodiments, a set of desired properties may include having a BV of 10 cm/s or less and a temperature glide of at or less than 20°K. In such embodiments, desired compositions may be selected from the compositions illustrated in Figure 27 (e.g., useful compositions 3440, preferred compositions 3442, further preferred compositions 3444, greater preferred compositions 3446, further greater preferred compositions 3448, even further greater preferred compositions 3450) and described with respect to Figure 27 that are within the shaded area 3470 and outside the hatched area 3460.

In some embodiments, a set of desired properties for a refrigerant composition may include a temperature glide and/or a different OEL. In an embodiment, a temperature glide that is at or about or less than 10K may be desired. In an embodiment, a temperature glide that is at or about or less than 7.5K may be desired. In an embodiment, an OEL that is at or greater than 600 ppm may be desired. In an embodiment, an OEL that is at or greater than 700 ppm may be desired. It should be appreciated that the matrix 3400 in Figure 27 may be used to further select compositions/ranges with the desired temperature glide and/or OEL.

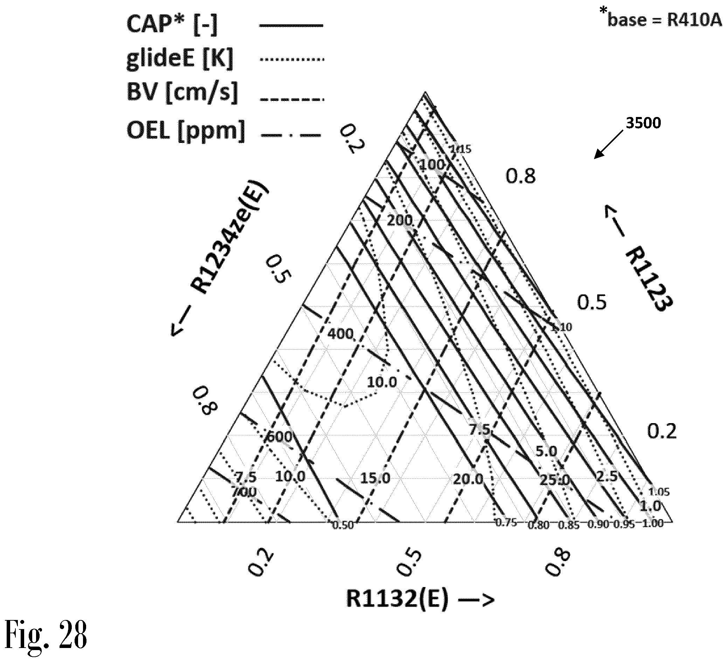

Referring to Figure 28, the matrix 3500 shows plots of BV, temperature glide, toxicity (e.g., OEL), and capacity relative to R410A of a refrigerant composition as a function of the weight percentages of R1132(E), R1234ze(E), and R1123. As similarly described above for the matrix 3400, the matrix 3500 in Figure 28 is a triangle that has sides that correspond to weight percentages (wt%) of R1132(E), R1234ze(E), and R1123, respectively and vertexes that correspond to a composition of 100% R1132(E), 100% R1234ze(E), and 100% R1123, respectively. In an embodiment, refrigerant compositions comprising R1132(E), R1234ze(E), and R1123 can be selected based on the capacity, temperature glide, OEL, and/or BV as shown by the matrix 3500 in Figure 28.

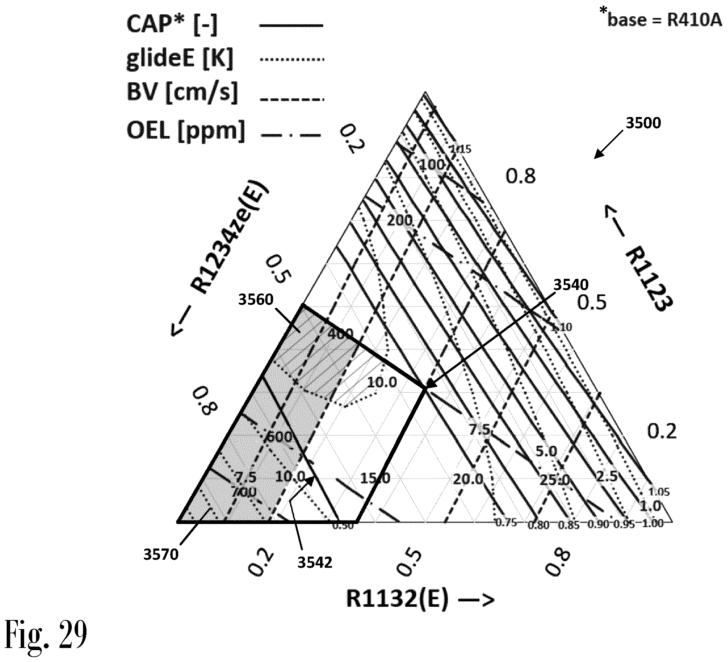

Figure 29 is the matrix 3500 of Figure 28 illustrated to show selected refrigerant compositions, according to an embodiment. As shown in Figure 29, the refrigerant compositions include (i.e., consist of, consist essentially of, or comprise) R1132(E), R1234ze(E), and R1123. The refrigerant compositions can be selected based on one or more desired refrigerant composition properties such as the capacity relative to R410A, temperature glide, toxicity, and BV.

In an embodiment, a desired set of properties of a useful refrigerant composition includes having a BV of at or less than 15 cm/s and an OEL of at or greater than 400 ppm. Based on these desired properties, a range of useful refrigerant compositions 3540 is shown in the matrix 3500 of Figure 29. The useful refrigerant compositions 3540 include at or about 36 wt%, or less than 36 wt% and greater than 0 wt% of R1132(E); at or about 34 wt%, or greater than 34 wt% and less than 100 wt% of R1234ze(E); and at or about 51 wt%, or less than 51 wt% and greater than 0 wt% ofR1123.

In an embodiment, the useful compositions 3540 may include preferred compositions 3542 as shown in Figure 29. The properties of the preferred compositions 3542 include having a BV of at or less than 15 cm/s, an OEL of at or greater than 400 ppm, and at or about or greater than 50% of the capacity of R410A. The preferred compositions 3542 include at or about 36 wt%, or less than 36 wt% and greater than 0 wt% of R1132(E); at or about 34 - 66 wt% of R1234ze(E); and at or about 51 wt%, or less than 51 wt% and greater than 0 wt% of R1123.

Figure 29 also includes shaded area 3570. The compositions in the shaded area 3570 have a BV of at or less than 10 cm/s. In some embodiments, a set of desired properties may include the lower BV provided by the compositions within the shaded area 3570 (e.g., a BV that is at or less than 10 cm/s). In such embodiments, desired compositions may be selected from the compositions illustrated in Figure 29 (e.g., useful compositions 3540, preferred compositions 3542) and described with respect to Figure 29 that are within the shaded area 3570.

For example, such desired compositions of the useful refrigerant compositions 3540 include at or about 18 wt%, or less than 18 wt% and greater than 0 wt% of R1132(E); at or about 43 wt%, or greater than 43 wt% and less than 100 wt% of R1234ze(E); and at or about 51 wt%, or less than 51 wt% and greater than 0 wt% of R1123. For example, such desired compositions of the preferred compositions 3542 include at or about 18 wt%, or less than 18 wt% and greater than 0 wt% of R1132(E); at or about 43 - 66 wt% of R1234ze(E); and at or about 51 wt%, or less than 51 wt% and greater than 0 wt% of R1123.

Figure 29 includes a hatched area 3560. The compositions in the hatched area 3560 have a temperature glide of greater than 10°K. In some embodiments, a set of desired properties may include a temperature glide of at or less than 10°K. In such embodiments, desired compositions may be selected from the compositions illustrated in Figure 25 (e.g., useful compositions 3540, preferred compositions 3542) and described with respect to Figure 29 so as to omit those compositions within the hatched area 3560.

In some embodiments, a set of desired properties may include having a BV of 10 cm/s or less and a temperature glide of at or less than 20°K. In such embodiments, desired compositions may be selected from the compositions illustrated in Figure 29 (e.g., useful compositions 3440, preferred compositions 3442) and described with respect to Figure 29 that are within the shaded area 3570 and outside the hatched area 3560.

In some embodiments, a set of desired properties for a refrigerant composition may include a temperature glide and/or a different OEL. In an embodiment, a temperature glide that is at or about or less than 10K may be desired. In an embodiment, a temperature glide that is at or about or less than 7.5K may be desired. In an embodiment, an OEL that is at or about or greater than 600 ppm may be desired. In an embodiment, an OEL that is at or about or greater than 700 ppm may be desired. It should be appreciated that the matrix 3500 in Figure 29 may be used to further select compositions/ranges with the desired temperature glide and/or OEL. For example, the different ranges of compositions described above with respect to Figure 29 may be modified/selected based on Figure 29 so as to have ranges of R1132(E), R1234ze(E), and R1123 with the desired properties (e.g., OEL and/or temperature glide).

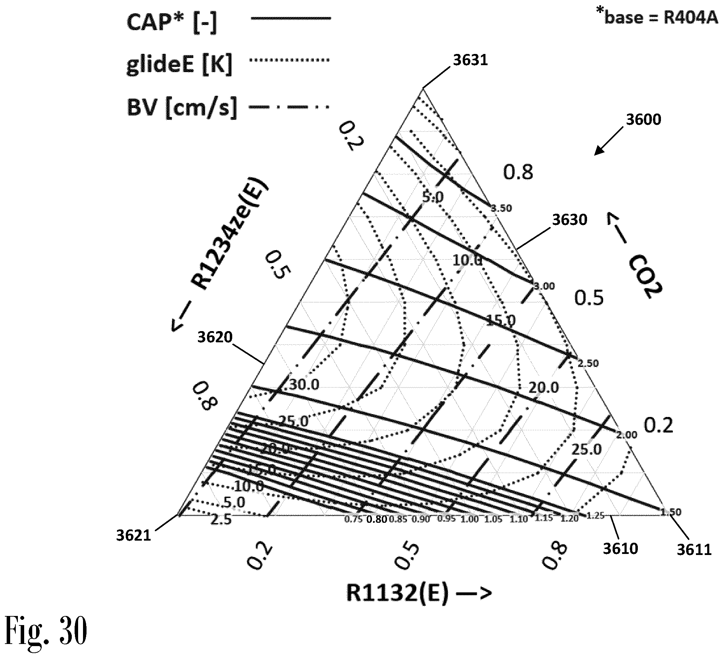

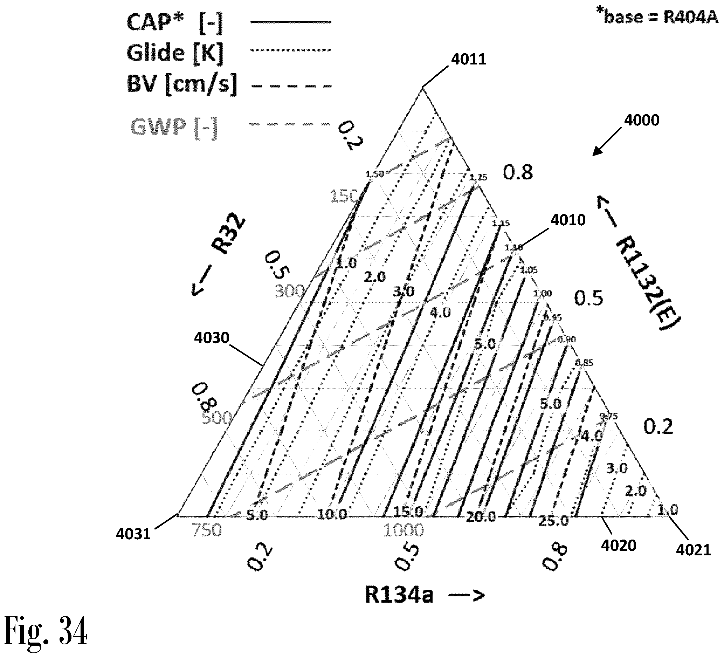

Figures 30 - 33 each show a matrix 3600, 3700 of refrigerant compositions that include R1132(E), R1234ze(E), and CO₂, according to an embodiment. In the illustrated embodiment, the CO₂ is the third refrigerant. The matrix 3600, 3700 in each of Figures 34 - 47 have a similar triangle layout as described above for the matrixes 3000, 3100 in Figures 22 - 25. For example, as shown in Figure 30, each side 3610, 3620, 3630 of the triangle can correspond to weight percentages (wt%) of R1132(E), R1234ze(E), and CO₂, respectively. Each vertex 3611, 3621, 3631 corresponds to a composition of 100% R1132(E), 100% R1234ze(E), and 100% CO₂, respectively. The properties (e.g., flammability, temperature glide, and/or capacity relative to R404A, and/or capacity relative to R410A) of the refrigerant compositions and the weight percent of R1132(E), R1234ze(E), and CO₂, can be determined using the matrix 3600 and/or the matrix 3700. Properties of the compositions represented in the matrixes 3600, 3700 were determined using a thermodynamic model based on experimental results. Figure 30 shows embodiments of the refrigerant compositions having preferred ranges of weight percentages of R1132(E), R1234ze(E), and CO₂, respectively, and selected based on one or more desired properties for a refrigerant composition.

Referring to Figure 30, the matrix 3600 shows plots of BV, temperature glide, and capacity relative to R404A of a refrigerant composition as a function of the weight percentages of R1132(E), R1234ze(E), and CO₂. In an embodiment, refrigerant compositions comprising R1132(E), R1234ze(E), and CO₂ can be selected based on the capacity, temperature glide, and/or BV as shown by the matrix 3600 in Figure 30.

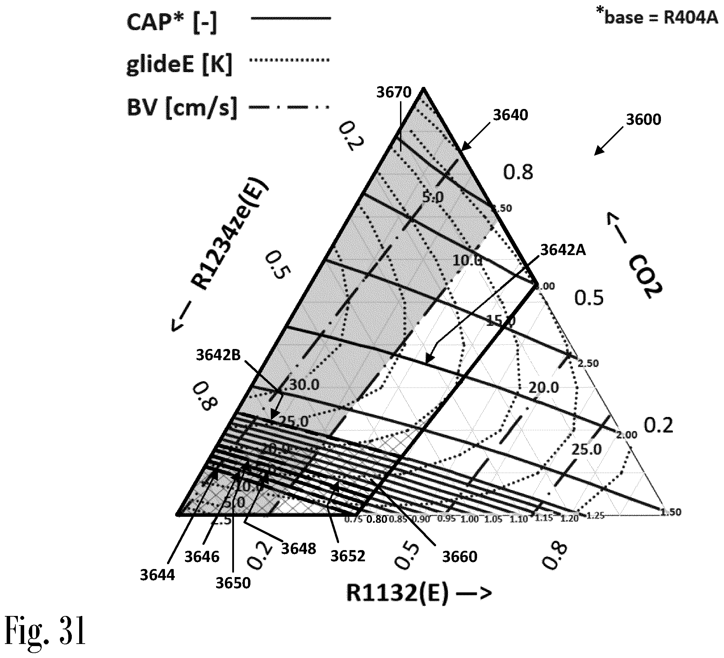

Figure 31 is the matrix 3600 of Figure 30 illustrated to show selected refrigerant compositions, according to an embodiment. As shown in Figure 31, the refrigerant compositions include (i.e., consist of, consist essentially of, or comprise) R1132(E), R1234ze(E), and CO₂. The refrigerant compositions can be selected based on one or more desired refrigerant composition properties such as the capacity relative to R404A, temperature glide, and BV.

In an embodiment, a desired set of properties of a useful refrigerant composition includes having a BV of at or less than 15 cm/s. Based on these desired properties, a range of useful refrigerant compositions 3640 is shown in the matrix 3600 of Figure 31. The useful refrigerant compositions 3640 include at or about 46 wt%, or less than 46 wt% and greater than 0 wt% of R1132(E); less than 100 wt% and greater than 0 wt% of R1234ze(E); and less than 100 wt% and greater than 0 wt% of CO₂.

In an embodiment, the useful compositions 3640 may include first preferred compositions 3642A as shown in Figure 31. The properties of the first preferred compositions 3642A include having a BV of at or less than 15 cm/s and at or about or less than 200% of the capacity of R404A. The first preferred compositions 3642A include at or about 42 wt%, or less than 42 wt% and greater than 0 wt% of R1132(E); at or about 25 wt%, or greater than 25 wt% and less than 100 wt% of R1234ze(E); and at or about 44 wt %, or less than 44 wt% and greater than 0 wt% of CO₂.

In an embodiment, the useful compositions 3640 may include second preferred compositions 3642B as shown in Figure 31. The properties of the second preferred compositions 3642B include having a BV of at or less than 15 cm/s and at or about or less than 125% of the capacity of R404A. The second preferred compositions 3642B include at or about 39 wt%, or less than 39 wt% and greater than 0 wt% of R1132(E); at or about 48 wt%, or greater than 38 wt% and less than 100 wt% of R1234ze(E); and at or about 24 wt %, or less than 24 wt% and greater than 0 wt% of CO₂.

In an embodiment, the first preferred compositions 3642A may include further preferred compositions 3644 as shown in Figure 31. The properties of the further preferred compositions 3644 include having a BV of at or less than 15 cm/s and from at or about 75% to at or about 200% of the capacity of R404A. The further preferred compositions 3644 include at or about 42 wt%, or less than 42 wt% and greater than 0 wt% of R1132(E); at or about 25 - 89 wt% of R1234ze(E); and at or about 44 wt %, or less than 44 wt% and greater than 0 wt% of CO₂.

In an embodiment, the further preferred compositions 3644 may include greater preferred compositions 3646 as shown in Figure 31. The properties of the greater preferred compositions 3646 include having a BV of at or less than 15 cm/s and from at or about 80% to at or about 200% of the capacity of R404A. The greater preferred compositions 3646 include at or about 42 wt%, or less than 42 wt% and greater than 0 wt% of R1132(E); at or about 25 - 87 wt% of R1234ze(E); and at or about 1 - 44 wt % of CO₂.

In an embodiment, the greater preferred compositions 3646 may include further greater preferred compositions 3648 as shown in Figure 31. The properties of the further greater preferred compositions 3648 include having a BV of at or less than 15 cm/s and from at or about 85% to at or about 200% of the capacity of R404A. The further greater preferred compositions 3648 include at or about 42 wt%, or less than 42 wt% and greater than 0 wt% of R1132(E); at or about 25 - 86 wt% of R1234ze(E); and at or about 3 - 44 wt % of CO₂.

In an embodiment, the further greater preferred compositions 3648 may include even further greater preferred compositions 3650 as shown in Figure 31. The properties of the even further greater preferred compositions 3650 include having a BV of at or less than 15 cm/s and from at or about 90% to at or about 200% of the capacity of R404A. The even further greater preferred compositions 3650 include at or about 42 wt%, or less than 42 wt% and greater than 0 wt% of R1132(E); at or about 25 - 85 wt% of R1234ze(E); and at or about 4 - 44 wt % of CO₂.

In an embodiment, the even further greater preferred compositions 3650 may include more further greater preferred compositions 3652 as shown in Figure 31. The properties of the more further greater preferred compositions 3652 include having a GWP of at or about or less than 300, a burning velocity of at or about or less than 15 cm/s, and from at or about 90% to at or about 200% of the capacity of R404A. The more further greater preferred compositions 3652 include at or about 42 wt%, or less than 42 wt% and greater than 0 wt% of R1132(E); at or about 25 - 83 wt% of R1234ze(E); and at or about 6 - 44 wt % of CO₂.

In some embodiments, a set of desired properties may include a capacity that is at or about or less than 125% of the capacity of R404A. In such embodiments, desired compositions may be selected from the further preferred compositions 3644, the greater preferred compositions 3646, the further greater preferred compositions 3648, and/or the even further greater preferred compositions 3450 that are also in the second preferred compositions 3642B. For example, an upper limit of R1132(E) in such desired compositions is at or about 39 wt%, a lower limit of R1234ze(E) in such desired compositions is at or about 48 wt%, and an upper limit of CO₂ in such desired compositions is at or about 24 wt%.

Figure 31 also includes a hatched area 3660. The compositions in the hatched area 3660 have a temperature glide of at or less than 20°K. In some embodiments, a set of desired properties may include a temperature glide of at or less than 20°K. In such embodiments, desired compositions may be selected from the compositions illustrated in Figure 31 (e.g., useful compositions 3640, first preferred compositions 3642A, second preferred compositions 3642B, further preferred compositions 3644, the greater preferred compositions 3646, the further greater preferred compositions 3648, the even further greater preferred compositions 3650, more further greater preferred compositions 3652) and described with respect to Figure 31 that are within the hatched area 3660. For example, an upper limit of R1234ze(E) in such desired compositions is at or about 83 wt%, and a lower limit of CO₂ in such desired compositions is at or about 15 wt%.

Figure 31 also includes shaded area 3670. The compositions in the shaded area 3670 have a BV of at or less than 10 cm/s. In some embodiments, a set of desired properties may include the lower BV provided by the compositions within the shaded area 3670 (e.g., a BV that is at or less than 10 cm/s). In such embodiments, desired compositions may be selected from the compositions illustrated in Figure 31 (e.g., useful compositions 3640, first preferred compositions 3642A, second preferred compositions 3642B, further preferred compositions 3644, greater preferred compositions 3646, further greater preferred compositions 3648, even further greater preferred compositions 3650, more further greater preferred compositions 3652) and described with respect to Figure 31 that are within the shaded area 3670.

For example, such desired compositions of the useful refrigerant compositions 3640 include at or about 31 wt%, or less than 31 wt% and greater than 0 wt% of R1132(E); less than 100 wt% and greater than 0 wt% of R1234ze(E); and less than 100 wt% and greater than 0 wt% of CO₂. For example, such desired compositions of the first preferred compositions 3642A include at or about 25 wt%, or less than 25 wt% and greater than 0 wt% of R1132(E); at or about 37 wt%, or greater than 37 wt% and less than 100 wt% of R1234ze(E); and at or about 44 wt %, or less than 44 wt% and greater than 0 wt% of CO₂. For example, such desired compositions of the second preferred compositions 3642B include at or about 22 wt%, or less than 22 wt% and greater than 0 wt% of R1132(E); at or about 60 wt%, or greater than 60 wt% and less than 100 wt% of R1234ze(E); and at or about 18 wt %, or less than 18 wt% and greater than 0 wt% of CO₂. For example, such desired compositions of the further preferred compositions 3644 include at or about 25 wt%, or less than 25 wt% and greater than 0 wt% of R1132(E); at or about 37 - 89 wt% of R1234ze(E); and at or about 5 - 44 wt % of CO₂. For example, such desired compositions of the greater preferred compositions 3646 include at or about 25 wt%, or less than 25 wt% and greater than 0 wt% of R1132(E); at or about 37 - 87 wt% of R1234ze(E); and at or about 7 - 44 wt % of CO₂. The further greater preferred compositions 3648 include at or about 25 wt%, or less than 25 wt% and greater than 0 wt% of R1132(E); at or about 37 - 86 wt% of R1234ze(E); and at or about 8 - 44 wt % of CO₂. For example, such desired compositions of the even further greater preferred compositions 3650 include at or about 25 wt%, or less than 25 wt% and greater than 0 wt% of R1132(E); at or about 37 - 85 wt% of R1234ze(E); and at or about 9 - 44 wt % of CO₂. For example, such desired compositions of the more further greater preferred compositions 3652 include at or about 25 wt%, or less than 25 wt% and greater than 0 wt% of R1132(E); at or about 37 - 83 wt% of R1234ze(E); and at or about 11 - 44 wt % of CO₂.

In some embodiments, a set of desired properties may include having a BV of 10 cm/s or less, a temperature glide of at or less than 20°K, and/or a capacity that is at or about or less than 125% of the capacity of R410A. In such embodiments, desired compositions may be selected from the compositions illustrated in Figure 31 (e.g., useful compositions 3640, first preferred compositions 3642A, second preferred compositions 3642B, further preferred compositions 3644, greater preferred compositions 3646, further greater preferred compositions 3648, even further greater preferred compositions 3650, more further greater preferred compositions 3652) and described with respect to Figure 31 that are two or more of not within the hatched area 3660, within the shaded area 3670, and/or in the second preferred compositions 3642B.

For example, in some embodiments, a set of desired properties may include having a BV of 10 cm/s or less and a temperature glide of at or less than 20°K. In such embodiments, desired compositions may be selected from the compositions illustrated in Figure 31 (e.g., useful compositions 3640, first preferred compositions 3642A, second preferred compositions 3642B, further preferred compositions 3644, greater preferred compositions 3646, further greater preferred compositions 3648, even further greater preferred compositions 3650, more further greater preferred compositions 3652) and described with respect to Figure 31 that are both not within the hatched area 3660 and within the shaded area 3670.

In some embodiments, a set of desired properties for a refrigerant composition may include a different temperature glide. In an embodiment, a temperature glide that is at or about or less than 30K may be desired. In an embodiment, a temperature glide that is at or about or less than 10K may be desired. In an embodiment, an OEL that is at or about or greater than 600 ppm may be desired. In an embodiment, an OEL that is at or about or greater than 700 ppm may be desired. It should be appreciated that the matrix 3600 in Figure 31 may be used to further select compositions/ranges with the desired temperature glide. For example, the different ranges of compositions described above with respect to Figure 31 may be modified/selected based on Figure 31 so as to have ranges of R1132(E), R1234ze(E), and CO₂ with the desired properties (e.g., temperature glide).

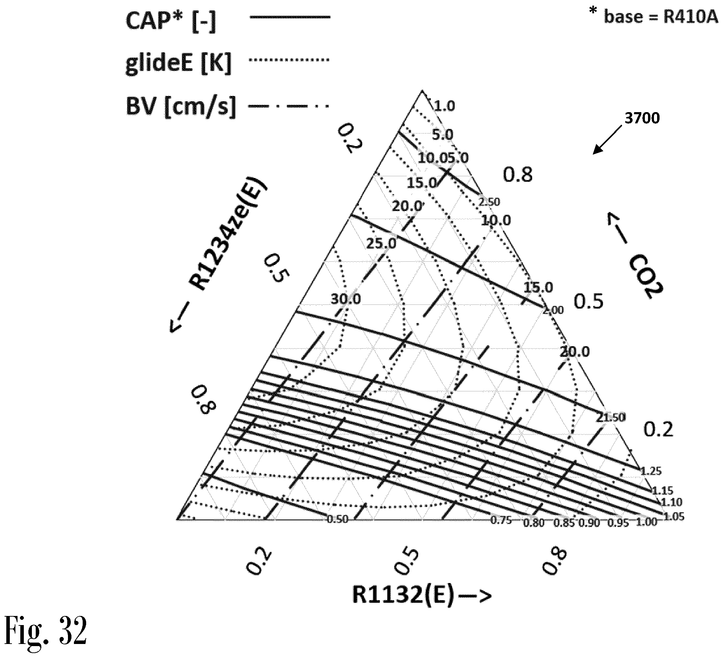

Referring to Figure 32, the matrix 3700 shows plots of BV, temperature glide, and capacity relative to R410A of a refrigerant composition as a function of the weight percentages of R1132(E), R1234ze(E), and CO₂. As similarly described above for the matrix 3600, the matrix 3700 in Figure 32 is a triangle that has sides that correspond to weight percentages (wt%) of R1132(E), R1234ze(E), and CO₂, respectively and vertexes that correspond to a composition of 100% R1132(E), 100% R1234ze(E), and 100% CO₂, respectively. In an embodiment, refrigerant compositions comprising R1132(E), R1234ze(E), and CO₂ can be selected based on the capacity, temperature glide, and/or BV as shown by the matrix 3700 in Figure 32.

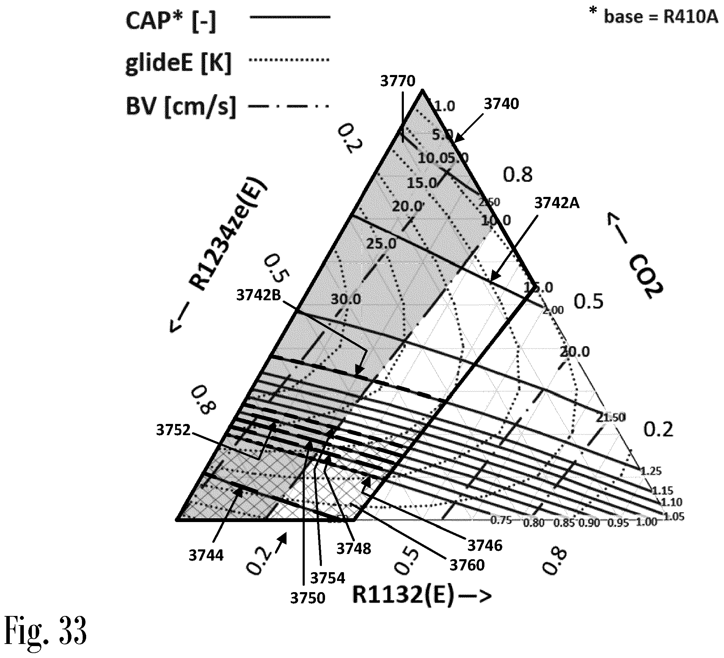

Figure 33 is the matrix 3700 of Figure 32 illustrated to show selected refrigerant compositions, according to an embodiment. As shown in Figure 33, the refrigerant compositions include (i.e., consist of, consist essentially of, or comprise) R1132(E), R1234ze(E), and CO₂. The refrigerant compositions can be selected based on one or more desired refrigerant composition properties such as the capacity relative to R410A, temperature glide, and BV.

In an embodiment, a desired set of properties of a useful refrigerant composition includes having a BV of at or less than 15 cm/s. Based on these desired properties, a range of useful refrigerant compositions 3740 is shown in the matrix 3700 of Figure 33. The useful refrigerant compositions 3740 include at or about 46 wt%, or less than 46 wt% and greater than 0 wt% of R1132(E); less than 100 wt% and greater than 0 wt% of R1234ze(E); and less than 100 wt% and greater than 0 wt% of CO₂.

In an embodiment, the useful compositions 3740 may include first preferred compositions 3742A as shown in Figure 33. The properties of the first preferred compositions 3742A include having a BV of at or less than 15 cm/s and at or about or less than 200% of the capacity of R410A. The first preferred compositions 3742A include at or about 45 wt%, or less than 45 wt% and greater than 0 wt% of R1132(E); at or about 3 wt%, or greater than 3 wt% and less than 100 wt% of R1234ze(E); and at or about 71 wt%, or less than 71 wt% and greater than 0 wt% of CO₂.

In an embodiment, the useful compositions 3740 may include second preferred compositions 3742B as shown in Figure 33. The properties of the second preferred compositions 3742B include having a BV of at or less than 15 cm/s and at or about or less than 125% of the capacity of R410A. The second preferred compositions 3742B include at or about 41 wt%, or less than 41 wt% and greater than 0 wt% of R1132(E); at or about 32 wt%, or greater than 32 wt% and less than 100 wt% of R1234ze(E); and at or about 38 wt%, or less than 38 wt% and greater than 0 wt% of CO₂.

In an embodiment, the first preferred compositions 3742A may include further preferred compositions 3744 as shown in Figure 33. The properties of the further preferred compositions 3744 include having a BV of at or less than 15 cm/s and from at or about 50% to at or about 200% of the capacity of R410A. The further preferred compositions 3744 include at or about 45 wt%, or less than 45 wt% and greater than 0 wt% of R1132(E); at or about 3 - 89 wt% of R1234ze(E); and at or about 71 wt%, or less than 71 wt% and greater than 0 wt% of CO₂.

In an embodiment, the further preferred compositions 3744 may include greater preferred compositions 3746 as shown in Figure 33. The properties of the greater preferred compositions 3746 include having a BV of at or less than 15 cm/s and from at or about 75% to at or about 200% of the capacity of R410A. The greater preferred compositions 3746 include at or about 45 wt%, or less than 45 wt% and greater than 0 wt% of R1132(E); at or about 3-80 wt% of R1234ze(E); and at or about 9 - 71 wt% of CO₂.

In an embodiment, the greater preferred compositions 3746 may include further greater preferred compositions 3748 as shown in Figure 33. The properties of the further greater preferred compositions 3748 include having a BV of at or less than 15 cm/s and from at or about 80% to at or about 200% of the capacity of R410A. The further greater preferred compositions 3748 include at or about 45 wt%, or less than 45 wt% and greater than 0 wt% of R1132(E); at or about 3 - 78 wt% of R1234ze(E); and at or about 11 - 71 wt% of CO₂.

In an embodiment, the further greater preferred compositions 3748 may include even further greater preferred compositions 3750 as shown in Figure 33. The properties of the even further greater preferred compositions 3750 include having a BV of at or less than 15 cm/s and from at or about 85% to at or about 200% of the capacity of R410A. The even further greater preferred compositions 3750 include at or about 45 wt%, or less than 45 wt% and greater than 0 wt% of R1132(E); at or about 3 - 77 wt% of R1234ze(E); and at or about 13 - 71 wt% of CO₂.

In an embodiment, the even further greater preferred compositions 3750 may include more further greater preferred compositions 3752 as shown in Figure 33. The properties of the more further greater preferred compositions 3752 include having a BV of at or less than 15 cm/s and from at or about 90% to at or about 200% of the capacity of R410A. The more further greater preferred compositions 3752 include at or about 45 wt%, or less than 45 wt% and greater than 0 wt% of R1132(E); at or about 3 - 75 wt% of R1234ze(E); and at or about 15 - 71 wt% of CO₂.

In an embodiment, the more further greater preferred compositions 3752 may include even more further greater preferred compositions 3754 as shown in Figure 33. The properties of the even more further greater preferred compositions 3754 include having a BV of at or less than 15 cm/s and from at or about 95% to at or about 200% of the capacity of R410A. The even more further greater preferred compositions 3754 include at or about 45 wt%, or less than 45 wt% and greater than 0 wt% of R1132(E); at or about 3 - 73 wt% of R1234ze(E); and at or about 17 - 71 wt% of CO₂.

In some embodiments, a set of desired properties may include a capacity that is at or about or less than 125% of the capacity of R410A. In such embodiments, desired compositions may be selected from the further preferred compositions 3744, the greater preferred compositions 3746, the further greater preferred compositions 3748, the even further greater preferred compositions 3750, the more further greater preferred compositions 3752, and/or the even more further greater preferred compositions 3754 that are also in the second preferred compositions 3742B. For example, an upper limit of R1132(E) in such desired compositions is at or about 41 wt%, a lower limit of R1234ze(E) in such desired compositions is at or about 32 wt%, and an upper limit of CO₂ in such desired compositions is at or about 38 wt%.

Figure 33 also includes a hatched area 3760. The compositions in the hatched area 3760 have a temperature glide of at or less than 20°K. In some embodiments, a set of desired properties may include a temperature glide of at or less than 20°K. In such embodiments, desired compositions may be selected from the compositions illustrated in Figure 33 (e.g., useful compositions 3740, first preferred compositions 3742A, second preferred compositions 3742B, further preferred compositions 3744, the greater preferred compositions 3746, the further greater preferred compositions 3748, the even further greater preferred compositions 3750, the more further greater preferred compositions 3752, the even more further greater preferred compositions 3754) and described with respect to Figure 33 that are within the hatched area 3760. For example, an upper limit of R1234ze(E) in such desired compositions is at or about 83 wt%, and a lower limit of CO₂ in such desired compositions is at or about 16 wt%. In some embodiments, a set of desired properties may include having a capacity that is at or about or less than 125% of the capacity of R410A and have a temperature glide of 20°K or less. In such embodiments, desired compositions may be selected from the further preferred compositions 3744, the greater preferred compositions 3746, the further greater preferred compositions 3748, the even further greater preferred compositions 3750, the more further greater preferred compositions 3752, and/or the even more further greater preferred compositions 3754 that are in the second preferred compositions 3742B and not in the hatched area 3760. For example, an upper limit of R1132(E) in such embodiments is at or about 41 wt%, a lower limit of R1234ze(E) in such desired compositions is at or about 38 wt%, and a lower limit of CO₂ in such desired compositions is at or about 16 wt%.

Figure 33 also includes shaded area 3770. The compositions in the shaded area 3770 have a BV of at or less than 10 cm/s. In some embodiments, a set of desired properties may include the lower BV provided by the compositions within the shaded area 3770 (e.g., a BV that is at or less than 10 cm/s). In such embodiments, desired compositions may be selected from the compositions illustrated in Figure 33 (e.g., useful compositions 3740, first preferred compositions 3742A, second preferred compositions 3742B, further preferred compositions 3744, greater preferred compositions 3746, further greater preferred compositions 3748, even further greater preferred compositions 3750 the more further greater preferred compositions 3752, the even more further greater preferred compositions 3754) and described with respect to Figure 33 that are within the shaded area 3770.

For example, such desired compositions of the useful refrigerant compositions 3740 include at or about 31 wt%, or less than 31 wt% and greater than 0 wt% of R1132(E); less than 100 wt% and greater than 0 wt% of R1234ze(E); and less than 100 wt% and greater than 0 wt% of CO₂. For example, such desired compositions of the first preferred compositions 3742A include at or about 29 wt%, or less than 29 wt% and greater than 0 wt% of R1132(E); at or about 13 wt%, or greater than 13 wt% and less than 100 wt% of R1234ze(E); and at or about 71 wt%, or less than 71 wt% and greater than 0 wt% of CO₂. For example, such desired compositions of the second preferred compositions 3742B include at or about 24 wt%, or less than 24 wt% and greater than 0 wt% of R1132(E); at or about 44 wt%, or greater than 44 wt% and less than 100 wt% of R1234ze(E); and at or about 38 wt%, or less than 38 wt% and greater than 0 wt% of CO₂. For example, such desired compositions of the further preferred compositions 3744 include at or about 29 wt%, or less than 29 wt% and greater than 0 wt% of R1132(E); at or about 13 - 89 wt% of R1234ze(E); and at or about 5 - 71 wt% of CO₂. For example, such desired compositions of the greater preferred compositions 3746 include at or about 29 wt%, or less than 29 wt% and greater than 0 wt% of R1132(E); at or about 3-80 wt% of R1234ze(E); and at or about 14 - 71 wt% of CO₂. For example, such desired compositions of the further greater preferred compositions 3748 include at or about 29 wt%, or less than 29 wt% and greater than 0 wt% of R1132(E); at or about 3 - 78 wt% of R1234ze(E); and at or about 16 - 71 wt% of CO₂. For example, such desired compositions of the even further greater preferred compositions 3750 include at or about 29 wt%, or less than 29 wt% and greater than 0 wt% of R1132(E); at or about 3 - 77 wt% of R1234ze(E); and at or about 18 - 71 wt% of CO₂. For example, such desired compositions of the more further greater preferred compositions 3752 include at or about 29 wt%, or less than 29 wt% and greater than 0 wt% of R1132(E); at or about 3 - 75 wt% of R1234ze(E); and at or about 20 - 71 wt% of CO₂. For example, such desired compositions of the even more further greater preferred compositions 3754 include at or about 29 wt%, or less than 29 wt% and greater than 0 wt% of R1132(E); at or about 3 - 73 wt% of R1234ze(E); and at or about 21 - 71 wt% of CO₂.

In some embodiments, a set of desired properties may include having a BV of 10 cm/s or less, a temperature glide of at or less than 20°K, and/or a capacity that is at or about or less than 125% of the capacity of R410A. In such embodiments, desired compositions may be selected from the compositions illustrated in Figure 33 (e.g., useful compositions 3740, first preferred compositions 3742A, second preferred compositions 3742B, further preferred compositions 3744, greater preferred compositions 3746, further greater preferred compositions 3748, even further greater preferred compositions 3750) and described with respect to Figure 33 that are two or more of not within the hatched area 3760, within the shaded area 3770, and/or in the second preferred compositions 3742B.

In some embodiments, a set of desired properties for a refrigerant composition may include a different temperature glide and/or a different capacity. In an embodiment, a temperature glide that is at or about or less than 30K may be desired. In an embodiment, a temperature glide that is at or about or less than 10K may be desired. In an embodiment, a capacity that is at or about or less than 150% of the capacity of R410A may be desired. In an embodiment, a capacity that is at or about or less than 115% of the capacity of R410A may be desired. In an embodiment, a capacity that is at or about or less than 110% of the capacity of R410A may be desired. In an embodiment, a capacity that is at or about or less than 105% of the capacity of R410A may be desired. It should be appreciated that the matrix 3700 in Figure 33 may be used to further select compositions/ranges with the desired temperature glide. For example, the different ranges of compositions described above with respect to Figure 33 may be modified/selected based on Figure 33 so as to have ranges of R1132(E), R1234ze(E), and CO₂ with the desired properties (e.g., temperature glide and/or capacity).

### Refrigerant Compositions including R1132(E), R134a, and a third refrigerant

In an embodiment, a refrigerant composition consists of, consists essentially of, or comprises R1132(E), R134a, and the third refrigerant. Each of Figures 34 - 49 shows a matrix 4000, 4100, 4200, 4300, 4400, 4500, 4600, or 4700 of compositions of R1132(E), R134a, and a third refrigerant. In each matrix, properties of the refrigerant compositions (e.g., GWP, toxicity, flammability, temperature glide, capacity relative to another refrigerant composition, and/or the like) are plotted as a function of the weight percentage (wt%) of each R1132(E), R134a, and a third refrigerant. In an embodiment, a method of making a refrigerant composition utilizes one or more of the matrixes of Figures 34 - 49 so that the refrigerant composition has a desired property or properties.

For example, as shown in Figure 34, each side 4010, 4020, 4030 of the triangle corresponds to weight percentages (wt%) of R1132(E), R134a, and the third refrigerant, respectively. In Figures 34 - 37, the third refrigerant is R32. Each vertex 4011, 4021, 4031 corresponds to a composition of 100% R1132(E), 100% R1234ze(E), and 100% R32, respectively. The properties (e.g., GWP, toxicity, flammability, temperature glide, and/or capacity relative to R404A) of the refrigerant compositions and the weight percent of R1132(E), R134a, and R32, can be determined using the matrix 4000. Properties of the compositions represented in the matrix 4000 were determined using a thermodynamic model based on experimental results. Figure 34 shows embodiments of the refrigerant compositions having preferred ranges of weight percentages of R1132(E), R1234ze(E), and R32, respectively, and selected based on one or more desired properties for a refrigerant composition.

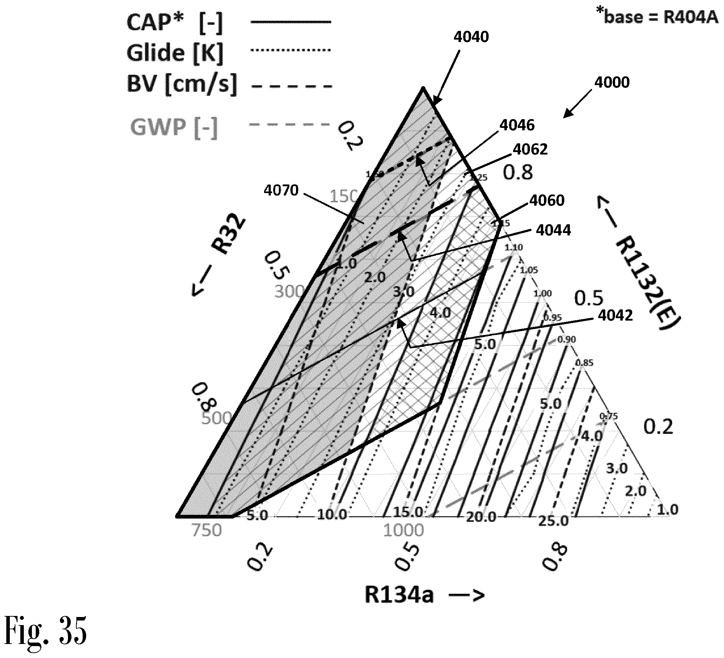

Figures 35 - 49 similarly illustrate refrigerant compositions of R1132(E), R134a, and a third refrigerant; the properties of the refrigerant compositions according to the weight percentages of R1132(E), R134a, and the third refrigerant; and/or the preferred ranges.

It is appreciated that the boundary between satisfying the classification of Class 2L and Class 2 can be a BV of 100 mm (i.e., 10 cm) per second determined, for example, based on ASHRAE Standard 34. The BV lines are estimated based on characteristics of the individual components and/or various binary mixtures of the components. Accordingly, the amount of each refrigerant in a composition along each burning velocity line may, for example, vary by about 5 percent in an embodiment. It should be appreciated that the compositions and ranges shown and/or described may be updated based on further testing to confirm the location(s) of the burning velocity line(s).

Figures 34 - 37 each show a matrix 4000, 4100 of refrigerant compositions that include R1132(E), R134a, and R32, according to an embodiment. Referring to Figure 34, the matrix 4000 shows plots of GWP, BV, temperature glide, capacity relative to R404A of a refrigerant composition as a function of the weight percentages of R1132(E), R134a, and R32. In an embodiment, refrigerant compositions comprising R1132(E), R134a, and R32 can be selected based on the capacity, temperature glide, BV, and/or GWP shown in Figure 34.

Figure 35 is the matrix 4000 of Figure 34 illustrated to show selected refrigerant compositions, according to an embodiment. As shown in Figure 35, the refrigerant compositions include (i.e., consist of, consist essentially of, or comprise) R1132(E), R134a, and R32. The refrigerant compositions can be selected based on one or more desired refrigerant composition properties such as the capacity relative to R404A, temperature glide, BV, and GWP.

In an embodiment, a desired set of properties of a useful refrigerant composition includes having a GWP of at or about or less than 750 and a burning velocity of at or less than 15 cm/s. Based on these desired properties, a range of useful refrigerant compositions 4040 is shown in the matrix 4000 of Figure 35. The useful refrigerant compositions 4040 include less than 100 wt% and greater than 0 wt% of R1132(E); at or about 40 wt%, or less than 40 wt% and greater than 0 wt% of R134a; and less than 100 wt% and greater than 0 wt% of R32.

In an embodiment, the useful compositions 4040 may include preferred compositions 4042 as shown in Figure 35. The properties of the preferred compositions 4042 include having a GWP of at or about or less than 500 and a burning velocity of at or less than 15 cm/s. The preferred compositions 4042 include at or about 26 wt%, or greater than 26 wt% and less than 100 wt% of R1132(E); at or about 34 wt%, or less than 34 wt% and greater than 0 wt% of R134a; and at or about 74 wt%, or less than 74 wt% and greater than 0 wt% of R32.

In an embodiment, the preferred compositions 4042 may include further preferred compositions 4044 as shown in Figure 35. The properties of the further preferred compositions 4044 include having a GWP of at or about or less than 300 and a burning velocity of at or less than 15 cm/s. The further preferred compositions 4044 include at or about 56 wt%, or greater than 56 wt% and less than 100 wt% of R1132(E); at or about 23 wt%, or less than 23 wt% and greater than 0 wt% of R134a; and at or about 44 wt%, or less than 44 wt% and greater than 0 wt% of R32.

In an embodiment, the further preferred compositions 4044 may include greater preferred compositions 4046 as shown in Figure 35. The properties of the greater preferred compositions 4046 include having a GWP of at or about or less than 150 and a burning velocity of at or less than 15 cm/s. The greater preferred compositions 4046 include at or about 78 wt%, or greater than 78 wt% and less than 100 wt% of R1132(E); at or about 11 wt%, or less than 11 wt% and greater than 0 wt% of R134a; and at or about 22 wt%, or less than 22 wt% and greater than 0 wt% of R32.

Figure 35 also includes hatched areas 4060, 4062. The compositions in the hatched areas 4060, 4062 have at or about or less than 150% of the capacity of R404A. As shown in Figure 35, the compositions in the hatched area 4060, 4062 also have greater than 115% of the capacity of R404A. In some embodiments, a set of desired properties may include the capacity provided by the compositions within the hatched areas 4060, 4062 (e.g., capacity that is at or about or less than 150% of the capacity of R404, a capacity more similar to the capacity of R404A). In such embodiments, desired compositions may be selected from the compositions illustrated in Figure 35 (e.g., useful compositions 4040, preferred compositions 4042, further preferred compositions 4044) and described with respect to Figure 35 that are within the hatched areas 4060, 4062.

For example, such desired compositions of the useful refrigerant compositions 4040 include less than 100 wt% and greater than 0 wt% of R1132(E); at or about 40 wt%, or less than 40 wt% and greater than 0 wt% of R134a; and at or about 94 wt%, or less than 94 wt% and greater than 0 wt% of R32. For example, such desired compositions of the preferred compositions 4042 include at or about 30 wt%, or greater than 30 wt% and less than 100 wt% of R1132(E); at or about 34 wt%, or less than 34 wt% and greater than 0 wt% of R134a; and at or about 66 wt%, or less than 66 wt% and greater than 0 wt% of R32. For example, such desired compositions of the further preferred compositions 4044 include at or about 58 wt%, or greater than 58 wt% and less than 100 wt% of R1132(E); at or about 23 wt%, or less than 23 wt% and greater than 0 wt% of R134a; and at or about 40 wt%, or less than 40 wt% and greater than 0 wt% of R32.

The hatched areas 4060, 4062 in Figure 35 include a first hatched area 4060 and a second hatched area 4062. The compositions in the first hatched area 4060 have at or about or less than 125% of the capacity of R404A. In some embodiments, a set of desired properties may include the more comparable capacity provided by the compositions within the first hatched area 4060 (e.g., capacity that is at or about or less than 125% of the capacity of R404, a capacity more similar to the capacity of R410A). In such embodiments, desired compositions may be selected from the compositions illustrated in Figure 35 (e.g., useful compositions 4040, preferred compositions 4042, further preferred compositions 4044) and described with respect to Figure 35 that are within the first hatched area 4060.

For example, such desired compositions of the useful refrigerant compositions 4040 include at or about 17 - 78 wt% of R1132(E); at or about 22 - 40 wt% of R134a; and at or about 53 wt%, or less than 53 wt% and greater than 0 wt% of R32. For example, such desired compositions of the preferred compositions 4042 include at or about 50 - 78 wt% of R1132(E); at or about 22 - 34 wt% of R134a; and at or about 25 wt%, or less than 25 wt% and greater than 0 wt% of R32. For example, such desired compositions of the further preferred compositions 4044 include at or about 76 - 78 wt% of R1132(E); at or about 22 - 23 wt% of R134a; and at or about 2 wt%, or less than 2 wt% and greater than 0 wt% of R32.Figure 35 also includes shaded area 4070. The compositions in the shaded area 4070 have a BV of at or less than 10 cm/s. In some embodiments, a set of desired properties may include the lower BV provided by the compositions within the shaded area 4070 (e.g., a BV that is at or less than 10 cm/s). In such embodiments, desired compositions may be selected from the compositions illustrated in Figure 35 (e.g., useful compositions 4040, preferred compositions 4042, further preferred compositions 4044) and described with respect to Figure 35 that are within the shaded area 4070.

For example, such desired compositions of the useful refrigerant compositions 4040 include less than 100 wt% and greater than 0 wt% of R1132(E); at or about 27 wt%, or less than 27 wt% and greater than 0 wt% of R134a; and less than 100 wt% and greater than 0 wt% of R32. For example, such desired compositions of the preferred compositions 4042 include at or about 26 wt%, or greater than 26 wt% and less than 100 wt% of R1132(E); at or about 21 wt%, or less than 21 wt% and greater than 0 wt% of R134a; and at or about 74 wt%, or less than 74 wt% and greater than 0 wt% of R32. For example, such desired compositions of the further preferred compositions 4044 include at or about 56 wt%, or greater than 56 wt% and less than 100 wt% of R1132(E); at or about 16 wt%, or less than 16 wt% and greater than 0 wt% of R134a; and at or about 44 wt%, or less than 44 wt% and greater than 0 wt% of R32.

In some embodiments, a set of desired properties may include having a BV of 10 cm/s and a capacity that is at or about or less than 150% of the capacity of R410A. In such embodiments, desired compositions may be selected from the compositions illustrated in Figure 35 (e.g., useful compositions 4040, preferred compositions 4042, further preferred compositions 4044, greater preferred compositions 4046) and described with respect to Figure 35 that within both the second hatched area 4062 and the shaded area 4070. For example, an upper limit of R134a in such desired compositions is at or about 27 wt%, and an upper limit of R32 in such desired compositions is at or about 94 wt%.

In some embodiments, a set of desired properties for a refrigerant composition may include a temperature glide. In an embodiment, a temperature glide that is at or about or less than 5K may be desired. In an embodiment, a temperature glide that is at or about or less than 2K may be desired. In an embodiment, a temperature glide that is at or about or less than 1K may be desired. It should be appreciated that the matrix 4000 in Figure 35 may be used to further select compositions/ranges with the desired temperature glide. For example, the different ranges of compositions described above with respect to Figure 35 may be modified/selected based on Figure 35 so as to have ranges of R1132(E), R134a, and R32 with the desired properties (e.g., temperature glide).

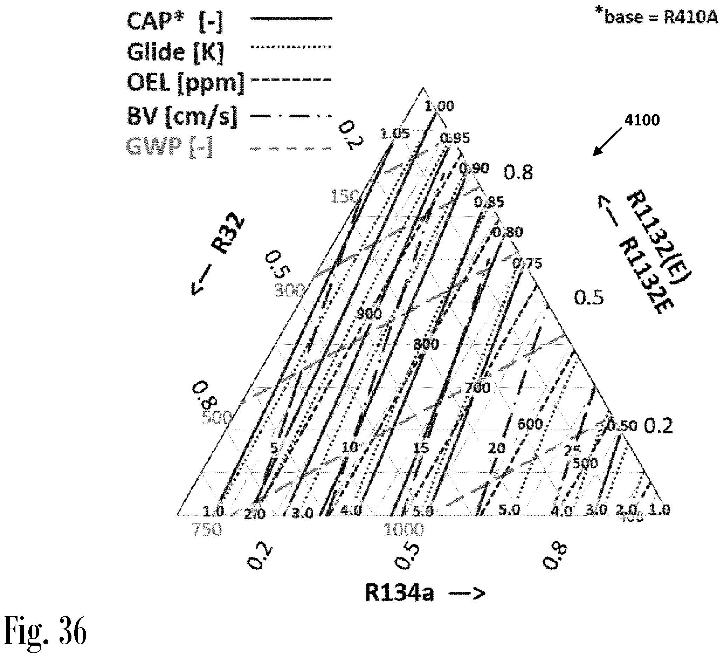

Referring to Figure 36, the matrix 4100 shows plots of GWP, BV, temperature glide, capacity relative to R410A of a refrigerant composition as a function of the weight percentages of R1132(E), R134a, and R32. As similarly described above for the matrix 4000, the matrix 4100 in Figure 36 is a triangle that has sides that correspond to weight percentages (wt%) of R1132(E), R134a, and R32, respectively and vertexes that correspond to a composition of 100% R1132(E), 100% R134a, and 100% R32, respectively. In an embodiment, refrigerant compositions comprising R1132(E), R134a, and R32 can be selected based on the capacity, temperature glide, BV, and/or GWP shown in Figure 36.

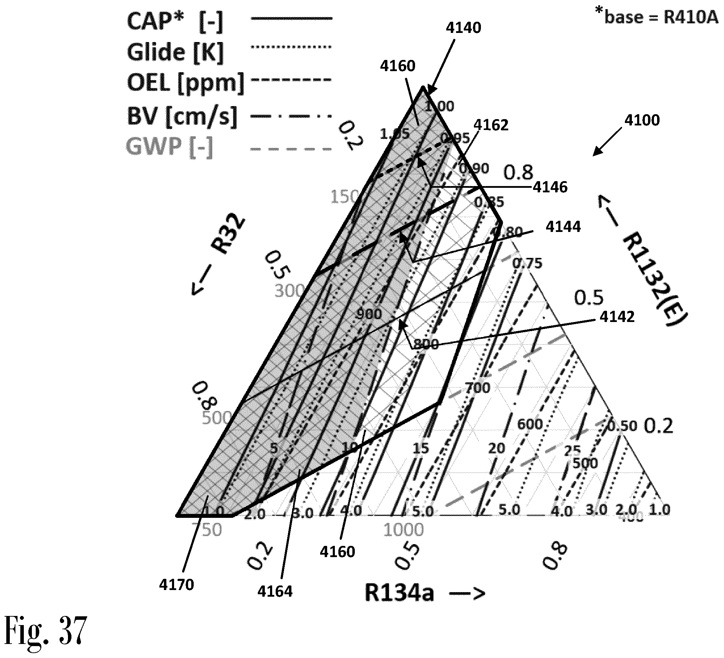

Figure 37 is the matrix 4100 of Figure 36 illustrated to show selected refrigerant compositions, according to an embodiment. As shown in Figure 37, the refrigerant compositions include (i.e., consist of, consist essentially of, or comprise) R1132(E), R134a, and R32. The refrigerant compositions can be selected based on one or more desired refrigerant composition properties such as the capacity relative to R410A, temperature glide, BV, and GWP.

In an embodiment, a desired set of properties of a useful refrigerant composition includes having a GWP of at or about or less than 750 and a burning velocity of at or less than 15 cm/s. Based on these desired properties, a range of useful refrigerant compositions 4140 is shown in the matrix 4100 of Figure 37. The useful refrigerant compositions 4140 include less than 100 wt% and greater than 0 wt% of R1132(E); at or about 40 wt%, or less than 40 wt% and greater than 0 wt% of R134a; and less than 100 wt% and greater than 0 wt% of R32.

In an embodiment, the useful compositions 4140 may include preferred compositions 4142 as shown in Figure 37. The properties of the preferred compositions 4142 include having a GWP of at or about or less than 500 and a burning velocity of at or less than 15 cm/s. The preferred compositions 4142 include at or about 26 wt%, or greater than 26 wt% and less than 100 wt% of R1132(E); at or about 34 wt%, or less than 34 wt% and greater than 0 wt% of R134a; and at or about 74 wt%, or less than 74 wt% and greater than 0 wt% of R32.

In an embodiment, the preferred compositions 4142 may include further preferred compositions 4144 as shown in Figure 37. The properties of the further preferred compositions 4144 include having a GWP of at or about or less than 300 and a burning velocity of at or less than 15 cm/s. The further preferred compositions 4144 include at or about 56 wt%, or greater than 56 wt% and less than 100 wt% of R1132(E); at or about 23 wt%, or less than 23 wt% and greater than 0 wt% of R134a; and at or about 44 wt%, or less than 44 wt% and greater than 0 wt% of R32.

In an embodiment, the further preferred compositions 4144 may include greater preferred compositions 4146 as shown in Figure 37. The properties of the greater preferred compositions 4146 include having a GWP of at or about or less than 150 and a burning velocity of at or less than 15 cm/s. The greater preferred compositions 4146 include at or about 78 wt%, or greater than 78 wt% and less than 100 wt% of R1132(E); at or about 23 wt%, or less than 23 wt% and greater than 0 wt% of R134a; and at or about 11 wt%, or less than 11 wt% and greater than 0 wt% of R32.

Figure 37 also includes hatched areas 4160, 4162, 4164. The compositions in the hatched areas 4160, 4162, 4164 have at or about or greater than 85% of the capacity of R404A. As shown in Figure 37, the compositions in the hatched areas 4160, 4162, 4164 also have less than 125% of the capacity of R404A. In some embodiments, a set of desired properties may include the higher capacity provided by the compositions within the hatched areas 4160, 4162, 4164 (e.g., capacity that is at or about or greater than 85% of the capacity of R410A, a capacity more similar to the capacity of R410A). In such embodiments, desired compositions may be selected from the compositions illustrated in Figure 37 (e.g., useful compositions 4140, preferred compositions 4142) and described with respect to Figure 37 that are within the hatched areas 4160, 4162, 4164.

For example, such desired compositions of the useful refrigerant compositions 4140 include less than 100 wt% and greater than 0 wt% of R1132(E); at or about 34 wt%, or less than 34 wt% and greater than 0 wt% of R134a; and less than 100 wt% and greater than 0 wt% of R32. For example, such desired compositions of the preferred compositions 4142 include at or about 26 wt%, or greater than 26 wt% and less than 100 wt% of R1132(E); at or about 29 wt%, or less than 29 wt% and greater than 0 wt% of R134a; and at or about 74 wt%, or less than 74 wt% and greater than 0 wt% of R32.

The hatched areas 4160, 4162, 4164 in Figure 37 include a first hatched area 4060, a second hatched area 4162, and a third hatched area 4164. The compositions in the first hatched area 4160 and the second hatched area 4162 have at or about or greater than 90% of the capacity of R410A. In some embodiments, a set of desired properties may include the higher capacity provided by the compositions within the first and second hatched areas 4160, 4162 (e.g., capacity that is at or about or greater than 90% of the capacity of R410A, a capacity more similar to the capacity of R410A). In such embodiments, desired compositions may be selected from the compositions illustrated in Figure 37 (e.g., useful compositions 4140, preferred compositions 4142, further preferred compositions 4144) and described with respect to Figure 37 that are within one of the first hatched area 4160 and the second hatched area 4162.

For example, such desired compositions of the useful refrigerant compositions 4140 include less than 100 wt% and greater than 0 wt% of R1132(E); at or about 27 wt%, or less than 27 wt% and greater than 0 wt% of R134a; and less than 100 wt% and greater than 0 wt% of R32. For example, such desired compositions of the preferred compositions 4142 include at or about 26 wt%, or greater than 26 wt% and less than 100 wt% of R1132(E); at or about 23 wt%, or less than 23 wt% and greater than 0 wt% of R134a; and at or about 74 wt%, or less than 74 wt% and greater than 0 wt% of R32. For example, such desired compositions of the further preferred compositions 4144 include at or about 56 wt%, or greater than 56 wt% and less than 100 wt% of R1132(E); at or about 20 wt%, or less than 20 wt% and greater than 0 wt% of R134a; and at or about 44 wt%, or less than 44 wt% and greater than 0 wt% of R32.

The compositions in the first hatched area 4160 have at or about or greater than 95% of the capacity of R410A. In some embodiments, a set of desired properties may include the higher capacity provided by the compositions within the first hatched area 4160 (e.g., capacity that is at or about or greater than 95% of the capacity of R410A, a capacity more similar to the capacity of R410A). In such embodiments, desired compositions may be selected from the compositions illustrated in Figure 37 (e.g., useful compositions 4140, preferred compositions 4142, further preferred compositions 4144) and described with respect to Figure 37 that are within the first hatched area 4160.

For example, such desired compositions of the useful refrigerant compositions 4140 include less than 100 wt% and greater than 0 wt% of R1132(E); at or about 21 wt%, or less than 21 wt% and greater than 0 wt% of R134a; and less than 100 wt% and greater than 0 wt% of R32. For example, such desired compositions of the preferred compositions 4142 include at or about 26 wt%, or greater than 26 wt% and less than 100 wt% of R1132(E); at or about 17 wt%, or less than 17 wt% and greater than 0 wt% of R134a; and at or about 74 wt%, or less than 74 wt% and greater than 0 wt% of R32. For example, such desired compositions of the further preferred compositions 4144 include at or about 56 wt%, or greater than 56 wt% and less than 100 wt% of R1132(E); at or about 14 wt%, or less than 14 wt% and greater than 0 wt% of R134a; and at or about 44 wt%, or less than 44 wt% and greater than 0 wt% of R32.

Figure 37 also includes shaded area 4170. The compositions in the shaded area 4170 have a BV of at or less than 10 cm/s. In some embodiments, a set of desired properties may include the lower BV provided by the compositions within the shaded area 4170 (e.g., a BV that is at or less than 10 cm/s). In such embodiments, desired compositions may be selected from the compositions illustrated in Figure 37 (e.g., useful compositions 4140, preferred compositions 4142, further preferred compositions 4144) and described with respect to Figure 37 that are within the shaded area 4170.

For example, such desired compositions of the useful refrigerant compositions 4140 include less than 100 wt% and greater than 0 wt% of R1132(E); at or about 28 wt%, or less than 28 wt% and greater than 0 wt% of R134a; and less than 100 wt% and greater than 0 wt% of R32. For example, such desired compositions of the preferred compositions 4142 include at or about 26 wt%, or greater than 26 wt% and less than 100 wt% of R1132(E); at or about 21 wt%, or less than 21 wt% and greater than 0 wt% of R134a; and at or about 74 wt%, or less than 74 wt% and greater than 0 wt% of R32. For example, such desired compositions of the further preferred compositions 4144 include at or about 56 wt%, or greater than 56 wt% and less than 100 wt% of R1132(E); at or about 16 wt%, or less than 16 wt% and greater than 0 wt% of R134a; and at or about 44 wt%, or less than 44 wt% and greater than 0 wt% of R32.

In some embodiments, a set of desired properties for a refrigerant composition may include a temperature glide. In an embodiment, a temperature glide that is at or about or less than 5K may be desired. In an embodiment, a temperature glide that is at or about or less than 2K may be desired. In an embodiment, a temperature glide that is at or about or less than 1K may be desired. It should be appreciated that the matrix 4100 in Figure 37 may be used to further select compositions/ranges with the desired temperature glide. For example, the different ranges of compositions described above with respect to Figure 37 may be modified/selected based on Figure 37 so as to have ranges of R1132(E), R134a, and R32 with the desired properties (e.g., temperature glide).

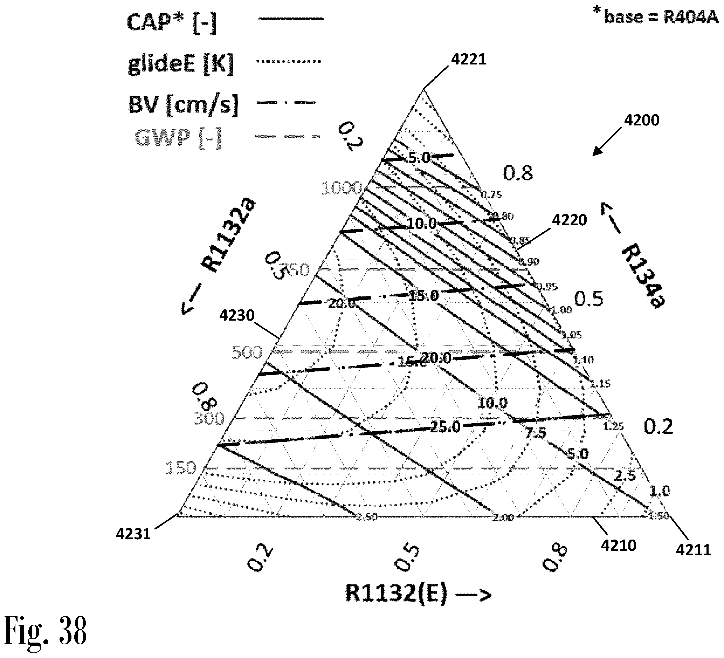

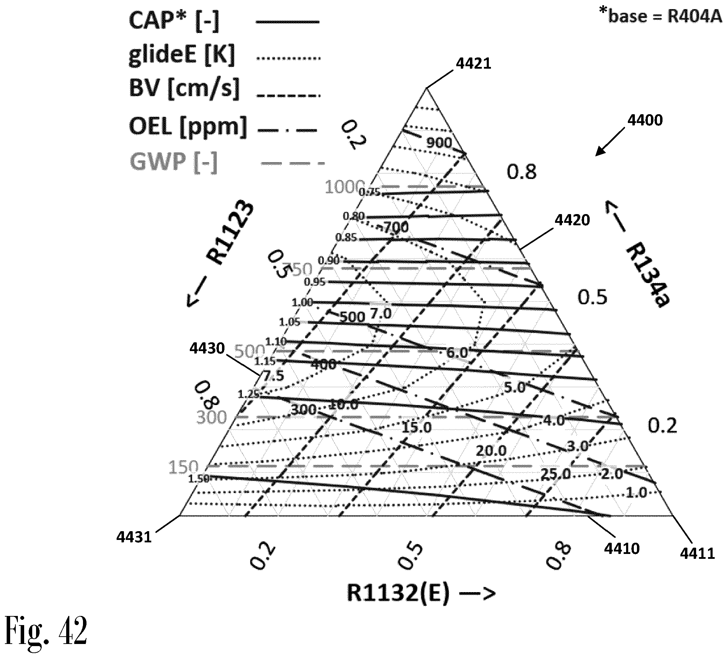

Figures 38 - 41 each show a matrix 4200, 4300 of refrigerant compositions that include R1132(E), R134a, and R1132a, according to an embodiment. In the illustrated embodiment, the R1132a is the third refrigerant. The matrix 4200, 4300 in each of Figures 42 - 45 have a similar triangle layout as described above for the matrixes 4000, 4100 in Figures 38-41. For example, as shown in Figure 38, each side 4210, 4220, 4230 of the triangle can correspond to weight percentages (wt%) of R1132(E), R134a, and R1132a, respectively. Each vertex 4211, 4221, 4231 corresponds to a composition of 100% R1132(E), 100% R134a, and 100% R1132a, respectively. The properties (e.g., GWP, flammability, temperature glide, and/or capacity relative to R404A, and/or capacity relative to R410A) of the refrigerant compositions and the weight percent of R1132(E), R134a, and R1132a, can be determined using the matrix 4200 and/or the matrix 4300. Properties of the compositions represented in the matrixes 4200, 4300 were determined using a thermodynamic model based on experimental results. In an embodiment, refrigerant compositions comprising R1132(E), R134a, and R1132a can be selected based on the capacity, temperature glide, BV, and/or GWP shown in Figure 38.

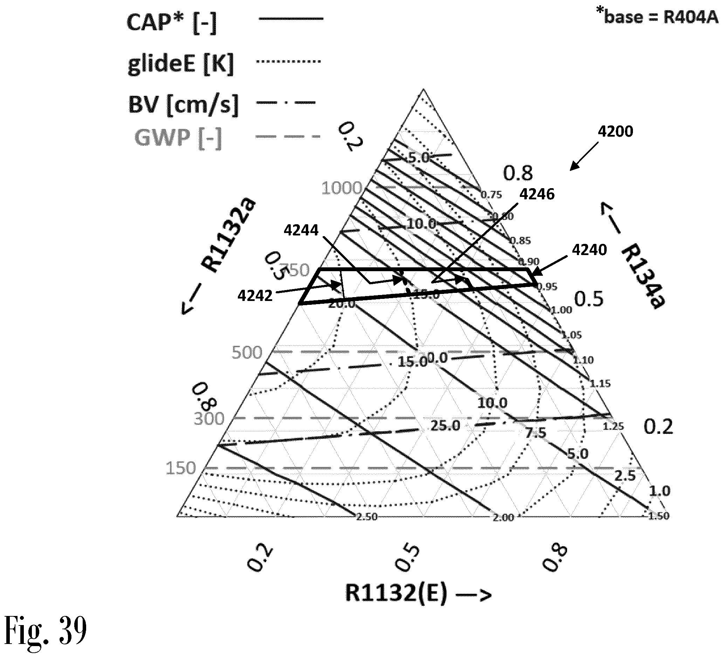

Figure 39 is the matrix 4200 of Figure 38 illustrated to show selected refrigerant compositions, according to an embodiment. As shown in Figure 39, the refrigerant compositions include (i.e., consist of, consist essentially of, or comprise) R1132(E), R134a, and R1132a. The refrigerant compositions can be selected based on one or more desired refrigerant composition properties such as the capacity relative to R410A, temperature glide, BV, and GWP.

In an embodiment, a desired set of properties of a useful refrigerant composition includes having a burning velocity of at or less than 15 cm/s and a GWP of at or about or less than 750. Based on these desired properties, a range of useful refrigerant compositions 4240 is shown in the matrix 4200 of Figure 39. As shown in Figure 39, the useful refrigerant compositions 4240 also have greater than 90% of the capacity of R404A. The useful refrigerant compositions 4240 include at or about 46 wt%, or less than 46 wt% and greater than 0 wt% of R1132(E); at or about 50 - 58 wt% of R134a; and at or about 50 wt%, or less than 50 wt% and greater than 0 wt% of R1132a.

In an embodiment, the useful compositions 4240 may include preferred compositions 4242 as shown in Figure 39. The properties of the preferred compositions 4242 include having a burning velocity of at or less than 15 cm/s, a GWP of at or about or less than 750, and a temperature glide of at or less than 20°K. The preferred compositions 4242 include at or about 4 - 46 wt% of R1132(E); at or about 51 - 58 wt% of R134a; and at or about 41 wt%, or less than 41 wt% and greater than 0 wt% of R1132a.

In an embodiment, the preferred compositions 4242 may include further preferred compositions 4244 as shown in Figure 39. The properties of the further preferred compositions 4244 include having a burning velocity of at or less than 15 cm/s, a GWP of at or about or less than 750, and a temperature glide of at or less than 15°K. The further preferred compositions 4244 include at or about 16 - 46 wt% of R1132(E); at or about 52 - 58 wt% of R134a; and at or about 27 wt%, or less than 27 wt% and greater than 0 wt% of R1132a.

In an embodiment, the further preferred compositions 4244 may include greater preferred compositions 4246 as shown in Figure 39. The properties of the greater preferred compositions 4246 include having a burning velocity of at or less than 15 cm/s, a GWP of at or about or less than 750, and a temperature glide of at or less than 10°K. The greater preferred compositions 4246 include at or about 29 - 46 wt% of R1132(E); at or about 55 - 58 wt% of R134a; and at or about 13 wt%, or less than 13 wt% and greater than 0 wt% of R1132a.

In some embodiments, a set of desired properties for a refrigerant composition may include a capacity and/or a different temperature glide. In an embodiment, a capacity that is at or about or less than 200% of the capacity of R404A may be desired. In an embodiment, a capacity that is at or about or less than 150% of the capacity of R404A may be desired. In an embodiment, a capacity that is at or about or less than 125% of the capacity of R404A may be desired. In an embodiment, a capacity that is at or about or greater than 95% of the capacity of R404A may be desired. In an embodiment, a capacity that is at or about or greater than 100% of the capacity of R404A may be desired. In an embodiment, a temperature glide of at or less than 7.5°K may be desired. It should be appreciated that the matrix 4200 in Figure 39 may be used to further select compositions/ranges with the desired capacity. For example, the different ranges of compositions described above with respect to Figure 39 may be modified/selected based on Figure 39 so as to have ranges of R1132(E), R134a, and R1132a with the desired properties (e.g., capacity).

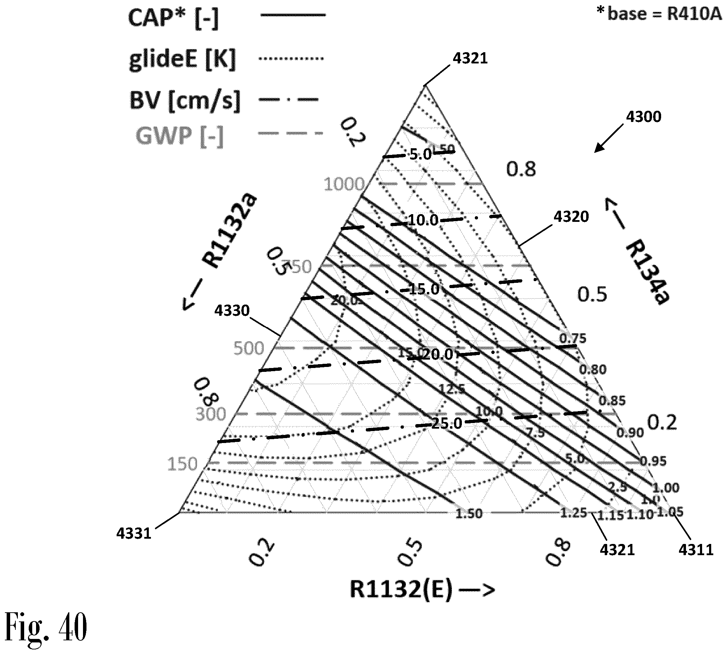

Referring to Figure 40, the matrix 4300 shows plots of GWP, BV, temperature glide, capacity relative to R410A of a refrigerant composition as a function of the weight percentages of R1132(E), R134a, and R1132a. As similarly described above for the matrix 4200, the matrix 4300 in Figure 40 is a triangle that has sides that correspond to weight percentages (wt%) of R1132(E), R134a, and R1132a, respectively and vertexes that correspond to a composition of 100% R1132(E), 100% R134a, and 100% R1132a, respectively. In an embodiment, refrigerant compositions comprising R1132(E), R134a, and R1132a can be selected based on the capacity, temperature glide, BV, and/or GWP shown in Figure 40.

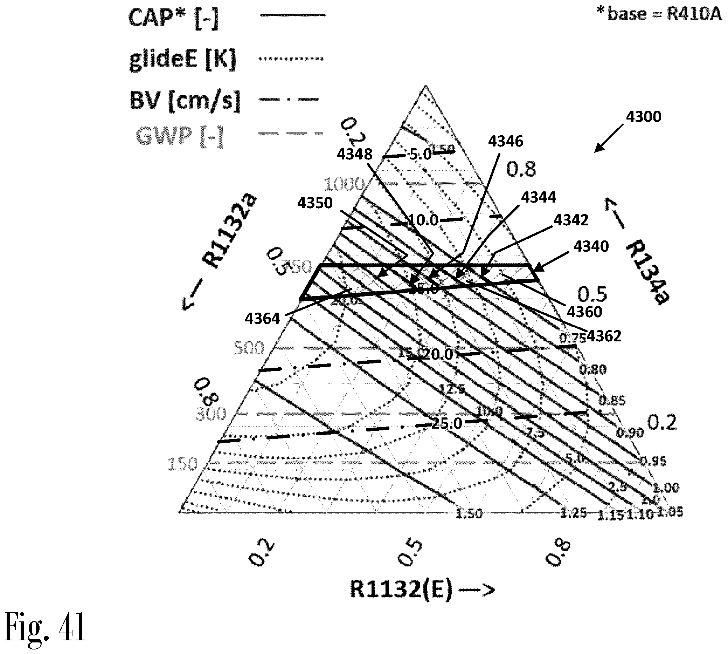

Figure 41 is the matrix 4300 of Figure 40 illustrated to show selected refrigerant compositions, according to an embodiment. As shown in Figure 41, the refrigerant compositions include (i.e., consist of, consist essentially of, or comprise) R1132(E), R134a, and R1132a. The refrigerant compositions can be selected based on one or more desired refrigerant composition properties such as the capacity relative to R410A, temperature glide, BV, and GWP.

In an embodiment, a desired set of properties of a useful refrigerant composition includes having a burning velocity of at or less than 15 cm/s and a GWP of at or about or less than 750. Based on these desired properties, a range of useful refrigerant compositions 4340 is shown in the matrix 4300 of Figure 41. The useful refrigerant compositions 4340 include at or about 46 wt%, or less than 46 wt% and greater than 0 wt% of R1132(E); at or about 50 - 58 wt% of R134a; and at or about 50 wt%, or less than 50 wt% and greater than 0 wt% of R1132a.

In an embodiment, the useful compositions 4340 may include preferred compositions 4342 as shown in Figure 41. The properties of the preferred compositions 4342 include having a burning velocity of at or less than 15 cm/s, a GWP of at or about or less than 750, and at or about or greater than 75% of the capacity of R410A. The preferred compositions 4342 include at or about 36 wt%, or less than 36 wt% and greater than 0 wt% of R1132(E); at or about 50 - 58 wt% of R134a; and at or about 10 - 50 wt% of R1132a.

In an embodiment, the preferred compositions 4342 may include further preferred compositions 4344 as shown in Figure 41. The properties of the further preferred compositions 4344 include having a burning velocity of at or less than 15 cm/s, a GWP of at or about or less than 750, and at or about or greater than 80% of the capacity of R410A. The further preferred compositions 4344 include at or about 31 wt%, or less than 31 wt% and greater than 0 wt% of R1132(E); at or about 50 - 58 wt% of R134a; and at or about 16 - 50 wt% of R1132a.

In an embodiment, the further preferred compositions 4344 may include greater preferred compositions 4346 as shown in Figure 41. The properties of the greater preferred compositions 4346 include having a burning velocity of at or less than 15 cm/s, a GWP of at or about or less than 750, and at or about or greater than 85% of the capacity of R410A. The greater preferred compositions 4346 include at or about 27 wt%, or less than 27 wt% and greater than 0 wt% of R1132(E); at or about 50 - 58 wt% of R134a; and at or about 21 - 50 wt% of R1132a.

In an embodiment, the greater preferred compositions 4346 may include further greater preferred compositions 4348 as shown in Figure 41. The properties of the further greater preferred compositions 4348 include having a burning velocity of at or less than 15 cm/s, a GWP of at or about or less than 750, and at or about or greater than 90% of the capacity of R410A. The further greater preferred compositions 4348 include at or about 22 wt%, or less than 22 wt% and greater than 0 wt% of R1132(E); at or about 50 - 58 wt% of R134a; and at or about 25 - 50 wt% of R1132a.

In an embodiment, the further greater preferred compositions 4348 may include even further greater preferred compositions 4350 as shown in Figure 23. The properties of the even further greater preferred compositions 4350 include having a burning velocity of at or less than 15 cm/s, a GWP of at or about or less than 750, and at or about or greater than 95% of the capacity of R410A. The even further greater preferred compositions 4350 include at or about 18 wt%, or less than 18 wt% and greater than 0 wt% of R1132(E); at or about 50 - 58 wt% of R134a; and at or about 30 - 50 wt% of R1132a.

Figure 41 also includes hatched areas 4360, 4362, 4364. The compositions in the hatched areas 4360, 4362, 4364 have a temperature glide of at or less than 20°K. In some embodiments, a set of desired properties may include lesser temperature glide provided by the compositions within the hatched areas 4360, 4362, 4364 (e.g., a temperature glide that is at or less than 20°K). In such embodiments, desired compositions may be selected from the compositions illustrated in Figure 41 (e.g., useful compositions 4340, preferred compositions 4342, further preferred compositions 4344, greater preferred compositions 4346, further greater preferred compositions 4348, even further greater preferred compositions 4350) and described with respect to Figure 41 that are within the hatched areas 4360, 4362, 4364.

The hatched areas 4360, 4362, 4364 include a first hatched area 4360, a second hatched area 4362, and a third hatched area. The compositions in the first and second hatched areas 4360, 4362 have a temperature glide of at or less than 15°K. In some embodiments, a set of desired properties may include lower temperature glide provided by the compositions within the first and second hatched areas 4360, 4362 (e.g., a temperature glide that is at or less than 15°K). In such embodiments, desired compositions may be selected from the compositions illustrated in Figure 41 (e.g., useful compositions 4340, preferred compositions 4342, further preferred compositions 4344, greater preferred compositions 4346, further greater preferred compositions 4348) and described with respect to Figure 41 that are within the first and second hatched areas 4360, 4362. For example, a lower limit of R1132(E) in such desired compositions is at or about 17 wt%, and an upper limit of R1132a in such desired compositions is at or about 27 wt%, and a lower limit of R134a in such desired compositions is at or about 52 wt%.

The compositions in the first hatched area 4360 have a temperature glide of at or less than 10°K. In some embodiments, a set of desired properties may include the even lower temperature glide provided by the compositions within the first hatched area 4360 (e.g., a temperature glide that is at or less than 10°K). In such embodiments, desired compositions may be selected from the compositions illustrated in Figure 41 (e.g., useful compositions 4340, preferred compositions 4342, further preferred compositions 4344) and described with respect to Figure 41 that are within the first hatched area 4360. For example, a lower limit of R1132(E) in such desired compositions is at or about 29 wt%, and an upper limit of R1132a in such desired compositions is at or about 14 wt%, and a lower limit of R134a in such desired compositions is at or about 53 wt%.

Figures 42 - 45 each show a matrix 4400, 4500 of refrigerant compositions that include R1132(E), R134a, and R1123, according to an embodiment. In the illustrated embodiment, the R1123 is the third refrigerant. The matrix 4400, 4500 in each of Figures 42 - 45 have a similar triangle layout as described above for the matrixes 4000, 4100 in Figures 34 - 37. For example, as shown in Figure 42, each side 4410, 4420, 4430 of the triangle can correspond to weight percentages (wt%) of R1132(E), R134a, and R1123, respectively. Each vertex 4411, 4421, 4431 corresponds to a composition of 100% R1132(E), 100% R134a, and 100% R1123, respectively. The properties (e.g., GWP, flammability, toxicity, temperature glide, capacity relative to R404A, and/or capacity relative to R410A) of the refrigerant compositions and the weight percent of R1132(E), R134a, and R1123, can be determined using the matrix 4400 and/or the matrix 4500. Properties of the compositions represented in the matrixes 4400, 4500 were determined using a thermodynamic model based on experimental results. In an embodiment, refrigerant compositions comprising R1132(E), R134a, and R1123 can be selected based on the capacity, temperature glide, BV, and/or GWP shown in Figure 42.

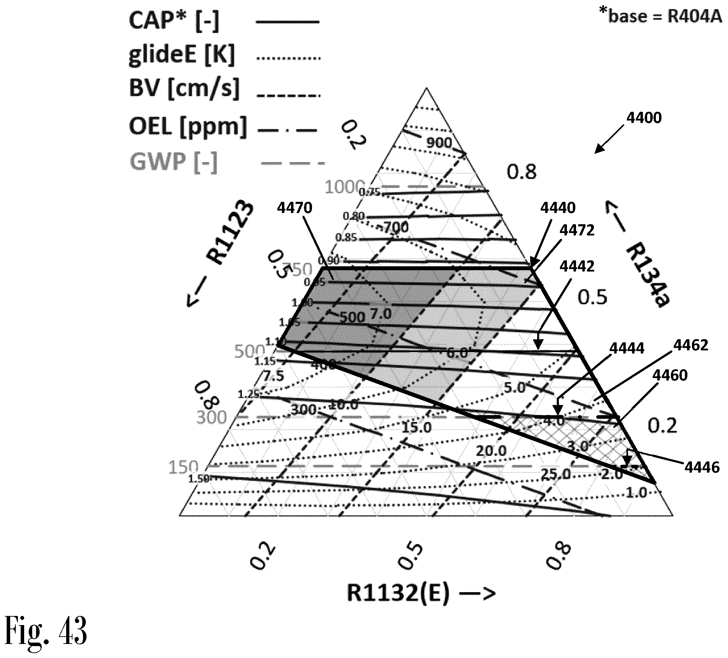

Figure 43 is the matrix 4400 of Figure 42 illustrated to show selected refrigerant compositions, according to an embodiment. As shown in Figure 43, the refrigerant compositions include (i.e., consist of, consist essentially of, or comprise) R1132(E), R134a, and R1123. The refrigerant compositions can be selected based on one or more desired refrigerant composition properties such as the capacity relative to R410A, toxicity (e.g., OEL), temperature glide, BV, and GWP.

In an embodiment, a desired set of properties of a useful refrigerant composition includes having a GWP of at or about or less than 750 and an OEL of at or greater than 400 ppm. Based on these desired properties, a range of useful refrigerant compositions 4440 is shown in the matrix 4400 of Figure 43. The useful refrigerant compositions 4440 include at or about 92 wt%, or less than 92 wt% and greater than 0 wt% of R1132(E); at or about 8 - 58 wt% of R134a; and at or about 60 wt%, or less than 60 wt% and greater than 0 wt% of R1123.

In an embodiment, the useful compositions 4440 may include preferred compositions 4442 as shown in Figure 43. The properties of the preferred compositions 4442 include having a GWP of at or about or less than 500 and an OEL of at or greater than 400 ppm. The preferred refrigerant compositions 4442 include at or about 4 - 92 wt% of R1132(E); at or about 8 - 38 wt% of R134a; and at or about 58 wt%, or less than 58 wt% and greater than 0 wt% of R1123.

In an embodiment, the preferred compositions 4442 may include further preferred compositions 4444 as shown in Figure 43. The properties of the further preferred compositions 4444 include having a GWP of at or about or less than 300 and an OEL of at or greater than 400 ppm. The further preferred refrigerant compositions 4444 include at or about 48 - 92 wt% of R1132(E); at or about 8 - 23 wt% of R134a; and at or about 29 wt%, or less than 29 wt% and greater than 0 wt% of R1123.

In an embodiment, the further preferred compositions 4444 may include greater preferred compositions 4446 as shown in Figure 43. The properties of the further preferred compositions 4446 include having a GWP of at or about or less than 150 and an OEL of at or greater than 400 ppm. The greater preferred refrigerant compositions 4446 include at or about 79 - 92 wt% of R1132(E); at or about 8-12 wt% of R134a; and at or about 8 wt%, or less than 8 wt% and greater than 0 wt% of R1123.

Figure 43 also includes a hatched area 4460. The compositions in the hatched area 4460 have greater than 125% of the capacity of R404A. In some embodiments, a set of desired properties may include the capacity provided by the compositions outside the hatched area 4460 (e.g., capacity that is at or about or less than 125% of the capacity or R404A, capacity that is closer to the capacity of R404A). In such embodiments, desired compositions may be selected from the compositions illustrated in Figure 43 (e.g., useful compositions 4440, preferred compositions 4442) and described with respect to Figure 43 to omit those compositions within the hatched area 4460. For example, an upper limit of R1132(E) in such desired compositions is at or about 79 wt%, and a lower limit of R134a in such desired compositions is at or about 21 wt%.

The shaded areas 4470, 4472 in Figure 43 include a first shaded area 4470 and a second shaded area. Compositions within the first and second shaded areas 4470, 4472 have a BV of 15 cm/s or less. In some embodiments, a set of desired properties may include the lower BV provided by the compositions within the shaded areas 4470, 4472 (e.g., a BV that is at or less than 15 cm/s). In such embodiments, desired compositions may be selected from the compositions illustrated in Figure 43 (e.g., useful refrigerant compositions 4440, preferred compositions 4442) and described with respect to Figure 43 that are within the first and second shaded areas 4470, 4472.

For example, such desired compositions of the useful refrigerant compositions 4440 include at or about 48 wt%, or less than 48 wt% and greater than 0 wt% of R1132(E); at or about 26 - 58 wt% of R134a; and at or about 60 wt%, or less than 60 wt% and greater than 0 wt% of R1123. For example, such desired compositions of the preferred refrigerant compositions 4442 include at or about 4 - 42 wt% of R1132(E); at or about 26 - 38 wt% of R134a; and at or about 20 - 58 wt% of R1123.

Compositions within the first shaded area 4470 have a BV of 10 cm/s or less. In some embodiments, a set of desired properties may include the lower BV provided by the compositions within the first shaded area 4470 (e.g., a BV that is at or less than 10 cm/s). In such embodiments, desired compositions may be selected from the compositions illustrated in Figure 43 (e.g., useful refrigerant compositions 4440, preferred compositions 4442) and described with respect to Figure 43 that are within the first shaded area 4470.

For example, such desired compositions of the useful refrigerant compositions 4440 include at or about 23 wt%, or less than 23 wt% and greater than 0 wt% of R1132(E); at or about 32 - 58 wt% of R134a; and at or about 15 - 60 wt% of R1123. For example, such desired compositions of the preferred refrigerant compositions 4442 include at or about 4 - 23 wt% of R1132(E); at or about 32 - 38 wt% of R134a; and at or about 39 - 58 wt% of R1123.

In some embodiments, a set of desired properties for a refrigerant composition may include a temperature glide and/or a different capacity. In an embodiment, a temperature glide that is at or about or less than 7K may be desired. In an embodiment, a temperature glide that is at or about or less than 6K may be desired. In an embodiment, a temperature glide that is at or about or less than 5K may be desired. In an embodiment, a temperature glide that is at or about or less than 4K may be desired. In an embodiment, a capacity that is at or about or less than 115% of the capacity of R404A may be desired. In an embodiment, a capacity that is at or about or less than 110% of the capacity of R404A may be desired. In an embodiment, a capacity that is at or about or less than 105% of the capacity of R404A may be desired. In an embodiment, a capacity that is at or about or greater than 95% of the capacity of R404A may be desired. It should be appreciated that the matrix 4400 in Figure 43 may be used to further select compositions/ranges with the desired temperature glide and/or capacity. For example, the different ranges of compositions described above with respect to Figure 43 may be modified/selected based on Figure 43 so as to have ranges of R1132(E), R134a, and R1123 with the desired properties (e.g., temperature glide and/or capacity).

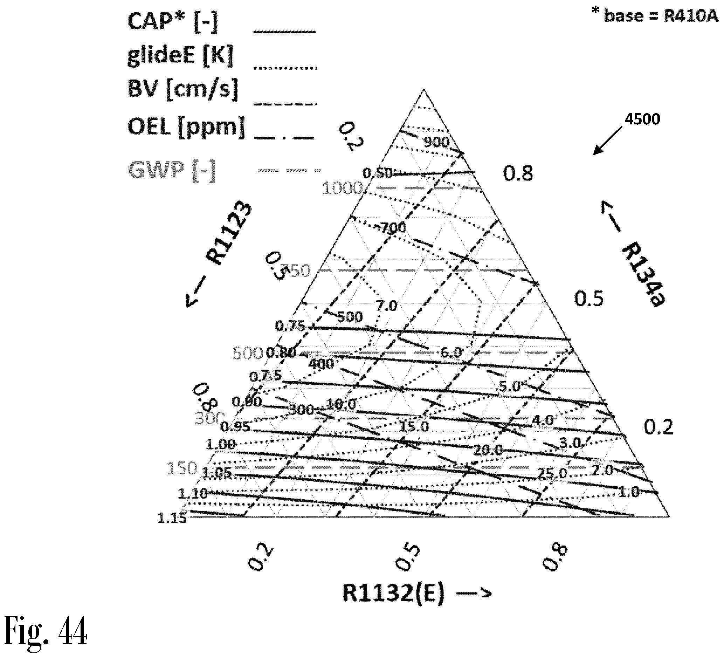

Referring to Figure 44, the matrix 4500 shows plots of GWP, BV, temperature glide, toxicity (e.g., OEL), and capacity relative to R410A of a refrigerant composition as a function of the weight percentages of R1132(E), R134a, and R1123. As similarly described above for the matrix 4400, the matrix 4500 in Figure 44 is a triangle that has sides that correspond to weight percentages (wt%) of R1132(E), R134a, and R1123, respectively and vertexes that correspond to a composition of 100% R1132(E), 100% R134a, and 100% R1123, respectively. In an embodiment, refrigerant compositions comprising R1132(E), R134a, and R1123 can be selected based on the capacity, temperature glide, BV, and/or GWP shown in Figure 44.

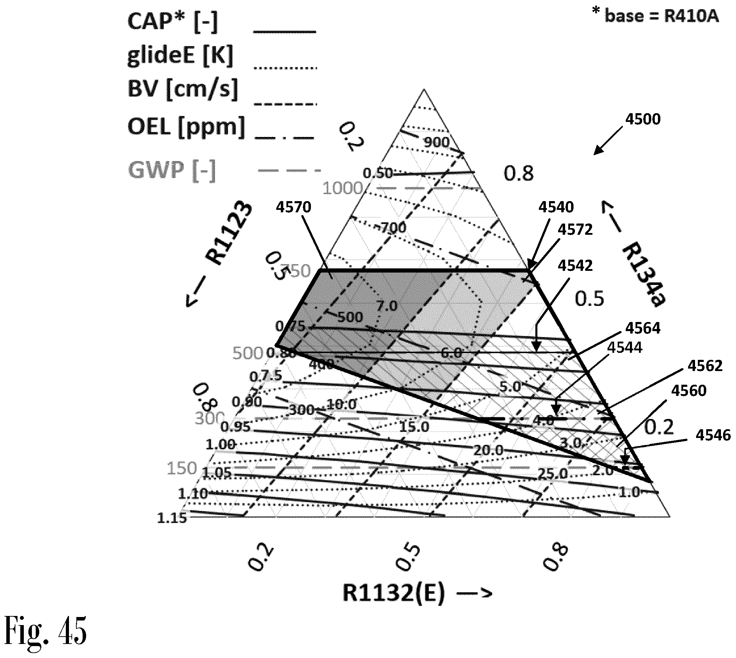

Figure 45 is the matrix 4500 of Figure 44 illustrated to show selected refrigerant compositions, according to an embodiment. As shown in Figure 45, the refrigerant compositions include (i.e., consist of, consist essentially of, or comprise) R1132(E), R134a, and R1123. The refrigerant compositions can be selected based on one or more desired refrigerant composition properties such as the capacity relative to R410A, toxicity (e.g., OEL), temperature glide, BV, and GWP.

In an embodiment, a desired set of properties of a useful refrigerant composition includes having a GWP of at or about or less than 750 and an OEL of at or greater than 400 ppm. Based on these desired properties, a range of useful refrigerant compositions 4540 is shown in the matrix 4500 of Figure 45. As shown in Figure 45, the useful refrigerant compositions 4540 also have greater than 50% and less than 100% of the capacity of R410A. The useful refrigerant compositions 4440 include at or about 92 wt%, or less than 92 wt% and greater than 0 wt% of R1132(E); at or about 8 - 58 wt% of R134a; and at or about 60 wt%, or less than 60 wt% and greater than 0 wt% of R1123.

In an embodiment, the useful compositions 4540 may include preferred compositions 4542 as shown in Figure 45. The properties of the preferred compositions 4542 include having a GWP of at or about or less than 500 and an OEL of at or greater than 400 ppm. The preferred refrigerant compositions 4442 include at or about 4 - 92 wt% of R1132(E); at or about 8 - 38 wt% of R134a; and at or about 58 wt%, or less than 58 wt% and greater than 0 wt% of R1123.

In an embodiment, the preferred compositions 4542 may include further preferred compositions 4544 as shown in Figure 45. The properties of the further preferred compositions 4544 include having a GWP of at or about or less than 300 and an OEL of at or greater than 400 ppm. The further preferred refrigerant compositions 4444 include at or about 48 - 92 wt% of R1132(E); at or about 8 - 23 wt% of R134a; and at or about 29 wt%, or less than 29 wt% and greater than 0 wt% of R1123.

In an embodiment, the further preferred compositions 4544 may include greater preferred compositions 4546 as shown in Figure 45. The properties of the further preferred compositions 4546 include having a GWP of at or about or less than 150 and an OEL of at or greater than 400 ppm. The greater preferred refrigerant compositions 4446 include at or about 79 - 92 wt% of R1132(E); at or about 8-12 wt% of R134a; and at or about 8 wt%, or less than 8 wt% and greater than 0 wt% of R1123.

Figure 45 also includes shaded areas 4570, 4572. The shaded areas 4570, 4572 include a first shaded area 4570 and a second shaded area 4572. The compositions in the shaded areas 4570, 4572 have a BV of at or less than 15 cm/s. For example, the shaded areas 4570, 4572 in Figure 45 have the same location and shapes (e.g., same ranges of R1132(E), R134a, and R1123) as the shaded areas 4470, 4472 in Figure 43. The compositions in the first shaded area 4570 have a BV of at or less than 10 cm/s. In some embodiments, a set of desired properties may include the lower BV provided by the compositions within the shaded areas 4570, 4572 or compositions in the first shaded area 4570 (e.g., a BV that is at or less than 15 cm/s, a BV that is at or less than 10 cm/s). In such embodiments, desired compositions may be selected from the compositions illustrated in Figure 45 (e.g., useful refrigerant compositions 4540, preferred compositions 4542) and described with respect to Figure 45 that are within the shaded areas 4570, 4572 or within the first shaded area 4570.

Figure 45 also includes hatched areas 4560, 4562, 4564. The compositions in the hatched areas 4560, 4562, 4564 have at or about or greater than 75% of the capacity of R410A. As shown in Figure 45, the compositions in the hatched areas 4560, 4562, 4564 also have less than 100% of the capacity of R410A. In some embodiments, a set of desired properties may include the higher capacity provided by the compositions within the hatched areas 4560, 4562, 4564 (e.g., capacity that is at or about or greater than 75% of the capacity of R410A, a capacity more similar to the capacity of R410A). In such embodiments, desired compositions may be selected from the compositions illustrated in Figure 45 (e.g., useful compositions 4540) and described with respect to Figure 45 that are within the hatched areas 4560, 4562, 4564. For example, an upper limit of R134a in such desired compositions is at or about 44 wt%.

The hatched areas 4560, 4562, 4564 in Figure 45 include a first hatched area 4560, a second hatched area 4562, and a third hatched area 4564. The compositions in the first hatched area 4560 and the second hatched area 4562 have at or about or greater than 85% of the capacity of R410A. In some embodiments, a set of desired properties may include the higher capacity provided by the compositions within the first and second hatched areas 4560, 4562 (e.g., capacity that is at or about or greater than 85% of the capacity of R410A, a capacity more similar to the capacity of R410A). In such embodiments, desired compositions may be selected from the compositions illustrated in Figure 45 (e.g., further preferred compositions 4544) and described with respect to Figure 45 that are within one of the first hatched area 4560 and the second hatched area 4562. For example, a lower limit of R1132(E) in such desired compositions is at or about 29 wt%, an upper limit of R134a in such desired compositions is at or about 30 wt%, and an upper limit of R1123 in such desired compositions is at or about 41 wt%.

The compositions in the first hatched area 4560 have at or about or greater than 90% of the capacity of R410A. In some embodiments, a set of desired properties may include the higher capacity provided by the compositions within the first hatched area 4560 (e.g., capacity that is at or about or greater than 90% of the capacity of R410A, a capacity more similar to the capacity of R410A). In such embodiments, desired compositions may be selected from the compositions illustrated in Figure 45 (e.g., preferred compositions 4542, further preferred compositions 4544) and described with respect to Figure 45 that are within the first hatched area 4560. For example, a lower limit of R1132(E) in such desired compositions is at or about 52 wt%, an upper limit of R134a in such desired compositions is at or about 22 wt%, and an upper limit of R1123 in such desired compositions is at or about 26 wt%.

In some embodiments, a set of desired properties may include one of the described capacities (e.g., at or about or greater than 75% of the capacity of R410A, at or about or greater than 85% of the capacity of R410A, at or about or greater than 90% of the capacity of R410A) and one of the described BV ranges (e.g., a BV of 15 cm/s or less, a BV of 10 cm/s or less). In such embodiments, desired compositions may be selected from the compositions illustrated in Figure 45 (e.g., useful compositions 4540, preferred compositions 4542, further preferred compositions 4544) and described with respect to Figure 45 that are within the corresponding hatched area(s) 4560, 4562, 4564 and within the corresponding shaded area(s) 4570, 4572. For example, desired compositions in an embodiment may be in both the shaded areas 4570, 4572 the second and third hatched areas 4562, 4564.For example, desired compositions in an embodiment may be in both the first shaded area 4570 and in the third hatched area 4564. For example, desired compositions in an embodiment may be in both the second shaded area 4572 and in the second hatched area 4562.

In some embodiments, a set of desired properties for a refrigerant composition may include a temperature glide. In an embodiment, a temperature glide that is at or less than 7K may be desired. In an embodiment, a temperature glide that is at or about or less than 6K may be desired. In an embodiment, a temperature glide that is at or about or less than 5K may be desired. In an embodiment, a temperature glide that is at or about or less than 4K may be desired. In an embodiment, a temperature glide that is at or about or less than 3K may be desired. It should be appreciated that the matrix 4500 in Figure 45 may be used to further select compositions/ranges with the desired temperature glide. For example, the different ranges of compositions described above with respect to Figure 45 may be modified/selected based on Figure 45 so as to have ranges of R1132(E), R134a, and R1123 with the desired properties (e.g., temperature glide and/or capacity).

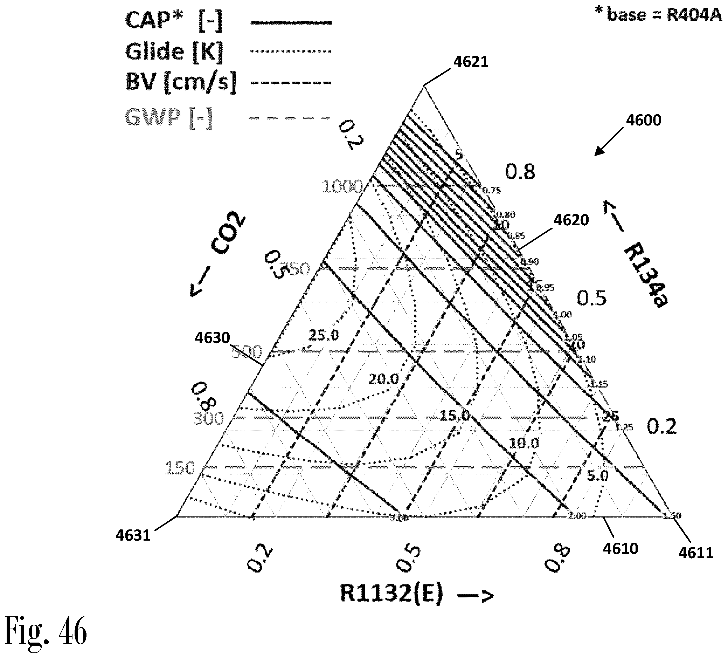

Figures 46 - 49 each show a matrix 4600, 4700 of refrigerant compositions that include R1132(E), R134a, and CO₂, according to an embodiment. In the illustrated embodiment, the CO₂ is the third refrigerant. The matrix 4600, 4700 in each of Figures 46 - 49 have a similar triangle layout as described above for the matrixes 4000, 4100 in Figures 38 - 41. For example, as shown in Figure 46, each side 4610, 4620, 4630 of the triangle can correspond to weight percentages (wt%) of R1132(E), R134a, and CO₂, respectively. Each vertex 4211, 4221, 4231 corresponds to a composition of 100% R1132(E), 100% R134a, and 100% CO₂, respectively. The properties (e.g., GWP, flammability, temperature glide, and/or capacity relative to R404A, and/or capacity relative to R410A) of the refrigerant compositions and the weight percent of R1132(E), R134a, and CO₂ can be determined using the matrix 4600 and/or the matrix 4700. Properties of the compositions represented in the matrixes 4600, 4700 were determined using a thermodynamic model based on experimental results. In an embodiment, refrigerant compositions comprising R1132(E), R134a, and CO₂ can be selected based on the capacity, temperature glide, BV, and/or GWP shown in Figure 46.

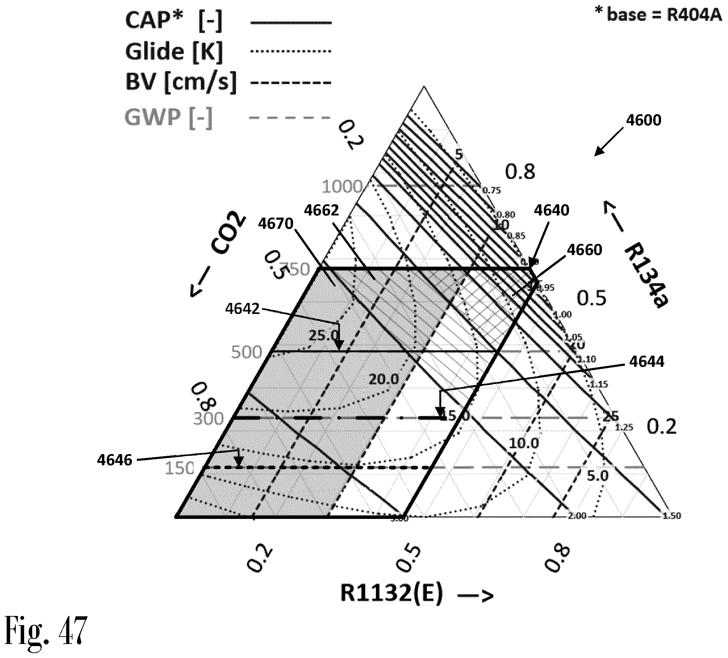

Figure 47 is the matrix 4600 of Figure 46 illustrated to show selected refrigerant compositions, according to an embodiment. As shown in Figure 47, the refrigerant compositions include (i.e., consist of, consist essentially of, or comprise) R1132(E), R134a, and CO₂. The refrigerant compositions can be selected based on one or more desired refrigerant composition properties such as the capacity relative to R404A, temperature glide, BV, and GWP.

In an embodiment, a desired set of properties of a useful refrigerant composition includes having a GWP of at or about or less than 750 and a BV of at or less than 15 cm/s. Based on these desired properties, a range of useful refrigerant compositions 4640 is shown in the matrix 4600 of Figure 47. The useful refrigerant compositions 4640 include at or about 46 wt%, or less than 46 wt% and greater than 0 wt% of R1132(E); at or about 58 wt%, or less than 58 wt% and greater than 0 wt% of R134a; and less than 100 wt% and greater than 0 wt% of CO₂.

In an embodiment, the useful compositions 4640 may include preferred compositions 4642 as shown in Figure 47. The properties of the preferred compositions 4642 include having a GWP of at or about or less than 500 and a BV of at or less than 15 cm/s. The preferred compositions 4642 include at or about 46 wt%, or less than 46 wt% and greater than 0 wt% of R1132(E); at or about 39 wt%, or less than 39 wt% and greater than 0 wt% of R134a; and at or about 16 wt%, or greater than 16 wt% and less than 100 wt% of CO₂.

In an embodiment, the preferred compositions 4642 may include further preferred compositions 4644 as shown in Figure 47. The properties of the further preferred compositions 4644 include having a GWP of at or about or less than 300 and a BV of at or less than 15 cm/s. The further preferred compositions 4644 include at or about 46 wt%, or less than 46 wt% and greater than 0 wt% of R1132(E); at or about 23 wt%, or less than 23 wt% and greater than 0 wt% of R134a; and at or about 31 wt%, or greater than 31 wt% and less than 100 wt% of CO₂.

In an embodiment, the further preferred compositions 4644 may include greater preferred compositions 4646 as shown in Figure 47. The properties of the greater preferred compositions 4646 include having a GWP of at or about or less than 150 and a BV of at or less than 15 cm/s. The greater preferred compositions 4646 include at or about 46 wt%, or less than 46 wt% and greater than 0 wt% of R1132(E); at or about 11 wt%, or less than 11 wt% and greater than 0 wt% of R134a; and at or about 43 wt%, or greater than 43 wt% and less than 100 wt% of CO₂.

Figure 47 also includes hatched areas 4660, 4662. The compositions in the hatched areas 4660, 4662 have at or about or less than 200% of the capacity of R404A. In some embodiments, a set of desired properties may include the lower capacity provided by the compositions within the hatched areas 4660, 4662 (e.g., a capacity at or less than 200% of the capacity of R404A, a capacity more similar to the capacity of R404A). In such embodiments, desired compositions may be selected from the compositions illustrated in Figure 47 (e.g., useful compositions 4640, preferred compositions 4642) and described with respect to Figure 47 that are within the hatched areas 4660, 4662.

For example, such desired compositions of the useful refrigerant compositions 4640 include at or about 2 - 46 wt% of R1132(E); at or about 25 - 58 wt% of R134a; and at or about 40 wt%, or less than 40 wt% and greater than 0 wt% of CO₂. For example, such desired compositions of the preferred compositions 4642 include at or about 27 - 46 wt% of R1132(E); at or about 25 - 39 wt% of R134a; and at or about 16 - 35 wt% of CO₂. The hatched areas 4660, 4662 in Figure 47 include a first hatched area 4660 and second hatched area 4662. The compositions in the first hatched area 4660 have at or about or less than 150% of the capacity of R404A. In some embodiments, a set of desired properties may include the lower capacity provided by the compositions within the first hatched area 4660 (e.g., a capacity at or less than 150% of the capacity of R404A, a capacity even more similar to the capacity of R404A). In such embodiments, desired compositions may be selected from the compositions illustrated in Figure 47 (e.g., useful compositions 4640) and described with respect to Figure 47 that are within the first hatched area 4660.

For example, such desired compositions of the useful refrigerant compositions 4640 include at or about 20 - 46 wt% of R1132(E); at or about 39 - 58 wt% of R134a; and at or about 23 wt%, or less than 23 wt% and greater than 0 wt% of CO₂.

Figure 47 also includes shaded area 4670. The compositions in the shaded area 4670 have a BV of at or less than 10 cm/s. In some embodiments, a set of desired properties may include the lower BV provided by the compositions within the shaded area 4670 (e.g., a BV that is at or less than 10 cm/s). In such embodiments, desired compositions may be selected from the compositions illustrated in Figure 47 (e.g., useful compositions 4640, preferred compositions 4642, further preferred compositions 4644, greater preferred compositions 4646, further greater preferred compositions 4648) and described with respect to Figure 47 that are within the shaded area 4670.

For example, such desired compositions of the useful refrigerant compositions 4640 include at or about 30 wt%, or less than 30 wt% and greater than 0 wt% of R1132(E); at or about 58 wt%, or less than 58 wt% and greater than 0 wt% of R134a; at or about 12 wt%, or greater than 12 wt% and less than 100 wt% of CO₂. For example, such desired compositions of the preferred compositions 4642 include at or about 30 wt%, or less than 30 wt% and greater than 0 wt% of R1132(E); at or about 39 wt%, or less than 39 wt% and greater than 0 wt% of R134a; and at or about 31 wt%, or greater than 31 wt% and less than 100 wt% of CO₂. For example, such desired compositions of the further preferred compositions 4644 include at or about 30 wt%, or less than 30 wt% and greater than 0 wt% of R1132(E); at or about 23 wt%, or less than 23 wt% and greater than 0 wt% of R134a; and at or about 47 wt%, or greater than 47 wt% and less than 100 wt% of CO₂. For example, such desired compositions of the greater preferred compositions 4646 include at or about 30 wt%, or less than 30 wt% and greater than 0 wt% of R1132(E); at or about 11 wt%, or less than 11 wt% and greater than 0 wt% of R134a; and at or about 58 wt%, or greater than 58 wt% and less than 100 wt% of CO₂.

In some embodiments, a set of desired properties may include the lower BV provided by the compositions within the shaded area 4670 (e.g., a BV that is at or less than 10 cm/s) and the lower capacity provided by the compositions within the hatched areas 4660, 4660 (e.g., a capacity at or less than 200% of the capacity of R404A, capacity more similar to R404A). In such embodiments, desired compositions may be selected from the compositions illustrated in Figure 47 (e.g., useful compositions 4640, preferred compositions 4642) and described with respect to Figure 47 that are within both the shaded area 4670 and the hatched areas 4660, 4662.

For example, such desired compositions of the useful refrigerant compositions 4640 include at or about 2-30 wt% of R1132(E); at or about 36 - 58 wt% of R134a; and at or about 12 - 40 wt% of CO₂. For example, such desired compositions of the preferred compositions 4642 include at or about 27 - 30 wt% of R1132(E); at or about 36 - 39 wt% of R134a; and at or about 31 - 35 wt% of CO₂.

In some embodiments, a set of desired properties may include the lower BV provided by the compositions within the shaded area 4670 (e.g., a BV that is at or less than 10 cm/s) and the lower capacity provided by the compositions within the first hatched area 4660 (e.g., a capacity at or less than 150% of the capacity of R404A, capacity even more similar to R404A). In such embodiments, desired compositions may be selected from the compositions illustrated in Figure 47 (e.g., useful compositions 4640) and described with respect to Figure 47 that are within both the shaded area 4670 and the first hatched area 4660.

For example, such desired compositions of the useful refrigerant compositions 4640 include at or about 20 - 30 wt% of R1132(E); at or about 49 - 58 wt% of R134a; and at or about 12 - 16 wt% of CO₂.

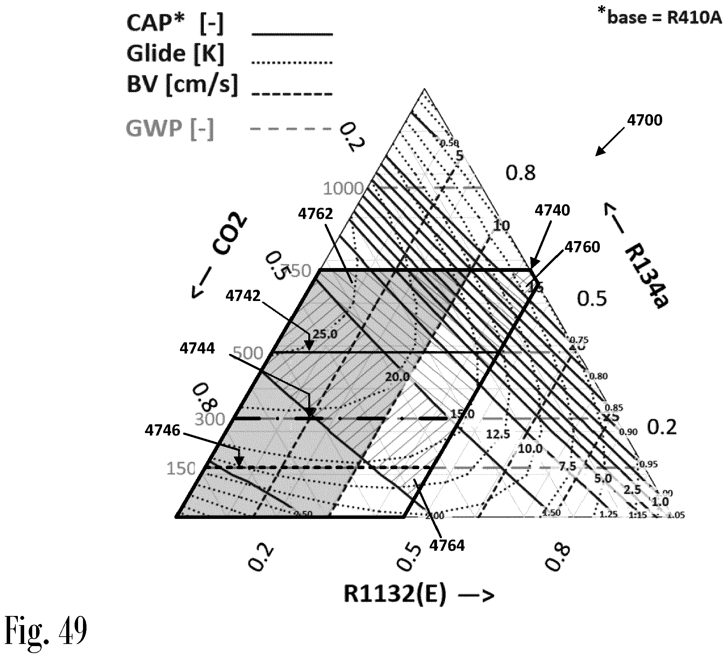

In some embodiments, a set of desired properties for a refrigerant composition may include a temperature glide and/or a different capacity. In an embodiment, a temperature glide that is at or about or less than 25K may be desired. In an embodiment, a temperature glide that is at or about or less than 20K may be desired. In an embodiment, a temperature glide that is at or about or less than 15K may be desired. In an embodiment, a temperature glide that is at or about or less than 10K may be desired. In an embodiment, a capacity that is at or about or less than 300% of the capacity of R404A. In an embodiment, a capacity that is at or about or less than 150% of the capacity of R404A. In an embodiment, a capacity that is at or about or less than 125% of the capacity of R404A. It should be appreciated that the matrix 4600 in Figure 47 may be used to further select compositions/ranges with the desired temperature glide and/or capacity. For example, the different ranges of compositions described above with respect to Figure 47 may be modified/selected based on Figure 49 so as to have ranges of R1132(E), R134a, and CO₂ with the desired properties (e.g., temperature glide and/or capacity).

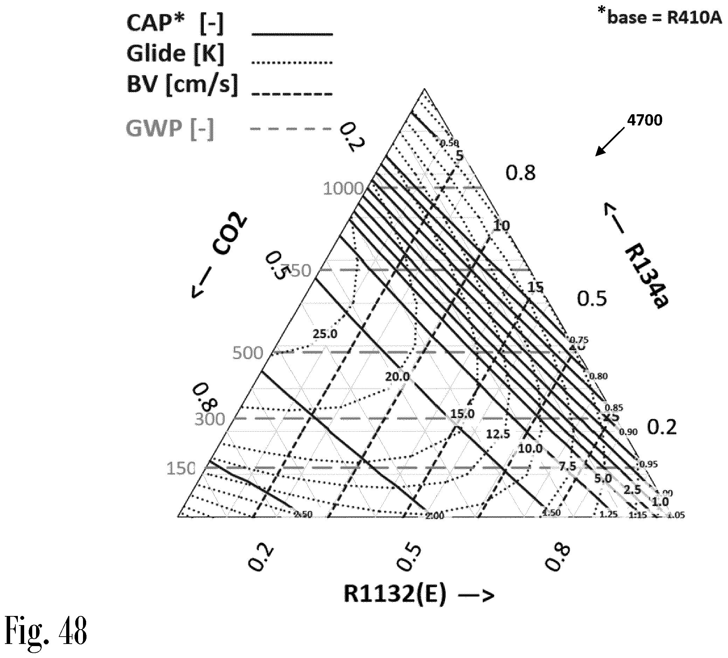

Referring to Figure 48, the matrix 4700 shows plots of GWP, BV, temperature glide, and capacity relative to R410A of a refrigerant composition as a function of the weight percentages of R1132(E), R134a, and CO₂. As similarly described above for the matrix 4500, the matrix 4700 in Figure 48 is a triangle that has sides that correspond to weight percentages (wt%) of R1132(E), R134a, and CO₂, respectively and vertexes that correspond to a composition of 100% R1132(E), 100% R134a, and 100% CO₂, respectively. In an embodiment, refrigerant compositions comprising R1132(E), R134a, and CO₂ can be selected based on the capacity, temperature glide, BV, and/or GWP shown in Figure 48.

Figure 49 is the matrix 4700 of Figure 48 illustrated to show selected refrigerant compositions, according to an embodiment. As shown in Figure 49, the refrigerant compositions include (i.e., consist of, consist essentially of, or comprise) R1132(E), R134a, and CO₂. The refrigerant compositions can be selected based on one or more desired refrigerant composition properties such as the capacity relative to R404A, temperature glide, BV, and GWP.

In an embodiment, a desired set of properties of a useful refrigerant composition includes having a GWP of at or about or less than 750 and a BV of at or less than 15 cm/s. Based on these desired properties, a range of useful refrigerant compositions 4740 is shown in the matrix 4700 of Figure 49. The useful refrigerant compositions 4740 include at or about 46 wt%, or less than 46 wt% and greater than 0 wt% of R1132(E); at or about 58 wt%, or less than 58 wt% and greater than 0 wt% of R134a; and less than 100 wt% and greater than 0 wt% of CO₂.

In an embodiment, the useful compositions 4740 may include preferred compositions 4742 as shown in Figure 49. The properties of the preferred compositions 4742 include having a GWP of at or about or less than 500 and a BV of at or less than 15 cm/s. The preferred compositions 4742 include at or about 46 wt%, or less than 46 wt% and greater than 0 wt% of R1132(E); at or about 39 wt%, or less than 39 wt% and greater than 0 wt% of R134a; and at or about 16 wt%, or greater than 16 wt% and less than 100 wt% of CO₂.

In an embodiment, the preferred compositions 4742 may include further preferred compositions 4744 as shown in Figure 49. The properties of the further preferred compositions 4744 include having a GWP of at or about or less than 300 and a BV of at or less than 15 cm/s. The further preferred compositions 4744 include at or about 46 wt%, or less than 46 wt% and greater than 0 wt% of R1132(E); at or about 23 wt%, or less than 23 wt% and greater than 0 wt% of R134a; and at or about 31 wt%, or greater than 31 wt% and less than 100 wt% of CO₂.

In an embodiment, the further preferred compositions 4744 may include greater preferred compositions 4746 as shown in Figure 49. The properties of the greater preferred compositions 4746 include having a GWP of at or about or less than 150 and a BV of at or less than 15 cm/s. The greater preferred compositions 4746 include at or about 46 wt%, or less than 46 wt% and greater than 0 wt% of R1132(E); at or about 11 wt%, or less than 11 wt% and greater than 0 wt% of R134a; and at or about 43 wt%, or greater than 43 wt% and less than 100 wt% of CO₂.

Figure 49 also includes shaded area 4770. The compositions in the shaded area 4770 have a BV of at or less than 10 cm/s. For example, the shaded area 4770 in Figure 49 have the same location and shapes as the shaded area 4670 in Figure 47 (e.g., same ranges of R1132(E), R134a, and CO₂). In some embodiments, a set of desired properties may include the lower BV provided by the compositions within the shaded area 4770 (e.g., a BV that is at or less than 10 cm/s). In such embodiments, desired compositions may be selected from the compositions illustrated in Figure 49 (e.g., useful refrigerant compositions 4740, preferred compositions 4742, the further preferred compositions 4744, greater preferred compositions 4746) and described with respect to Figure 49 that are within the shaded area 4770.

Figure 49 also includes hatched areas 4760, 4762, 4764. The compositions in the hatched areas 4760, 4762, 4764 have at or about or less than 200% of the capacity of R410A. As shown in Figure 49, the compositions in the hatched areas 4760, 4762, 4764 also have greater than 50% of the capacity of R410A. In some embodiments, a set of desired properties may include the capacity provided by the compositions within the hatched areas 4760, 4762, 4764 (e.g., capacity that is at or about or less than 200% of the capacity of R410A, a capacity more similar to the capacity of R410A). In such embodiments, desired compositions may be selected from the compositions illustrated in Figure 49 (e.g., useful refrigerant compositions 4740, preferred compositions 4742, the further preferred compositions 4744, greater preferred compositions 4746) and described with respect to Figure 49 that are within the hatched areas 4760, 4762, 4764.

For example, such desired compositions of the useful refrigerant compositions 4740 include at or about 46 wt%, or less than 46 wt% and greater than 0 wt% of R1132(E); at or about 4 - 58 wt% of R134a; and at or about 66 wt%, or less than 66 wt% and greater than 0 wt% of CO₂. For example, such desired compositions of the preferred compositions 4742 include at or about 46 wt%, or less than 46 wt% and greater than 0 wt% of R1132(E); at or about 4 - 39 wt% of R134a; and at or about 16 - 66 wt% of CO₂. For example, such desired compositions of the further preferred compositions 4744 include at or about 16 - 46 wt% of R1132(E); at or about 4 - 23 wt% of R134a; and at or about 31 - 61 wt% of CO₂. For example, such desired compositions of the greater preferred compositions 4746 include at or about 34 - 46 wt% of R1132(E); at or about 4-11 wt% of R134a; and at or about 43 - 55 wt% of CO₂.

The hatched areas 4760, 4762, 4764 in Figure 49 include a first hatched area 4760, a second hatched area 4762, and a third hatched area 4764. The compositions in the first hatched area 4760 and the second hatched area 4762 have at or about or less than 150% of the capacity of R410A. In some embodiments, a set of desired properties may include the capacity provided by the compositions within the first and second hatched areas 4760, 4762 (e.g., capacity that is at or about or less than 150% of the capacity of R410A, a capacity more similar to the capacity of R410A). In such embodiments, desired compositions may be selected from the compositions illustrated in Figure 49 (e.g., useful refrigerant compositions 4740, preferred compositions 4742) and described with respect to Figure 49 that are within one of the first hatched area 4760 and the second hatched area 4762.

For example, such desired compositions of the useful refrigerant compositions 4740 include at or about 46 wt%, or less than 46 wt% and greater than 0 wt% of R1132(E); at or about 47 wt%, or less than 47 wt% and greater than 0 wt% of R134a; and at or about 21 - 58 wt% of CO₂. For example, such desired compositions of the preferred compositions 4742 include at or about 23 - 46 wt% of R1132(E); at or about 16 - 39 wt% of R134a; and at or about 21 - 39 wt% of CO₂. For example, such desired compositions of the further preferred compositions 4744 include at or about 43 - 46 wt% of R1132(E); at or about 21 - 23 wt% of R134a; and at or about 31 - 34 wt% of CO₂.

The compositions in the first hatched area 4760 have less than 85% of the capacity of R410A. In some embodiments, a set of desired properties may include the capacity provided by the compositions not within the first hatched area 4760 (e.g., capacity that is at or about or greater than 85% of the capacity of R410A, a capacity more similar to the capacity of R410A). In such embodiments, desired compositions may be selected from the compositions illustrated in Figure 49 (e.g., useful refrigerant compositions 4740) and described with respect to Figure 49 to omit those compositions within the first hatched area 4760.

For example, such desired compositions of the useful refrigerant compositions 4740 include at or about 36 - 46 wt% of R1132(E); at or about 51 - 58 wt% of R134a; and at or about 6 wt%, or less than 6 wt% and greater than 0 wt% of CO₂.

In some embodiments, a set of desired properties may include having a BV of at or less than 10 cm and at least one of the described capacities (e.g., at or about or less than 200% of the capacity of R410A, at or about or less than 150% of the capacity of R410A, at or about or greater than 85% of the capacity of R410A). In such embodiments, desired compositions may be selected from the compositions illustrated in Figure 49 (e.g., useful compositions 4740, preferred compositions 4742, further preferred compositions 4744) and described with respect to Figure 49 that are within the corresponding hatched area(s) 4760, 4762, 4764 and within the shaded area 4770. For example, a lower limit of R134a in such desired compositions for the first hatched area 4760 is at or about 14 wt%. For example, a lower limit of R134a in such desired compositions for the second hatched area 4762 is at or about 33 wt%.

In some embodiments, a set of desired properties for a refrigerant composition may include a temperature glide and/or a different capacity. In an embodiment, a temperature glide that is at or about or less than 25K may be desired. In an embodiment, a temperature glide that is at or about or less than 20K may be desired. In an embodiment, a temperature glide that is at or about or less than 15K may be desired. In an embodiment, a temperature glide that is at or about or less than 10K may be desired. In an embodiment, a capacity that is at or about or less than 300% of the capacity of R404A. It should be appreciated that the matrix 4700 in Figure 49 may be used to further select compositions/ranges with the desired temperature glide and/or capacity. For example, the different ranges of compositions described above with respect to Figure 49 may be modified/selected based on Figure 49 so as to have ranges of R1132(E), R134a, and CO₂ with the desired properties (e.g., temperature glide and/or capacity).

Figure 3 is the matrix 200 of Figure 2 illustrated to show selected refrigerant compositions, according to an embodiment. As shown in Figure 3, the refrigerant compositions can include (i.e., consist of, consist essentially of, or comprise) R1132(E), R32, and R1234yf. The refrigerant compositions can be selected based on one or more of the refrigerant composition properties such as the capacity relative to R404A, temperature glide, OEL, BV, and GWP.

In an embodiment, a desired set of properties of a useful refrigerant composition includes having a GWP of at or about or less than 300 and a burning velocity of at or less than 15 cm/s. Based on these desired properties, a range of useful refrigerant compositions 240 is shown in the matrix 200 of Figure 3. The useful refrigerant compositions 240 include at or about 43 wt%, or less than 43 wt% and greater than 0 wt% of R1132(E); at or about 20 wt%, or greater than 20 wt% and less than 100 wt% of R1234yf; and at or about 44 wt%, or less than 44 wt% and greater than 0 wt% of R32.

In an embodiment, the useful compositions 240 may include preferred compositions 242 as shown in Figure 3. The properties of the preferred compositions 242 include having a GWP of at or about or less than 300, a burning velocity of at or less than 15 cm/s, and a capacity at or about or greater than 75% of the capacity of R404A. The preferred compositions 242 include at or about 43 wt%, or less than 43 wt% and greater than 0 wt% of R1132(E); at or about 20 - 89 wt% of R1234yf; and at or about 44 wt%, or less than 44 wt% and greater than 0 wt% of R32.

In an embodiment, the preferred compositions 242 may include further preferred compositions 244 as shown in Figure 3. The properties of the further preferred compositions 244 include having a GWP of at or about or less than 300, a burning velocity of at or less than 15 cm/s, and at or about or greater than 80% of the capacity of R404A. The further preferred compositions 244 include at or about 43 wt%, or less than 43 wt% and greater than 0 wt% of R1132(E); at or about 20 - 86 wt% of R1234yf; and at or about 44 wt%, or less than 44 wt% and greater than 0 wt% of R32.

In an embodiment, the further preferred compositions 244 may include greater preferred compositions 246 as shown in Figure 3. The properties of the greater preferred compositions 246 include having a GWP of at or about or less than 300, a burning velocity of at or less than 15 cm/s, and at or about or greater than 85% of the capacity of R404A. The greater preferred compositions 246 include at or about 43 wt%, or less than 43 wt% and greater than 0 wt% of R1132(E); at or about 20 - 82 wt% of R1234yf; and at or about 44 wt%, or less than 44 wt% and greater than 0 wt% of R32.

In an embodiment, the greater preferred compositions 246 may include further greater preferred compositions 248 as shown in Figure 3. The properties of the further greater preferred compositions 248 include having a GWP of at or about or less than 300, a burning velocity of at or less than 15 cm/s, and at or about or greater than 90% of the capacity of R404A. The further greater preferred compositions 248 include at or about 43 wt%, or less than 43 wt% and greater than 0 wt% of R1132(E); at or about 20 - 79 wt% of R1234yf; and at or about 44 wt%, or less than 44 wt% and greater than 0 wt% of R32.

In an embodiment, the further greater preferred compositions 248 may include even further greater preferred compositions 250 as shown in Figure 3. The properties of the even further greater preferred compositions 250 include having a GWP of at or about or less than 300, a burning velocity of at or less than 15 cm/s, and at or about or greater than 95% of the capacity of R404A. The even further greater preferred compositions 250 include at or about 43 wt%, or less than 43 wt% and greater than 0 wt% of R1132(E); at or about 20 - 75 wt% of R1234yf; and at or about 44 wt%, or less than 44 wt% and greater than 0 wt% of R32.

Figure 3 also includes hatched area 260. The compositions in the hatched area 260 have a GWP of at or about or less than 150. In some embodiments, a set of desired properties may include the lower GWP provided by the compositions within the hatched area 260, 262 (e.g., a GWP that is at or about or less than 150). In such embodiments, desired compositions may be selected from the compositions illustrated in Figure 3 (e.g., useful compositions 240, preferred compositions 242, further preferred compositions 244, greater preferred compositions 246, further greater preferred compositions 248, even further greater preferred compositions 250) and described with respect to Figure 3 that are within the hatched area 260.

For example, such desired compositions of the useful compositions 240 include at or about 43 wt%, or less than 43 wt% and greater than 0 wt% of R1132(E); at or about 38 wt%, or greater than 38 wt% and less than 100 wt% of R1234yf; and at or about 22 wt%, or less than 22 wt% and greater than 0 wt% of R32. For example, such desired compositions of the preferred compositions 242 include at or about 43 wt%, or less than 43 wt% and greater than 0 wt% of R1132(E); at or about 38 - 89 wt% of R1234yf; and at or about 22 wt%, or less than 22 wt% and greater than 0 wt% of R32. For example, such desired compositions of the further preferred compositions 244 include at or about 43 wt%, or less than 43 wt% and greater than 0 wt% of R1132(E); at or about 38 - 86 wt% of R1234yf; and at or about 22 wt%, or less than 22 wt% and greater than 0 wt% of R32. For example, such desired compositions of the greater preferred compositions 246 include at or about 43 wt%, or less than 43 wt% and greater than 0 wt% of R1132(E); at or about 38 - 82 wt% of R1234yf; and at or about 22 wt%, or less than 22 wt% and greater than 0 wt% of R32.For example, such desired compositions of the further greater preferred compositions 248 include at or about 43 wt%, or less than 43 wt% and greater than 0 wt% of R1132(E); at or about 38 - 79 wt% of R1234yf; and at or about 22 wt%, or less than 22 wt% and greater than 0 wt% of R32. For example, such desired compositions of the even further greater preferred compositions 250 include at or about 4 - 43 wt% of R1132(E); at or about 38 - 74 wt% of R1234yf; and at or about 22 wt%, or less than 22 wt% and greater than 0 wt% of R32.

Figure 3 also includes shaded area 270. In some embodiments, a set of desired properties may include the lower BV provided by the compositions within the shaded area 270 (e.g., a BV that is at or less than 10 cm/s). In such embodiments, desired compositions may be selected from the compositions illustrated in Figure 3 (e.g., useful compositions 240, preferred compositions 242, further preferred compositions 244, greater preferred compositions 246, further greater preferred compositions 248, even further greater preferred compositions 250) and described with respect to Figure 3 that are within the shaded area 270.

For example, such desired compositions of the useful refrigerant compositions 240 include at or about 27 wt%, or less than 27 wt% and greater than 0 wt% of R1132(E); at or about 36 wt%, or greater than 36 wt% and less than 100 wt% of R1234yf; and at or about 44 wt%, or less than 44 wt% and greater than 0 wt% of R32. For example, such desired compositions of the preferred compositions 242 include at or about 27 wt%, or less than 27 wt% and greater than 0 wt% of R1132(E); at or about 36 - 89 wt% of R1234yf; and at or about 44 wt%, or less than 44 wt% and greater than 0 wt% of R32. For example, such desired compositions of the further preferred compositions 244 include at or about 27 wt%, or less than 27 wt% and greater than 0 wt% of R1132(E); at or about 36 - 86 wt% of R1234yf; and at or about 44 wt%, or less than 44 wt% and greater than 0 wt% of R32. For example, such desired compositions of the greater preferred compositions 246 include at or about 27 wt%, or less than 27 wt% and greater than 0 wt% of R1132(E); at or about 36 - 82 wt% of R1234yf; and at or about 44 wt%, or less than 44 wt% and greater than 0 wt% of R32. For example, such desired compositions of the further greater preferred compositions 248 include at or about 27 wt%, or less than 27 wt% and greater than 0 wt% of R1132(E); at or about 36 - 79 wt% of R1234yf; and at or about 1 - 44 wt% of R32. For example, such desired compositions of the even further greater preferred compositions 250 include at or about 4 - 27 wt% of R1132(E); at or about 36 - 75 wt% of R1234yf; and at or about 5-44 wt% of R32.

In some embodiments, a set of desired properties may include having a BV of 10 cm/s or less and a GWP of at or about or less than 150. In such embodiments, desired compositions may be selected from the compositions illustrated in Figure 3 (e.g., useful compositions 240, preferred compositions 242, further preferred compositions 244, greater preferred compositions 246) and described with respect to Figure 3 that are within both the hatched area 260 and the shaded area 270. For example, an upper limit of R32 in such desired compositions is at or about 22 wt%, and a lower limit of the R1234yf in such desired compositions is at or about 55 wt%.

In some embodiments, a set of desired properties for a refrigerant composition may include a different GWP than discussed above, a different capacity than discussed above, a different BV than discussed above, and/or a temperature glide. In an embodiment, a BV of at or less than 5 cm/s may be desired. In an embodiment, glide that is at or less than 3K may be desired. In an embodiment, a temperature glide that is at or less than 2.5K may be desired. In an embodiment, a temperature glide that is at or less than 2K may be desired. In an embodiment, a GWP of at or about or less than 50 may be desired. In an embodiment, a GWP of at or about or less than 10 may be desired. In an embodiment, a capacity at or about or greater than 100% of the capacity of R404A may be desired. In an embodiment, a capacity at or about or less than 150% of the capacity of R404A may be desired. In an embodiment, a capacity at or about or less than 140% of the capacity of R404A may be desired. In an embodiment, a capacity at or about or less than 130% of the capacity of R404A may be desired. In an embodiment, a capacity at or about or less than 125% of the capacity of R404A may be desired. It should be appreciated that the matrix 200 in Figure 3 may be used to further select compositions/ranges with the desired GWP, BV, capacity, and/or temperature glide. For example, the different ranges of compositions discussed above with respect to Figure 3 may be modified/selected based on Figure 3 so as to have ranges of R1132(E), R32, and R1234yf with the desired properties (e.g., GWP, capacity, BV, and/or temperature glide). It is further appreciated that the selection described is illustrative and not limited to the selection criteria described above.

Methods of making one or more refrigerant compositions according to the refrigerant compositions shown and described in Figures 2 - 15 are disclosed. The method can include mixing one or more chemicals, one or more refrigerants, and/or one or more existing refrigerant compositions to obtain the refrigerant compositions disclosed in Figures 2 - 51.

Methods of retrofitting an HVACR system having an existing refrigerant composition to obtain a refrigerant composition according to the refrigerant compositions shown and described in Figures 2 - 51 are disclosed. Refrigerant compositions prepared for replacing and/or retrofitting an existing refrigerant composition or a system designed for, or using, an existing refrigerant composition can be referred to as a retrofit refrigerant composition. For example, the existing refrigerant composition can be R404A, R410A, R454A, R454B, R454C, or the like, or using one or two of R1132(E), R1234yf, R1234ze(E), R134a, and a third refrigerant. The third refrigerant can be R32, R1132a, R1123 or CO₂. The method can include replacing at least a portion of the existing refrigerant composition to obtain a retrofitted refrigerant composition.

In an embodiment, the retrofitting of the HVACR system can include removing (e.g., draining) an amount of the existing composition from the HVACR system and adding one or more refrigerants (e.g., R1132(E), R1234ze(E), R134a, R32, R1132a, R1123, CO₂) to obtain the retrofitted refrigerant composition that is one of the refrigerant compositions shown and described herein. For example, an HVACR system using R1234yf can be retrofitted by draining an amount of an existing refrigerant composition out from the HVACR system and adding R1132(E) and a third refrigerant (e.g., R32) to the HVACR so that the working fluid resulted in the HVACR system can have a refrigerant composition disclosed, e.g., in Figure 3. For example, this HVACR system can be designed to use R404A, but currently using R1132(E) to lower GWP. This HVACR system can be retrofitted to improve the capacity and/or efficiency with little to no effect to the GWP of the resulting working fluid, relative to the GWP of R1132(E).

In an embodiment, a HVACR system can be designed to use an existing refrigerant composition (e.g., R404A, R410A, R454A, R454B, R454C, or the like) and be retrofitted to, e.g., lower GWP. The retrofitting of this HVACR system can include removing (e.g., removing) the existing refrigerant composition from the HVACR and the adding of one or more refrigerants can be the adding of one of the refrigerant compositions disclosed herein. For example, this retrofitting can be configured to have a comparable capacity (e.g., to the previous refrigerant composition) while lowering the GWP.

In some embodiments, the performance characteristic(s) of the resulting refrigerant composition may be simulated and/or estimated by an Excel-based thermodynamic cycle calculation tool, such as using NIST's REFPROP for thermodynamic properties. It is noted that the capacity may be provided, for example, in a measurement performed in a lab and/or in a computer based simulation. The capacity may be provided based on operation conditions provided in the Standard for Performance Rating of Unitary Air-Conditioning & Air-source Heat Pump Equipment (e.g., Air-Conditioning, Heating and Refrigeration Institute Standard (AHRI Std) 210/240 "A" rating point). For example, capacity relative R410A and R404A may be provided using the operation conditions provided in the Standard for Performance Rating of Unitary Air-Conditioning & Air-source Heat Pump Equipment. For example, operation conditions for providing capacity and compressor discharge temperature relative to R404A may be provided using the operating conditions in Table 1 below.

**Table 1: Operating Conditions for performance relative to R404A**

| | |
|---|---|
| **T_{Evap}** | **-24.4°C** |
| **T_{cond}** | **26.7°C** |
| **DTSH** | **7.8°C** |
| **DTSC** | **0°C** |
| **Glide Ew*** | **0.5** |
| **Glide Cw*** | **0.5** |
| **η_{Cmpr}** | **0.65** |
| *Condenser/Evaporator heat exchanger glide weighting at midpoint conditions | |

In some embodiments, a refrigerant composition designed to replace an existing refrigerant composition to be used in an HVACR system designed for the existing refrigerant compositions can be referred to as retrofit refrigerant or retrofit refrigerant composition. In some embodiments, a working fluid having an existing refrigerant composition can be retrofitted to obtain the refrigerant compositions disclosed.
In an embodiment, a working fluid having the existing refrigerant compositions can be retrofitted to obtain a working fluid having the disclosed refrigerant composition, for example, by mixing in one or more chemical and/or one or more refrigerants according to the disclosed refrigerant compositions. In an embodiment, a working fluid having the disclosed refrigerant compositions can be used in an HVACR system designed for an existing refrigerant composition. Aspects:
Any of Aspects 1 - 69 may be combined with any of Aspects 70 - 89, any of Aspects 70 - 87 may be combined with any of Aspects 88 - 89, and Aspect 88 may be combined with Aspect 89.
Aspect 1. A refrigerant composition for an HVACR system comprising:
   R1132(E) refrigerant;
   a second refrigerant being one of R1234yf refrigerant, R1234ze(E) refrigerant, and R134a refrigerant; and
   a third refrigerant being one of R32 refrigerant, R1132a refrigerant, R1123 refrigerant, and CO₂, wherein
   the refrigerant composition has a GWP of at or about or less than 750.
Aspect 2. The refrigerant composition of Aspect 1, wherein the second refrigerant is the R1234yf refrigerant.
Aspect 3. The refrigerant composition of Aspect 2, wherein the third refrigerant is the R32 refrigerant, the GWP of the refrigerant composition is at or about or less than 300, and the R32 refrigerant is at or about or less than 44 wt% of the refrigerant composition.
Aspect 4. The refrigerant composition of any one of Aspects 1 to 3, wherein the refrigerant composition has a burning velocity equal to or less than 15 cm/s, and the R1132(E) refrigerant is at or about or less than 43 wt% of the refrigerant.
Aspect 5. The refrigerant composition of any one of Aspects 1 to 4, wherein the refrigerant composition has a burning velocity equal to or less than 10 cm/s, and the R1132(E) refrigerant is at or about or less than 27 wt% of the refrigerant.
Aspect 6. The refrigerant composition of any one of Aspects 1-5, wherein the GWP of the refrigerant composition is at or about or less than 150, and the R32 refrigerant is at or about or less than 22 wt% of the refrigerant composition.
Aspect 7. The refrigerant composition of any one of Aspects 1 - 6, wherein the R1234yf is at or about or less than 87 wt% of the refrigerant composition, and the refrigerant composition optionally has a capacity of at or about or greater than 50% of a capacity of R410A.
Aspect 8. The refrigerant composition of any one of Aspects 1 - 7, wherein the R1234yf is at or about 38 - 87 wt% of the refrigerant composition, and the refrigerant composition optionally has a capacity of at or about or greater than 70% of a capacity of R454A.
Aspect 9. The refrigerant composition of Aspect 2, wherein third refrigerant is the R1132a refrigerant, the R1132a refrigerant is at or about or less than 83 wt% of the refrigerant composition, and the refrigerant composition optionally has a burning velocity equal to or less than 25 cm/s.
Aspect 10. The refrigerant composition of Aspect 9, wherein the R1132(E) refrigerant is at or about or less than 43 wt% of the refrigerant composition, R1234yf refrigerant is at or about or greater than 52 wt% of the refrigerant composition, and the R1132a refrigerant is at or about or less than about 52 wt% of the refrigerant composition, and the burning velocity of the refrigerant composition is optionally equal to or less than 15 cm/s.
Aspect 11. The refrigerant composition of Aspect 9, wherein, the R1132(E) refrigerant is at or about or less than 76 wt% of the refrigerant composition and the R1234yf refrigerant is at or about 17 - 75 wt% of the refrigerant composition, and the refrigerant composition has at or about or greater than 75% of a capacity of R410A.
Aspect 12. The refrigerant composition of Aspect 11, wherein the R1132(E) refrigerant is at or about or less than 33 wt% of the refrigerant composition, the R1234yf refrigerant is at or about 52 - 75 wt% of the refrigerant composition, the R1132a refrigerant is at or about 8 - 48 wt% of the refrigerant composition, and the burning velocity of the refrigerant composition is optionally equal to or less than 15 cm/s.
Aspect 13. The refrigerant composition of any one Aspects 9 - 12, wherein the R1234yf refrigerant is at or about or less than 70 wt% of the refrigerant composition, the R1132a refrigerant is at or about or less than 31 wt% of the refrigerant composition, and the burning velocity of the refrigerant composition is optionally equal to or less than 10 cm/s.
Aspect 14. The refrigerant composition of Aspect 2, wherein the third refrigerant is the R1123 refrigerant, the R1132(E) refrigerant is at or about or less than 43 wt% of the refrigerant composition, and the refrigerant composition optionally has a burning velocity equal to or less than 15 cm/s.
Aspect 15. The refrigerant composition of Aspect 14, wherein the R1234yf refrigerant is at or about or less than 82 wt% of the refrigerant composition, and the refrigerant composition optionally has a capacity that is at or about or greater than 50% of a capacity of R410a refrigerant.
Aspect 16. The refrigerant composition of any one of Aspects 14 - 15, wherein the R1123 refrigerant is at or about or less than 20 wt% of the refrigerant composition, and the refrigerant composition optionally has an occupational exposure limit (OEL) of at or greater than 400 ppm.
Aspect 17. The refrigerant composition of any one of Aspects 14 - 16, wherein the R1132(E) refrigerant is at or about or less than 28 wt% of the refrigerant composition, and the burning velocity of the refrigerant composition is optionally equal to or less than 10 cm/s.
Aspect 18. The refrigerant composition of Aspect 2, wherein the third refrigerant is the CO₂, the R1132(E) refrigerant is at or about or less than 46 wt% of the refrigerant composition, and the refrigerant composition optionally has a burning velocity equal to or less than 15 cm/s.
Aspect 19. The refrigerant composition of Aspect 18, wherein the R1132(E) is at or about or less than 45 wt%, the R1234yf refrigerant is at or about or greater than 27 wt% of the refrigerant composition, the CO₂ is at or about or less than 29 wt% of the refrigerant composition, the refrigerant compositions optionally has a temperature glide of at or about or less than 15° K and at or about or less than 200% of a capacity of R404A.
Aspect 20. The refrigerant composition of Aspect 18, wherein the R1132(E) is at or about or less than 45 wt%, the R1234yf refrigerant is at or about or greater than 4 wt% of the refrigerant composition, the CO₂ is at or about or less than 56 wt% of the refrigerant composition, the refrigerant compositions optionally has a temperature glide of at or about or less than 15° K and at or about or less than 200% of a capacity of R410A.
Aspect 21. The refrigerant composition of any one of Aspects 19 - 20, wherein the R1234yf refrigerant is at or about or greater than 46 wt% of the refrigerant composition, the CO₂ is at or about or less than 11 wt% of the refrigerant composition, the refrigerant compositions optionally has a temperature glide of at or about or less than 10° K.
Aspect 22. The refrigerant composition of any one of Aspects 18 - 21, wherein the R1132(E) is at or about or less than 31 wt%, and the refrigerant composition optionally has a burning velocity equal to or less than 10 cm/s.
Aspect 23. The refrigerant composition of Aspect 1, wherein the second refrigerant is the R1234ze(E) refrigerant.
Aspect 24. The refrigerant composition of Aspect 23, wherein the third refrigerant is the R32 refrigerant, R1234ze(E) refrigerant is at or about or greater than 20 wt% of the refrigerant composition, the R32 refrigerant is at or about or less than 44 wt% of the refrigerant composition, the R1132(E) refrigerant is at or about or less than 36 wt% of the refrigerant composition, and the refrigerant composition optionally has the GWP of at or about or less than 300 and a burning velocity equal to or less than 15 cm/s.
Aspect 25. The refrigerant composition of Aspect 24, wherein the R32 refrigerant is at or about or less than 22 wt% of the refrigerant, and the GWP of the refrigerant composition is optionally at or about or less than 150.
Aspect 26. The refrigerant composition of any one of Aspects 24 - 25, wherein the R1234ze(E) refrigerant is at or about 23 - 91 wt% of the refrigerant, and the refrigerant composition optionally has at or about or greater than 50% of a capacity of R404A refrigerant.
Aspect 27. The refrigerant composition of any one of Aspects 24 - 25, wherein the R1234ze(E) refrigerant is at or about 23 - 74 wt% of the refrigerant, and the refrigerant composition optionally has at or about or greater than 50% of a capacity of R410A refrigerant.
Aspect 28. The refrigerant composition of any one of Aspects 24 - 27, wherein the R1132(E) refrigerant is at or about or less than 18 wt% of the refrigerant composition and the R1132ze(E) is at or about or greater than 41 wt% of the refrigerant composition, and the burning velocity of the refrigerant composition is optionally equal to or less than 10 cm/s.
Aspect 29. The refrigerant composition of any one of Aspects 24 - 28, wherein the R32 refrigerant is at or about or less than 44 wt% of the refrigerant composition, and the GWP of the refrigerant composition is optionally at or about or less than 150.
Aspect 30. The refrigerant composition of Aspect 23, wherein the third refrigerant is the R1132a refrigerant, the R1234ze(E) refrigerant is at or about or greater than 53 wt% of the refrigerant composition, the R1132a refrigerant is at or about or less than 47 wt% of the refrigerant composition, the R1132(E) refrigerant is at or about or less than 43 wt% of the refrigerant composition, and the refrigerant composition optionally has a burning velocity of equal to or less than 15 cm/s.
Aspect 31. The refrigerant composition of Aspect 30, wherein the R1234ze(E) refrigerant is at or about 53 - 81 wt% of the refrigerant composition, the R1132a refrigerant is at or about or less than 30 wt% of the refrigerant composition, and the refrigerant composition optionally has a capacity that is at or about or greater than 75% of a capacity of R404A.
Aspect 32. The refrigerant composition of Aspect 30, wherein the R1234ze(E) refrigerant is at or about 53 - 83 wt% of the refrigerant composition, the R1132a refrigerant is at or about or less than 47 wt% of the refrigerant composition, and the refrigerant composition optionally has a capacity that is at or about or greater than 50% of a capacity of R410A.
Aspect 33. The refrigerant composition of any one of Aspects 30 - 32, wherein the R1132(E) refrigerant is at or about or less than 43 wt% of the refrigerant composition, the R1234ze(E) refrigerant is at or about or greater than 70 wt% of the refrigerant composition, the R1132a refrigerant is at or about or less than 30 wt% of the refrigerant composition, and the burning velocity of the refrigerant composition is optionally equal to or less than 10 cm/s.
Aspect 34. The refrigerant composition of Aspect 23, wherein the third refrigerant is the R1123 refrigerant, the R1234ze(E) refrigerant is at or about or greater than 34 wt% of the refrigerant composition, the R1123 refrigerant is at or about or less than 51 wt% of the refrigerant composition, the R1132(E) refrigerant is at or about or less than 36 wt% of the refrigerant composition, and the refrigerant composition optionally has a burning velocity of equal to or less than 15 cm/s and an OEL of at or about or greater than 400 ppm.
Aspect 35. The refrigerant composition of Aspect 34, wherein the R1234ze(E) refrigerant is at or about 34 - 87 wt% of the refrigerant composition, the R1132(E) is at or about or greater than 12 wt%, and the refrigerant composition optionally has a capacity that is at or about or greater than 50% of a capacity of R404a.
Aspect 36. The refrigerant composition of Aspect 34, wherein the R1234ze(E) refrigerant is at or about 34 - 66 wt% of the refrigerant composition, and the refrigerant composition optionally has a capacity that is at or about or greater than 50% of a capacity of R410A.
Aspect 37. The refrigerant composition of any one of Aspects 34 - 36, wherein the R1132(E) refrigerant is at or about or less than 18 wt% of the refrigerant composition, the R1234ze(E) refrigerant is at or about or greater than 43 wt% of the refrigerant composition, and the burning velocity of the refrigerant composition is optionally equal to or less than 10 cm/s.
Aspect 38. The refrigerant composition of any one of Aspects 34 - 37, wherein the R1123 refrigerant is at or about or less than 39 wt% of the refrigerant composition, and the refrigerant composition optionally has a temperature glide of at or about or less than 10° K.
Aspect 39. The refrigerant composition of Aspect 23, wherein the third refrigerant is the CO₂, the R1132(E) refrigerant is at or about or less than 46 wt% of the refrigerant composition, and the refrigerant composition optionally has a burning velocity equal to or less than 15 cm/s.
Aspect 40. The refrigerant composition of Aspect 39, wherein the R1234ze(E) refrigerant is at or about or greater than 25 of the refrigerant composition, the CO₂ is at or about or less than 44 wt%, and the refrigerant composition optionally has a capacity that is at or about or less than 200% of a capacity of R404a.
Aspect 41. The refrigerant composition of any one of Aspects 39, wherein the R1234ze(E) refrigerant is at or about or greater than 3% of the refrigerant composition, the CO₂ is at or about or less than 71% of the refrigerant composition, and the refrigerant composition optionally has a capacity that is at or about or less than 200% of a capacity of R410A.
Aspect 42. The refrigerant composition of any one of Aspects 39 - 41, wherein the R1234ze(E) refrigerant is at or about or less than 89% of the refrigerant composition, and the refrigerant composition optionally has a capacity that is at or about or less greater 75% of a capacity of R410A.
Aspect 43. The refrigerant composition of any one of Aspects 39 - 42, wherein the R1132(E) refrigerant is at or about or less than 31 wt% of the refrigerant composition, and the burning velocity of the refrigerant composition is optionally equal to or less than 10 cm/s.
Aspect 44. The refrigerant composition of any one of Aspects 39 - 43, wherein the CO₂ is at or about or greater than 16 wt% of the refrigerant composition, and the refrigerant composition optionally has a temperature glide of at or about or less than 20°K.
Aspect 45. The refrigerant composition of Aspect 1, wherein the second refrigerant is the R134a refrigerant, and the R134a refrigerant is at or about or less than 58 wt% of the refrigerant composition.
Aspect 46. The refrigerant composition of Aspect 45, wherein the third refrigerant is the R32 refrigerant, the R134a refrigerant is at or about or less than 40 wt% of the refrigerant composition, and the refrigerant composition optionally has a burning velocity equal to or less than 15 cm/s.
Aspect 47. The refrigerant composition of Aspect 46, wherein the R1132(E) refrigerant is at or about or greater than 26 wt% of the refrigerant composition, the R32 refrigerant is at or about or less than 74 wt% of the refrigerant composition, the R134a refrigerant is at or about or less than 34 wt% of the refrigerant composition, and the GWP of the refrigerant compositions is optionally at or less than 500.
Aspect 48. The refrigerant composition of Aspect 46, wherein the R1132(E) refrigerant is at or about or greater than 56 wt% of the refrigerant composition, the R32 refrigerant is at or about or less than 44 wt% of the refrigerant composition, the R134a refrigerant is at or about or less than 23 wt% of the refrigerant composition, and the GWP of the refrigerant compositions is optionally at or less than 300.
Aspect 49. The refrigerant composition of Aspect 46, wherein the R1132(E) refrigerant is at or about or greater than 78 wt% of the refrigerant composition, the R32 refrigerant is at or about or less than 22 wt% of the refrigerant composition, the R134a refrigerant is at or about or less than 11 wt% of the refrigerant composition, and the GWP of the refrigerant compositions is optionally at or less than 150.
Aspect 50. The refrigerant composition of any one of Aspects 46 - 49, wherein the refrigerant composition has at or about or less than 150% of a capacity of R404A refrigerant.
Aspect 51. The refrigerant composition of any one of Aspects 46 - 49, wherein the refrigerant composition has at or about or less than 85% of a capacity of R404A refrigerant.
Aspect 52. The refrigerant composition of any one of Aspects 46 - 51, wherein the R134a refrigerant is at or about or less than 27 wt% of the refrigerant composition, and the burning velocity of the refrigerant composition is optionally equal to or less than 10 cm/s.
Aspect 53. The refrigerant composition of Aspect 45, wherein the third refrigerant is the R1132a refrigerant, the R134a refrigerant is at or about or greater than 50 wt% of the refrigerant composition, and the refrigerant composition optionally has a burning velocity equal to or less than 15 cm/s.
Aspect 54. The refrigerant composition of Aspect 53, wherein the R1132a refrigerant is at or about or greater than 10 wt% of the refrigerant composition, the R1132(E) refrigerant is at or about or less than 36 wt% of the refrigerant composition, and the refrigerant composition optionally has at or about or greater than 75% of a capacity of R410A.
Aspect 55. The refrigerant composition of Aspect 45, wherein the third refrigerant is the R1123 refrigerant, the R1132(E) refrigerant is at or about or less than 92 wt% of the refrigerant composition.
Aspect 56. The refrigerant composition of Aspect 55, wherein the R1132(E) refrigerant is at or about or less than 46 wt% of the refrigerant composition, the R134a refrigerant is at or about or less than 26 wt% of the refrigerant composition, and the refrigerant composition optionally has a burning velocity equal to or less than 15 cm/s.
Aspect 57. The refrigerant composition of any one of Aspects 55 - 56, wherein the refrigerant composition has a burning velocity equal to or less than 10 cm/s.
Aspect 58. The refrigerant composition of any one of Aspects 55 - 57, wherein the GWP of the refrigerant composition is at or less than 500.
Aspect 59. The refrigerant composition of any one of Aspects 55 - 56, wherein the GWP of the refrigerant composition is at or less than 300.
Aspect 60. The refrigerant composition of any one of Aspects 55 - 56, wherein the GWP of the refrigerant composition is at or less than 150.
Aspect 61. The refrigerant composition of Aspect 45, wherein the third refrigerant is the CO₂ refrigerant, the R1132(E) refrigerant is at or about or less than 46 wt% of the refrigerant composition, and the refrigerant composition optionally has a burning velocity equal to or less than 15 cm/s.
Aspect 62. The refrigerant composition of Aspect 61, wherein the burning velocity of the refrigerant composition is equal to or less than 10 cm/s.
Aspect 63. The refrigerant composition of any one of Aspects 61 - 62, wherein the GWP of the refrigerant composition is at or less than 500.
Aspect 64. The refrigerant composition of any one of Aspects 61 - 62, wherein the GWP of the refrigerant composition is at or less than 300.
Aspect 65. The refrigerant composition of any one of Aspects 61 - 62, wherein the GWP of the refrigerant composition is at or less than 150.
Aspect 66. The refrigerant composition of any one of Aspects 61 - 63, wherein the refrigerant composition has a capacity of at or less than 200% of a capacity of R404A.
Aspect 67. The refrigerant composition of any one of Aspects 61 - 63, wherein the refrigerant composition has a capacity of at or less than 150% of a capacity of R404A.
Aspect 68. The refrigerant composition of any one of Aspects 61 - 67, wherein the refrigerant composition has a capacity of at or greater than 75% of a capacity of R410A.
Aspect 69. The refrigerant composition of any one of Aspects 61 - 65, wherein the refrigerant composition has a capacity of at or less than 200% of a capacity of R410A.
Aspect 70. A refrigerant composition for an HVACR system comprising:
   R1132(E) refrigerant;
   a second refrigerant being one of R1234yf refrigerant, R1234ze(E) refrigerant, and R134a refrigerant; and
   a third refrigerant being one of R32 refrigerant, R1132a refrigerant, R1123 refrigerant, and CO₂, wherein
   the refrigerant composition has a GWP of at or about or less than 750.
Aspect 71. The refrigerant composition of Aspect 1, wherein the second refrigerant is one of the R1234yf refrigerant and the R1234ze(E) refrigerant, and the GWP of the refrigerant composition is optionally at or about or less than 300.
Aspect 72. The refrigerant composition of any one of Aspects 70 - 71, wherein the refrigerant composition has a burning velocity of at or less than 15 cm/s.
Aspect 73. The refrigerant composition of any one of Aspects 70 and 72, wherein the second refrigerant is the R1234yf refrigerant, the GWP of the refrigerant composition is optionally at or about or less than 300.
Aspect 74. The refrigerant composition of Aspect 73, wherein the third refrigerant is the R32 refrigerant that is or about or less than 44 wt% of the refrigerant composition, the R1234yf refrigerant is at or about or greater than 20 wt% of the refrigerant composition, and the R1132(E) is at or about or less than 43 wt% of the refrigerant composition, and the refrigerant composition optionally has a burning velocity of at or less than 15 cm/s.
Aspect 75. The refrigerant composition of Aspect 74, wherein the R32 refrigerant is at or about or less than 20 wt% of the refrigerant composition, and the GWP of the refrigerant composition is optionally at or about or less than 150.
Aspect 76. The refrigerant composition of any one of Aspects 74 - 75, wherein the R1234yf refrigerant is at or about or less than 70 wt% of the refrigerant composition, the R1132(E) refrigerant is at or about or greater than 8 wt% of the refrigerant composition, and the refrigerant composition optionally has a capacity equal to or greater than 90% of a capacity of R454A.
Aspect 77. The refrigerant composition of Aspect 76, wherein the R1132(E) refrigerant is at or about or less than 27 wt% of the refrigerant composition, and the burning velocity of the refrigerant composition is optionally equal to or less than 15 cm/s.
Aspect 78. The refrigerant composition of Aspect 71, wherein the third refrigerant is one of the R1132a refrigerant, the R1123 refrigerant, and the CO₂.
Aspect 79. The refrigerant composition of Aspect 78, wherein the refrigerant composition has a burning velocity of equal to or less than 15 cm/s.
Aspect 80. The refrigerant composition of Aspect 70, wherein the second refrigerant is the R1234ze(E) refrigerant, the GWP of the refrigerant composition is at or about or less than 300, and the refrigerant composition optionally has a burning velocity equal to or less than 15 cm/s.
Aspect 81. The refrigerant composition of Aspect 80, wherein the GWP of the refrigerant composition is at or about or less than 150.
Aspect 82. The refrigerant composition of any one of Aspects 80 - 81, wherein the burning velocity of the refrigerant composition is equal to or less than 10 cm/s.
Aspect 83. The refrigerant composition of any one of Aspects 80 - 82, wherein the refrigerant composition has at or greater than 50% of a capacity of R410A.
Aspect 84. The refrigerant composition of any one of Aspects 80 - 82, wherein the refrigerant composition has at or greater than 75% of a capacity of R404A.
Aspect 85. The refrigerant composition of Aspect 70, wherein the second refrigerant is the R134a refrigerant.
Aspect 86. The refrigerant composition of Aspect 85, wherein the refrigerant composition has a burning velocity of at or less than 15 cm/s.
Aspect 87. The refrigerant composition of Aspect 85, wherein the refrigerant composition has a burning velocity of at or less than 10 cm/s.
Aspect 88. A method of making a refrigerant composition for an HVACR system, the method including:
   mixing an amount of R1132(E) refrigerant, an amount of a second refrigerant, and an amount of a third refrigerant, the second refrigerant being one of R1234ze(E) refrigerant and R134a refrigerant, and the third refrigerant being one of R32 refrigerant, R1132a refrigerant, R1123 refrigerant, and CO₂.
Aspect 89. A method of retrofitting an HVACR system having an existing refrigerant composition, comprising:
   replacing at least a portion of the existing refrigerant composition to obtain a retrofit refrigerant composition, which includes adding one or more refrigerants to the HVACR system, wherein
   the retrofit refrigerant composition comprises R1132(E) refrigerant, a second refrigerant that is one of R1234yf refrigerant, R1234ze(E) refrigerant, and R134a refrigerant, and a third refrigerant that is one of one of R32 refrigerant, R1132a refrigerant, R1123 refrigerant, and CO₂.

The terminology used herein is intended to describe particular embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. It should be appreciated that a range for a component in a refrigerant composition may be formed by combining an upper limit, a lower limit, and/or an amount described herein for said component. This Specification and the embodiments described are exemplary only, with the true scope and spirit of the disclosure being indicated by the claims that follow.

## Claims

1. A refrigerant composition for an HVACR system comprising:
R1132(E) refrigerant;
a second refrigerant being one of R1234yf refrigerant, R1234ze(E) refrigerant, and R134a refrigerant; and
a third refrigerant being one of R32 refrigerant, R1132a refrigerant, R1123 refrigerant, and CO₂, wherein
the refrigerant composition has a GWP of at or about or less than 750.

2. The refrigerant composition of claim 1, wherein the second refrigerant is one of the R1234yf refrigerant and the R1234ze(E) refrigerant, and the GWP of the refrigerant composition is at or about or less than 300.

3. The refrigerant composition of claim 1 or claim 2, wherein the refrigerant composition has a burning velocity of at or less than 15 cm/s.

4. The refrigerant composition of any one of claims 1 to 3, wherein the second refrigerant is the R1234yf refrigerant, the GWP of the refrigerant composition is at or about or less than 300.

5. The refrigerant composition of any one of claims 1 to 4, wherein the third refrigerant is the R32 refrigerant that is or about or less than 44 wt% of the refrigerant composition, the R1234yf refrigerant is at or about or greater than 20 wt% of the refrigerant composition, and the R1132(E) is at or about or less than 43 wt% of the refrigerant composition, and the refrigerant composition optionally has a burning velocity of at or less than 15 cm/s.

6. The refrigerant composition of any one of claims 1 to 5, wherein the R32 refrigerant is at or about or less than 20 wt% of the refrigerant composition, and the GWP of the refrigerant composition is at or about or less than 150.

7. The refrigerant composition of claims 1 to 6, wherein the R1234yf refrigerant is at or about or less than 70 wt% of the refrigerant composition, the R1132(E) refrigerant is at or about or greater than 8 wt% of the refrigerant composition, and the refrigerant composition optionally has a capacity equal to or greater than 90% of a capacity of R454A.

8. The refrigerant composition of any one of claims 1 to 7, wherein the third refrigerant is one of the R1132a refrigerant, the R1123 refrigerant, and the CO₂, and the refrigerant composition has a burning velocity of equal to or less than 15 cm/s.

9. The refrigerant composition of any one of claims 1 to 8, wherein the second refrigerant is the R1234ze(E) refrigerant, the GWP of the refrigerant composition is optionally at or about or less than 300, and the refrigerant composition optionally has a burning velocity equal to or less than 15 cm/s.

10. The refrigerant composition of any one of claims 1 to 9, wherein the GWP of the refrigerant composition is at or about or less than 150.

11. The refrigerant composition of any one of claims 1 to 10, wherein
the burning velocity of the refrigerant composition is equal to or less than 10 cm/s, and
optionally, the refrigerant composition has at or greater than 50% of a capacity of R410A.

12. The refrigerant composition of any one of claims 1 to 11, wherein the second refrigerant is the R134a refrigerant.

13. The refrigerant composition of any one of claims 1 to 12, wherein the refrigerant composition has a burning velocity of at or less than 10 cm/s.

14. A method of making a refrigerant composition for an HVACR system, the method including:
mixing an amount of R1132(E) refrigerant, an amount of a second refrigerant, and an amount of a third refrigerant, the second refrigerant being one of R1234ze(E) refrigerant and R134a refrigerant, and the third refrigerant being one of R32 refrigerant, R1132a refrigerant, R1123 refrigerant, and CO₂, wherein
the refrigerant composition is the refrigerant composition of any one of claims 1-13.

15. A method of retrofitting an HVACR system having an existing refrigerant composition, comprising:
replacing at least a portion of the existing refrigerant composition to obtain a retrofit refrigerant composition, which includes adding one or more refrigerants to the HVACR system, wherein
the retrofit refrigerant composition comprises R1132(E) refrigerant, a second refrigerant that is one of R1234yf refrigerant, R1234ze(E) refrigerant, and R134a refrigerant, and a third refrigerant that is one of R32 refrigerant, R1132a refrigerant, R1123 refrigerant, and CO₂, and
the retrofit refrigerant composition is the refrigerant composition of any one of claims 1-13.
